(19) Europäisches Patentamt
European Patent Office
Office européen des brevets

(11) EP 1 778 770 B1

(12) # FASCICULE DE BREVET EUROPEEN

(45) Date de publication et mention de la délivrance du brevet:
**02.11.2011 Bulletin 2011/44**

(21) Numéro de dépôt: **05775678.5**

(22) Date de dépôt: **02.06.2005**

(51) Int Cl.:
***C08F 292/00*** (2006.01) ***C08J 7/16*** (2006.01)
***C08F 2/50*** (2006.01) ***C08F 4/40*** (2006.01)

(86) Numéro de dépôt international:
**PCT/FR2005/001355**

(87) Numéro de publication internationale:
**WO 2006/000692 (05.01.2006 Gazette 2006/01)**

(54) **MATÉRIAU DE SURFACE MODIFIÉE, SON PROCÉDÉ DE PRÉPARATION ET SES UTILISATIONS**

MATERIAL MIT MODIFIZIERTER OBERFLÄCHE, HERSTELLUNGSVERFAHREN DAFÜR UND VERWENDUNG DAVON

MODIFIED SURFACE MATERIAL, METHOD FOR PREPARING SAME AND USES THEREOF

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.06.2004 FR 0405937**

(43) Date de publication de la demande:
**02.05.2007 Bulletin 2007/18**

(73) Titulaires:
- **Universite Paris 7-Denis Diderot**
  **75251 Paris Cedex 05 (FR)**
- **Alchimedics**
  **91300 Massy (FR)**

(72) Inventeurs:
- **CHEHIMI, Mohamed, Mehdi**
  **F-75020 Paris (FR)**
- **PINSON, Jean**
  **F-94120 Fontenay-sous-Bois (FR)**
- **CHARLEUX, Bernadette**
  **F-94300 Vincennes (FR)**
- **BUREAU, Christophe**
  **F-92150 Suresnes (FR)**
- **TRONCHE, Christopher**
  **F-78000 Versailles (FR)**
- **MATRAB, Tarik**
  **F-95014 Cergy (FR)**
- **PERRUCHOT, Christian**
  **F-78800 Houilles (FR)**
- **CABET-DELIRY, Eva**
  **F-75020 Paris (FR)**
- **SAVE, Maud**
  **F-92130 Issy-les-Moulineaux (FR)**

(74) Mandataire: **Grosset-Fournier, Chantal Catherine et al**
**Grosset-Fournier & Demachy**
**54, rue Saint-Lazare**
**75009 Paris (FR)**

(56) Documents cités:
**EP-A- 1 431 821** **EP-A- 1 459 810**
**FR-A- 2 672 307** **US-A1- 2004 248 428**
**US-B1- 6 435 240**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 778 770 B1

## Description

La présente invention a pour objet un matériau, notamment métallique, dont la surface est modifiée, ainsi que son procédé de préparation. La présente invention concerne également les utilisations dudit matériau, notamment pour la préparation d'implants, de stents ou de prothèses.

Le recouvrement de surfaces métalliques par des couches organiques constitue un ensemble de procédés industriels importants (Plankaert, 1994 ; Biethan et al., 1991 ; Hochberg, 1979). Ces procédés impliquent le dépôt d'un polymère sur une feuille de métal, soit à partir d'un liquide, soit à partir d'une feuille de polymère solide ou bien encore par cataphorèse. Dans ces procédés, seules des liaisons faibles sont formées entre le métal et la couche organique. D'autres procédés ont été décrits, ils font aussi intervenir des liaisons faibles par exemple lors du dépôt de polyphénols sur du Pt (McCarley, 1990), dans le dépôt électrochimique de polymères conducteurs en particulier sur du fer (Lu et al., 1988 ; Cheung et al., 1988 ; Troch-Nagels et al., 1992 ; Schirmeisen et al., 1989 ; Beck et al., 1994 ; Otero et al., 1992 ; Ferreira et al., 1990 ; Ferreira et al., 1996 ; Krstajič et al., 1997 ; Su et al., 1997 ; Fraoua et al., 1999).

Il existe deux types de méthodes pour créer des liaisons plus fortes entre le métal et la couche organique : dans le premier type une liaison se forme entre la couche organique et un oxyde sur la surface du métal (Biethan, 1991 ; Hochberg, 1979 ; Boenig, 1984 ; d'Agostino, 2000 ; Vautrin-Ul et al., 2000), et dans le deuxième type, des liaisons sont formées entre le métal lui-même et la couche organique.

Il existe déjà plusieurs méthodes électrochimiques permettant d'accrocher des polymères sur des surfaces métalliques par des liaisons covalentes. Des couches polymères peuvent être accrochées sur du platine par oxydation de la N-vinylpyrrolidone (Doneux et al., 1997 ; Calberg et al., 1998). Par ailleurs, l'oxydation électrochimique d'amines conduit au greffage de motifs -NHR sur le platine. En utilisant des ω-diamines telles que l'éthylènediamine, il est possible d'accrocher de la polyéthylèneimine sur Au, Pt ou Al (Herlem et al., 1997 ; Herlem et al., 2000 ; Fahys et al., 2002 ; Herlem et al., 2003 ; Lakard et al., 2002). Il faut cependant noter que les méthodes utilisant l'oxydation électrochimique de substrats organiques ne sont pas applicables aux métaux industriels qui sont en général très facilement oxydables. Des méthodes utilisant la réduction électrochimique sont donc particulièrement souhaitables. Une de ces méthodes (Lécayon et al., 1982 ; Deniau et al., 1992 ; Viel et al., 1993 ; Bureau et al., 1994 ; Tanguy et al., 1993 ; Tanguy et al., 1994 ; Tanguy et al., 1996 ; Deniau et al., 1997 ; Bureau et al., 1997 ; Deniau et al., 1998 ; Charlier et al., 1999 ; Viel et al., 1999 ; Jérome et al., 2001 ; Baute et al., 1999 ; Mertens et al., 1998 ; Calberg et al., 1997) consiste à réduire un monomère acrylique activé sur une surface métallique (par exemple en nickel ou en fer). Le radical-anion formé dans des conditions anhydres est responsable de la réaction avec le métal et de la poursuite de la polymérisation. Une fine couche de polymère (2 à 10 nm) est attachée de manière covalente sur la surface. En même temps, une couche plus épaisse de polymère n'est que déposée, elle peut être éliminée par rinçage.

Plusieurs méthodes de greffage de polymères préformés sur une surface fonctionnalisée ("grafting onto") ont déjà été décrites permettant l'accrochage de polymères sur une sous-couche polyaryle obtenue par réduction électrochimique de sels de diazonium. La première méthode consiste à greffer sur le métal un motif benzophénone, celui-ci réagit avec le polystyrène sous irradiation photochimique ; la seconde méthode consiste à greffer un motif acide benzoïque, celui-ci peut réagir avec des ions magnésium et les groupes carboxyliques libres d'un polyester déposé mécaniquement sur la surface (Adenier et al., 2002). Une méthode proche des deux premières a été aussi décrite (Lou et al., 2002), consistant à greffer des polyesters comportant des groupes acrylate pendants par électrochimie. Le poly-ε-caprolactone ainsi greffé étant miscible avec le poly(chlorure de vinyle), les couches de PVC ainsi obtenues sont fortement adhérentes.

Plusieurs méthodes de type "grafting from" ont été développées qui permettent de faire croître des polymères à partir d'une surface fonctionnalisée. Sur une surface de fer, il est possible d'effectuer le greffage électrochimique d'un polyacrylate de faible masse molaire dont le motif acrylate contient une fonction chimique autorisant la polymérisation ultérieure d'un autre monomère. Par exemple, l'acrylate de 2-chloropropionate d'éthyle permet d'amorcer la polymérisation du styrène par Polymérisation Radicalaire par Transfert d'Atome (ATRP)(Claes et al., 2003), l'acrylate de norbornénylméthylène offre la possibilité de polymériser le norbornène par polymérisation par ouverture de cycles par métathèse (ROMP)(Detrembleur et al., 2001) et le 2-phényl-2-(2,2,6,6-tétraméthyl-pipéridin-1-yloxy)-éthylacrylate (PTEA) a permis de polymériser le styrène, grâce à la présence de l'alcoxyamine (amorceur de polymérisation) selon le procédé médié par le nitroxyde (NMP)(Voccia et al., 2003).

La présente invention a pour but de fournir une nouvelle méthode de greffage "grafting from" permettant de greffer des polymères sur une surface comportant des zones conductrices ou semi-conductrices, notamment métalliques, par greffage préalable d'une sous-couché obtenue par réduction d'un sel de diazonium.

La présente invention a notamment pour but de fournir des matériaux comportant des zones conductrices ou semi-conductrices, recouvertes de couche de polymères d'épaisseur suffisante et/ou de structure appropriée, pour résister à la corrosion, par exemple dans les milieux biologiques, et à l'usure par exemple par friction.

L'un des buts de la présente invention est de fournir des matériaux, notamment biologiquement compatibles, comportant des zones conductrices ou semi-conductrices recouvertes d'un polymère permettant leur utilisation dans le

cadre de prothèses, de stents ou d'implants.

Un autre but de la présente invention est de fournir un procédé de modification de la surface d'une zone conductrice ou semi-conductrice d'un matériau permettant de greffer n'importe quel polymère sur ledit matériau.

Un autre but de la présente invention est de fournir un procédé de modification de la surface d'une zone conductrice ou semi-conductrice industriellement applicable et insensible à l'eau.

Un autre but de la présente invention est de fournir un procédé de modification de la surface d'une zone conductrice ou semi-conductrice, quelle que soit sa forme.

La présente invention concerne l'utilisation d'au moins un sel de diazonium portant une fonction amorceur de polymérisation, d'une part pour la formation d'une sous-couche obtenue par greffage d'un greffon dérivé dudit sel de diazonium et portant une fonction amorceur de polymérisation à la surface d'un matériau conducteur ou semi-conducteur et d'autre part pour la formation sur ladite sous-couche d'une couche polymérique obtenue par polymérisation *in situ* non anionique d'au moins un monomère, initiée à partir de ladite fonction amorceur de polymérisation.

La présente invention concerne l'utilisation telle que définie ci-dessus, caractérisée en ce que la couche polymérique est obtenue par polymérisation radicalaire ou par polymérisation par ouverture de cycle.

Parmi les procédés de polymérisation radicalaire, on peut citer : les procédés de polymérisation radicalaire par transfert d'atome (ATRP), de polymérisation par nitroxyde (NMP) et la photopolymérisation.

La présente invention concerne l'utilisation telle que définie ci-dessus, caractérisée en ce que la couche polymérique est obtenue par l'un des procédés de polymérisation suivants : polymérisation par ouverture de cycle (ROP), photopolymérisation, polymérisation par transfert d'atome et polymérisation par nitroxyde.

Le greffon dérivé dudit sel de diazonium et portant une fonction amorceur de polymérisation sera par la suite désigné greffon amorceur de polymérisation, et ce greffon correspond à une entité greffée sur la surface du matériau et donc liée à ladite surface.

L'expression "greffon amorceur de polymérisation" désigne un composé chimique susceptible de former la première espèce d'une réaction de polymérisation en chaîne.

Le greffon dérivé dudit sel de diazonium et portant une fonction amorceur de polymérisation, nommé également greffon amorceur de polymérisation est caractérisé en ce qu'il contient un squelette carboné et une fonction amorceur de polymérisation. Lors de la réaction de polymérisation radicalaire susmentionnée, notamment ATRP ou NMP, ledit greffon amorceur, portant une fonction amorceur de polymérisation, greffé sur la surface, subit une coupure réductrice qui conduit à laisser sur la surface du matériau le squelette carboné de l'amorceur, alors que la fonction amorceur de polymérisation se retrouve à l'extrémité de la chaîne du polymère formant la susdite couche polymérique.

L'expression "matériau conducteur ou semi-conducteur" désigne soit un matériau conducteur ne possédant pas de bande interdite soit un matériau semi-conducteur dont la bande interdite est de l'ordre de l'électron-volt.

L'expression "polymérisation *in situ"* désigne une réaction de polymérisation effectuée en présence de la surface conductrice ou semi-conductrice, soit non traitée soit modifiée par le procédé de l'invention (procédé "grafting from"). Cette réaction de polymérisation s'oppose au cas où la surface est greffée avec un polymère déjà formé ("grafting onto").

Les procédés de polymérisation préférés sont les procédés de polymérisation radicalaire par transfert d'atome (ATRP)(Claes et al., 2003), de polymérisation par nitroxyde (NMP)(Voccia et al., 2003), de polymérisation par ouverture de cycle (ROP)(Edmondson et al., 2004 ; Husseman et al., 1999), ainsi que les procédés de polymérisation par transfert de chaîne addition-fragmentation réversible (RAFT)(Edmondson et al., 2004 ; Baum et al., 2002) et de polymérisation par métathèse d'ouverture de cycle (ROMP)(Detrembleur et al., 2001).

La présente invention concerne également une zone conductrice ou semi-conductrice d'intérêt d'un matériau, la surface de ladite zone étant modifiée, et comprenant les couches suivantes :

- une sous-couche constituée de greffons amorceurs dérivés d'un sel de diazonium et liés à ladite surface, la totalité des liaisons intervenant entre ladite sous-couche et la surface de ladite zone conductrice ou semi-conductrice d'intérêt étant des liaisons covalentes,
  ladite sous-couche étant caractérisée en ce que :
  - ■ elle présente une épaisseur d'environ 1 nm à environ 1 $\mu$m, et de préférence d'environ 3 nm à environ 100 nm,
  - ■ les greffons directement liés à la surface de ladite zone conductrice ou semi-conductrice d'intérêt le sont notamment par une liaison atome du greffon-atome de la zone, notamment par une liaison covalente carbone du greffon-atomes de ladite zone,
- une couche polymérique située sur la susdite sous-couche, constituée d'un polymère résultant de la polymérisation non anionique *in situ* d'au moins un monomère en présence de l'amorceur tel que défini ci-dessus,

ladite couche polymérique présentant une épaisseur d'environ 0,1 $\mu$m à environ 100 $\mu$m,

la couche polymérique couvrant d'environ 80% à environ 100% de la surface de ladite zone conductrice ou semi-conductrice d'intérêt, notamment d'environ 95% à environ 100% de ladite zone.

La présente invention concerne également une zone conductrice ou semi-conductrice d'intérêt d'un matériau, la surface de ladite zone étant modifiée, caractérisée en ce que la couche polymérique telle que définie ci-dessus est constituée d'un polymère résultant d'une polymérisation radicalaire ou d'une polymérisation par ouverture de cycle.

Parmi les procédés de polymérisation radicalaire, on peut citer : les procédés de polymérisation radicalaire par transfert d'atome (ATRP), de polymérisation par nitroxyde (NMP) et la photopolymérisation.

La présente invention concerne également une zone conductrice ou semi-conductrice d'intérêt d'un matériau, la surface de ladite zone étant modifiée, telle que définie ci-dessus, caractérisée en ce que la couche polymérique telle que définie ci-dessus est constituée d'un polymère résultant d'une polymérisation non anionique choisie parmi les procédés de polymérisation suivants : polymérisation par ouverture de cycle (ROP), photopolymérisation, polymérisation par transfert d'atome et polymérisation par nitroxyde.

L'expression "zone conductrice ou semi-conductrice d'intérêt d'un matériau" désigne les parties d'un matériau composées de conducteur ou de semi-conducteur auxquelles on souhaite appliquer un traitement tel que ceux décrits dans la présente invention.

Sur un matériau composite comportant des zones conductrices ou semi-conductrices, seulement certaines de ces zones peuvent être fonctionnalisées et constituer ainsi les zones d'intérêt. Ainsi, par voie électrochimique, il s'agit des zones connectées électriquement sur lesquelles interviendra l'électrogreffage, et, par voie chimique, il s'agira des zones mises en contact des solutions, les autres zones étant éventuellement masquées si nécessaire.

L'expression "greffons amorceurs dérivés d'un sel de diazonium" désigne de façon avantageuse soit un groupe aromatique soit une chaîne de type polyaryle formant d'une part une liaison avec la surface et possédant d'autre part une fonction chimique susceptible d'amorcer la polymérisation.

Les amorceurs de polymérisation utilisés dans le cadre de la présente invention peuvent être des molécules portant par exemple un ou plusieurs atomes d'halogène, ledit atome d'halogène correspondant à la fonction amorceur de polymérisation.

Ainsi, comme mentionné précédemment, lors de la réaction de polymérisation susmentionnée, ledit halogène se retrouve à l'extrémité de la chaîne du polymère formant la susdite couche polymérique.

La présente invention implique donc un sel de diazonium portant une fonction permettant d'amorcer la polymérisation. Selon un mode de réalisation particulier de la présente invention, la sous-couche susmentionnée est formée à partir de greffages successifs de plusieurs sels de diazonium, par exemple de la forme AAA-BBB, où A est un groupe aryle provenant d'un sel de diazonium $AN_2^+$ et B est un groupe aryle provenant d'un sel de diazonium $BN_2^+$.

L'expression "liaison atome du greffon-atome de la zone" désigne la liaison chimique quelque soit son type qui relie un atome du greffon à un atome de la zone et qui assure donc que le greffon est fortement lié à la surface.

L'expression "liaison covalente carbone du greffon-atome de la zone" désigne une liaison particulière telle qu'une liaison obtenue par la mise en commun de deux électrons entre un atome du greffon et un atome de la zone.

Une sous-couche particulièrement avantageuse selon l'invention est une sous-couche de type polyaryle.

Selon un mode de réalisation avantageux, la sous-couche telle que définie ci-dessus de la zone conductrice ou semi-conductrice de l'invention est caractérisée en ce que la superficie du greffage des greffons sur la surface de ladite zone est à raison d'au moins 90%, notamment d'au moins 99% par rapport à la surface de ladite zone conductrice ou semi-conductrice d'intérêt, la surface totale des défauts étant inférieure à 10%, notamment inférieure à 5%, de l'aire des zones conductrices ou semi-conductrices.

Par "défaut", on désigne des parties de la sous-couche qui n'auraient pas été modifiées par le traitement selon l'invention et donc où le matériau apparaîtrait sans être modifié.

Ceci peut être observé par exemple par microscopie à champ proche, et notamment par microscopie à force atomique (AFM)(Adenier et al., 2002 ; Bernard et al., 2003).

La sous-couche peut également être caractérisée par sa rugosité.

La sous-couche est telle que les atomes qui sont liés à la zone conductrice ou semi-conductrice le sont de façon forte et résistent à des rinçages prolongés et répétés dans un bain d'ultrasons dans des solvants différents.

Selon un mode de réalisation avantageux, la sous-couche telle que définie ci-dessus de la zone conductrice ou semi-conductrice de l'invention est compacte, comme on peut l'observer à l'échelle du $\mu$m sur des images AFM (Adenier et al., 2002 ; Bernard et al., 2003).

Pour fixer les idées sur la compacité, la sous-couche telle que définie ci-dessus de la zone conductrice ou semi-conductrice de l'invention est caractérisée en ce que la concentration des greffons directement liés à la surface de ladite zone est au plus d'environ $20 \times 10^{-10}$ mole de greffon par $cm^2$, ce qui correspond à la concentration surfacique maximale accessible avec des groupes, notamment aryles, perpendiculaires à la surface, et de préférence d'environ $1 \times 10^{-10}$ à $18 \times 10^{-10}$ mole de greffon par $cm^2$ de surface de ladite zone.

Ces concentrations surfaciques peuvent être mesurées en formant une monocouche à la surface de la zone d'intérêt, en s'assurant que la sous-couche formée est une monocouche par AFM et en effectuant un voltammogramme

des greffons de la monocouche, puis en intégrant ce voltammogramme (Allongue et al., 1997).

Selon un mode de réalisation avantageux, la couche polymérique telle que définie ci-dessus est caractérisée en ce qu'elle est notamment exempte de monomère résiduel, de polymère non greffé et de solvant. Ainsi, après l'étape de polymérisation, les plaques de matériau sont soigneusement rincées aux ultrasons dans du dichlorométhane. On peut alors vérifier que le cycle de rinçage est suffisant pour éliminer les résidus de polymère adsorbé à la surface du matériau. Une plaque de matériau mise en contact avec une solution de PMMA-toluène est chauffée pendant 4 heures à 90°C en l'absence d'amorceur et de chlorure de cuivre. Ensuite, après 4 lavages de 5 minutes dans du dichlorométhane aux ultrasons, l'analyse de la plaque par IRRAS ne révèle aucun signal de polymère. A ce moment, il reste du PMMA (polyméthylméthacrylate) dans le solvant de rinçage (analyse IR) mais le polymère a complètement disparu du dichlorométhane après un cinquième lavage. Comme ce cycle de rinçage a été appliqué aux plaques immergées dans les solutions de polymérisation contenant CuCl et l'amorceur, les signaux caractéristiques du PMMA et PAnBu en IRRAS et XPS peuvent être attribués à du polymère greffé et non adsorbé. Ce test permet donc de vérifier que le polymère qui n'est pas greffé est éliminé de la surface du matériau.

Par "monomère résiduel", on désigne le monomère intervenant dans la polymérisation *in situ,* et par "polymère non greffé" on désigne tout polymère formé à partir du monomère qui n'est pas lié à la sous-couche.

Par "solvant", on désigne notamment le solvant de polymérisation *in situ.* La couche polymérique possède avantageusement la propriété de rester sur la sous-couche même lorsqu'elle est mise en contact avec un solvant dans lequel la polymérisation *in situ* a été effectuée ou dans lequel le polymère est soluble.

Un paramètre de caractérisation de la couche polymérique est la rugosité.

La rugosité moyenne représente la moyenne arithmétique des déviations par rapport au plan moyen

$$R = \frac{\sum_{j=1}^{N} \left| Z_i - Z_{cp} \right|}{N}$$

$Z_{cp}$ est la valeur de Z pour le plan moyen, $Z_i$ la valeur courante de Z, et N nombre de points dans un domaine donné. R doit donc être égal à zéro pour une surface parfaitement plane.

La présente invention concerne également une zone conductrice ou semi-conductrice d'intérêt d'un matériau telle que définie ci-dessus, caractérisée en ce que la sous-couche présente un taux de pureté d'environ au moins 80%, et notamment d'environ 90% à environ 100%, comme cela est vérifié par des analyses par XPS ou infrarouge, et est notamment exempte de solvant, de sel de diazonium et de ses dérivés.

Par "solvant", on désigne notamment celui qui a été utilisé pour effectuer la formation de la sous-couche. Ceci peut être vérifié par un test infrarouge ou un test XPS.

Par "dérivés de sel de diazonium", on désigne notamment $ArN_2^+$, ArOH ou ArH.

L'absence du signal du solvant peut être vérifiée par infrarouge, par exemple selon la nature du solvant, par l'absence de la bande nitrile de l'acétonitrile à 2254 $cm^{-1}$ ou de la bande carbonyle du diméthylformamide à 1675 $cm^{-1}$.

L'absence d'électrolyte peut être vérifiée par l'absence de chlore (dans le cas où l'électrolyte est un perchlorate) qui apparaît vers 1095 $cm^{-1}$ et vers 208 eV (C12p) ou par l'absence de fluor (dans le cas où l'électrolyte est un tétrafluoroborate) qui apparaît vers 1050 et 1075 $cm^{-1}$ et vers 687 eV (F1s), respectivement par des analyses IR ($cm^{-1}$) et XPS (eV). L'absence de sel de diazonium résiduel ($ArN_2^+$) peut être vérifiée par l'absence de la bande caractéristique des sels de diazonium vers 2300 $cm^{-1}$ en IR.

Concernant l'absence du produit d'hydrolyse du diazonium (ArOH), le phénol correspondant peut être observé par l'absence en IR de la bande OH vers 3300-3500 $cm^{-1}$.

L'absence du produit de réduction du diazonium (ArH) peut être vérifiée dans les solvants de rinçage par chromatographie en phase gazeuse (CPV) ou en phase liquide (CLHP) par comparaison avec un échantillon authentique.

Par ailleurs, la sous-couche est exempte d'électrolytes susceptibles d'intervenir dans le procédé de greffage des greffons amorceurs dérivés d'un sel de diazonium, lesquels sont à l'origine portés notamment par des sels de diazonium. Il en est de même pour le contre-ion du sel de diazonium, par exemple de l'ion tétrafluoroborate. On peut vérifier l'absence d'électrolyte comme décrit ci-dessus.

L'un des intérêts des zones conductrices ou semi-conductrices modifiées de l'invention est qu'il ne peut y avoir de monomère dans la sous-couche, qui résulterait de l'utilisation, comme amorceur de polymérisation, d'un monomère portant, d'une part, une fonction acrylate et, d'autre part, une fonction susceptible d'initier la polymérisation de composés vinyliques. En particulier, dans la sous-couche des zones conductrices ou semi-conductrices de l'invention, il n'y a pas de monomère vinylique parce que la sous-couche n'est pas faite à base de polymère vinylique.

Une zone conductrice ou semi-conductrice d'intérêt d'un matériau avantageuse, modifiée par le procédé selon l'invention, est caractérisée en ce que les liaisons intervenant dans les greffons de la sous-couche et formant une suite

continue de liaisons covalentes de la surface dudit matériau jusqu'à la couche polymérique sont des liaisons non hydrolysables.

Les liaisons intervenant entre la surface et les greffons de la sous-couche sont non hydrolysables.

L'expression "liaisons intervenant dans les greffons de la sous-couche" désigne les liaisons chimiques comprises entre l'atome de la surface où est accroché le greffon et le premier atome de la couche polymérique.

L'expression "liaisons non hydrolysables" désigne des liaisons ne pouvant pas être coupées par contact du matériau avec une solution aqueuse ou partiellement aqueuse ou plus généralement par réaction avec un solvant à propriétés acides ou basiques, et notamment des liaisons non hydrolysables de pH 0 à pH 14, de préférence de pH 1 à pH 13. Cependant, il ne faut pas exclure la possibilité de la présence de groupes pendants (latéraux) hydrolysables, tels que les esters du PMMA.

Selon un mode de réalisation avantageux, la présente invention concerne une zone conductrice ou semi-conductrice d'intérêt d'un matériau, caractérisée en ce que les liaisons intervenant dans les greffons de la sous-couche formant une suite continue de liaisons covalentes de la surface dudit matériau jusqu'à l'extrémité de la couche polymérique sont des liaisons non hydrolysables.

L'expression "liaisons covalentes de la surface dudit matériau jusqu'à l'extrémité de la couche polymérique" désigne les liaisons chimiques covalentes comprises entre l'atome de la surface où est accroché le greffon et le dernier atome de la couche polymérique.

L'expression "suite continue de liaisons covalentes" correspond à la situation selon laquelle, en suivant le chemin le plus court entre l'atome de la surface et le dernier atome de la couche polymérique, toutes les liaisons reliant les atomes situés sur ce chemin sont covalentes.

Une zone conductrice ou semi-conductrice d'intérêt d'un matériau préférée, telle que modifiée selon le procédé de l'invention, comprend une chaîne de polymère de la couche polymérique par liaison atome du greffon-atome de la zone conductrice ou semi-conductrice d'intérêt, notamment par liaison covalente carbone du greffon-atomes de la zone.

Une zone conductrice ou semi-conductrice d'intérêt d'un matériau préférée, telle que modifiée selon le procédé de l'invention, est caractérisée en ce que les chaînes de polymères, obtenus notamment par ATRP, ROP ou NMP, présentent une masse moléculaire sensiblement identique les unes par rapport aux autres et en ce que lesdites chaînes sont liées de façon sensiblement perpendiculaire à la surface dudit matériau, formant ainsi des brosses denses.

L'expression "chaînes liées de façon sensiblement perpendiculaire à la surface dudit matériau" désigne des chaînes polymères dont l'orientation moyenne est proche de la verticale locale de la surface par opposition à des chaînes dont l'orientation serait proche de la surface elle-même.

L'expression "brosses denses" désigne l'ensemble des chaînes polymériques liées à la surface de telle sorte que leur orientation est sensiblement perpendiculaire à la surface, leurs longueurs sensiblement égales et la distance entre ces chaînes nettement inférieures à leur longueur (Edmondson et al., 2004).

Plus particulièrement, l'épaisseur totale de la couche polymérique croît en épaisseur, tout en gardant une rugosité constante, ce qui démontre bien que toutes les chaînes de polymères sont sensiblement de la même longueur.

Selon un mode de réalisation avantageux, la zone conductrice ou semi-conductrice d'intérêt d'un matériau telle que modifiée selon le procédé de l'invention, est caractérisée en ce que la sous-couche présente une épaisseur sensiblement uniforme et en ce que les greffons constituant ladite sous-couche sont liés de façon sensiblement perpendiculaire à la surface dudit matériau.

L'expression "couche d'épaisseur sensiblement uniforme" désigne une couche dont l'épaisseur est du même ordre de grandeur sur toute la surface de la zone.

La présente invention concerne également une zone conductrice ou semi-conductrice d'intérêt d'un matériau telle que définie ci-dessus, modifiée selon le procédé de l'invention, caractérisée en ce que les greffons sont des composés aromatiques, notamment des groupes aryles, dans lesquels le groupe aromatique est un reste aromatique en $C_6$-$C_{20}$, substitué par un ou plusieurs substituants fonctionnels, notamment un atome d'halogène, tel qu'un atome de brome, ou un reste hétéroaromatique de 4 à 20 atomes, substitué par un ou plusieurs substituants fonctionnels, comportant un ou plusieurs hétéaroatomes choisis parmi l'oxygène, l'azote, le soufre ou le phosphore.

Selon un mode de réalisation avantageux, il n'y a pas de liaison de type aliphatique entre les atomes de la zone et l'atome du greffon directement lié à la zone. En d'autres termes, de façon avantageuse, les atomes du greffon directement liés aux atomes de la zone sont impliqués, dans le greffon, dans des liaisons aromatiques.

La présente invention concerne également une zone conductrice ou semi-conductrice d'intérêt d'un matériau telle que définie ci-dessus, modifiée selon le procédé de l'invention, dans laquelle le groupe aromatique comporte un ou plusieurs substituants choisis dans le groupe constitué par :

- les radicaux aliphatiques, linéaires ou ramifiés de 1 à 20 atomes de carbone, comportant éventuellement une ou plusieurs double(s) ou triple(s) liaison(s), éventuellement substitués par des radicaux carboxyles, $NO_2$, OH, amino protégé disubstitué, amino monosubstitué protégé, cyano, diazonium, alcoxy de 1 à 20 atomes de carbone, alcoxycarbonyle de 1 à 20 atomes de carbones, alkylcarbonyloxy de 1 à 20 atomes de carbone, vinyle éventuellement

fluoré ou allyle, les atomes d'halogène, des groupes ammonium comprenant de 1 à 20 atomes de carbone, des anhydrides d'acide comprenant de 1 à 20 atomes de carbone, des dérivés de l'urée ou de la thiourée comprenant de 1 à 20 atomes de carbone, des fonctions oximes et des acides phosphoniques,

- les radicaux aryles éventuellement substitués par des radicaux carboxyles, $NO_2$, OH, amino protégé disubstitué, amino monosubstitué protégé, cyano, diazonium, alcoxy de 1 à 20 atomes de carbone, alcoxycarbonyle de 1 à 20 atomes de carbone, alkylcarbonyloxy de 1 à 20 atomes de carbone, vinyle éventuellement fluoré ou allyle, les atomes d'halogène, des groupes ammonium comprenant de 1 à 20 atomes de carbone, des anhydrides d'acide comprenant de 1 à 20 atomes de carbone, des dérivés de l'urée ou de la thiourée comprenant de 1 à 20 atomes de carbone, des fonctions oximes et des acides phosphoniques,
- les radicaux carboxyles, $NO_2$, OH, amino protégé disubstitué, amino monosubstitué protégé, cyano, diazonium, alcoxy de 1 à 20 atomes de carbone, alcoxycarbonyle de 1 à 20 atomes de carbone, alkylcarbonyloxy de 1 à 20 atomes de carbone, vinyle éventuellement fluoré, les atomes d'halogène, des groupes ammonium comprenant de 1 à 20 atomes de carbone, des anhydrides d'acide comprenant de 1 à 20 atomes de carbone, des dérivés de l'urée ou de la thiourée comprenant de 1 à 20 atomes de carbone, des fonctions oximes et des acides phosphoniques.

Une zone conductrice ou semi-conductrice d'intérêt d'un matériau avantageuse telle que modifiée selon l'invention est caractérisée en ce que la sous-couche se présente sous la forme de greffons composés chacun d'un seul groupe aryle, ce qui correspond à une monocouche.

L'expression "monocouche de greffons" désigne une sous-couche dont les greffons ne comportent qu'un groupe aryle. La formation d'une telle monocouche peut être vérifiée en mesurant son épaisseur par AFM (Anariba et al., 2003).

Il est intéressant d'obtenir une monocouche dans les applications où on cherche à fabriquer les couches les plus fines possibles, par exemple en microélectronique et dans le cadre plus général des nanotechnologies.

Selon un mode de réalisation avantageux de l'invention, la zone conductrice ou semi-conductrice d'intérêt d'un matériau, telle que modifiée selon le procédé de l'invention, est caractérisée en ce que les monomères à partir desquels la couche polymérique est obtenue sont choisis parmi les composés comprenant au moins une double liaison terminale, par exemple, les composés vinyliques (acryliques, méthacryliques, styréniques) et notamment

le styrène, éventuellement substitué, les acrylates d'alkyle, les acrylates d'alkyle substitué, le méthacrylate d'alkyle, le méthacrylate d'alkyle substitué, l'acrylonitrile, le méthacrylonitrile, l'acrylamide, le méthacrylamide, le N-alkylacrylamide, le N-alkylméthacrylamide, le N-dialkylacrylamide, le N-dialkylmethacrylamide, l'isoprène, le butadiène, l'éthylène, l'acétate de vinyle et ses dérivés, les éthers de vinyle, la N-vinylpyrrolidone, la 4-vinylpyridine, la 3-vinylpyridine, la 2-vinylpyridine,

et notamment le méthacrylate de méthyle, le méthacrylate d'éthyle, le méthacrylate de propyle et ses isomères, le méthacrylate de butyle et ses isomères, le 2-éthylhexyl méthacrylate, le méthacrylate d'isobornyle, l'acide méthacrylique, le méthacrylate de benzyle, le méthacrylate de phényle, le méthacrylonitrile, le méthylstyrène, l'acrylate de méthyle, l'acrylate d'éthyle, l'acrylate de propyle et ses isomères, l'acrylate de butyle et ses isomères, le 2-éthylhexyl acrylate, l'acrylate d'isobornyle, l'acide acrylique, l'acrylate de benzyle, l'acrylate de phényle, le méthacrylate de glycidyle, le 2-hydroxyéthyl méthacrylate, le méthacrylate d'hydroxypropyle et ses isomères, le méthacrylate d'hydroxybutyle et ses isomères, le méthacrylate de N-diméthylaminoéthyle, le 2-(diéthylamino)éthylméthacrylate, le méthacrylate de triéthylèneglycol, l'anhydride itaconique, l'acide itaconique, le benzylméthacrylate, le 2-(diméthylamino)éthylméthacrylate, le 2-(diméthylamino) éthylacrylate, l'acrylate de glycidyle, le 2-hydroxyéthyl acrylate, les isomères hydroxypropyliques des acrylates, l'hydroxybutyl acrylate et ses isomères, l'acrylate de N-diéthylaminoéthyl, l'acrylate de triéthylèneglycol, le N-méthylacrylamide, le N,N-diméthylacrylamide, le N-tert-butylméthacrylamide, le N-n-butylméthacrylamide, le N-méthylolméthacrylamide, la N-isopropylacrylamide, le N-éthylolméthacrylamide, le N-tert-butylacrylamide, le N-n-butylacrylamide, le N-méthylolacrylamide, le N-éthylolacrylamide, l'acide vinylbenzoïque et ses isomères, le diéthylaminostyrène et ses isomères, l'acide méthylvinylbenzoïque et ses isomères, le diéthylamino méthylstyrène et ses isomères, l'acide p-vinylbenzoïque et son sel de sodium, le méthacrylate de triméthoxysilylpropyle, le méthacrylate de triéthoxysilypropyle, le méthacrylate de diisopropoxyméthylsilylpropyle, le méthacrylate de diméthoxysilylpropyle, le méthacrylate de diéthoxysilylpropyle, le méthacrylate de dibutoxysilylpropyle, le méthacrylate de disopropoxysilylpropyle, l'acrylate de triméthoxysilylpropyle, l'acrylate de triéthoxysilylpropyle, l'acrylate de tributoxysilpropyle, l'acrylate de diméthoxyméthylsilypropyle, l'acrylate de diéthoxyméthylsilypropyle, l'acrylate de dibutoxyméthylsilypropyle, l'acrylate de diisopropoxyméthylsilypropyle, l'acrylate de diméthoxysilylpropyle, l'acrylate de diéthoxysilylpropyle, l'acrylate de dibutoxysilypropyle, l'acrylate de diisopropoxysilylpropyle, l'anhydride maléique, le N-phénylmaléimide, le N-butylmaléimide, le butadiène, l'isoprène, le chloroprène, le 2-(2-oxo-1-imidazolidinyl)éthyle, le 2-méthyl-2-propanoate, la N-vinyl pyrrolidone, la N-vinyl imidazole, la 1-[2-[[2-hydroxy-3-(2-propyl)propyl)]amino]éthyl]-2-imidazolidinone, l'acide crotonique, l'acide vinylsulfonique et ses dérivés, la 2-méthacryloyloxyéthylphosphorylcholine, les monomères de type phosphorylcholine, les méthacrylates d'oligo(éthylène glycol), le sel d'ammonium du sulfatoéthyl méthacrylate, le glycérométhacrylate, le 2-(N-morpholino)éthyl méthacrylate et le 2-(N-3-sulfopropyl-N,N-diméthyl ammonium)éthyl méthacrylate,

ainsi que les composés comportant au moins une fonction vinylique tels que les téléchéliques, les agents de réticulation.

Les monomères préférés sont les suivants :

- styrènes polymérisés par ATRP :

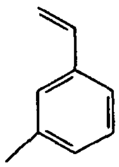
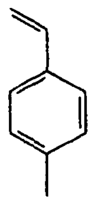
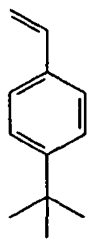
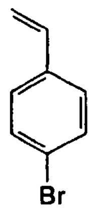
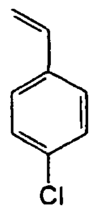
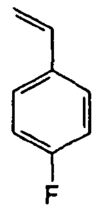
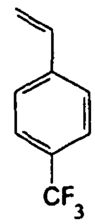
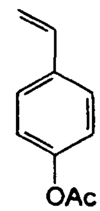

- méthacrylates polymérisés par ATRP :

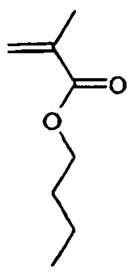
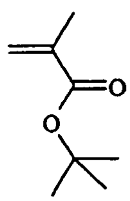
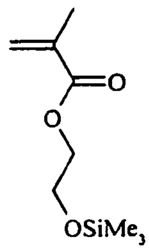
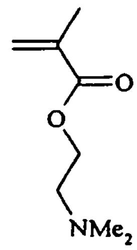
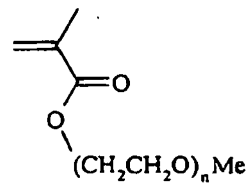
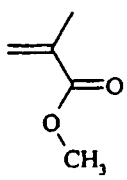
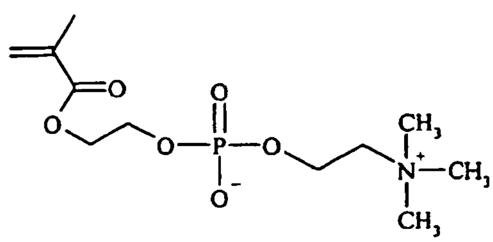

- acrylates polymérisés par ATRP :

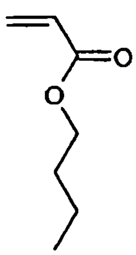
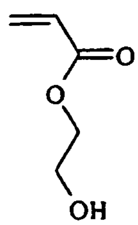
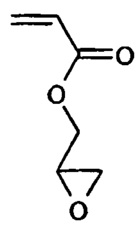
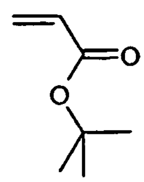
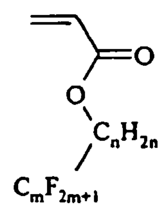
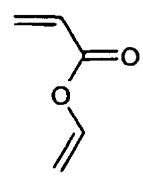

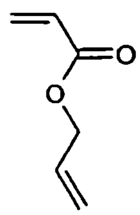 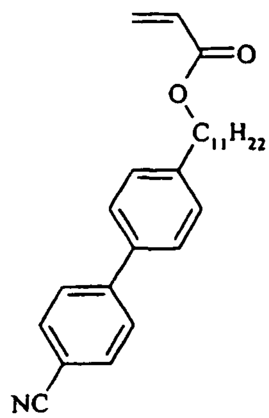 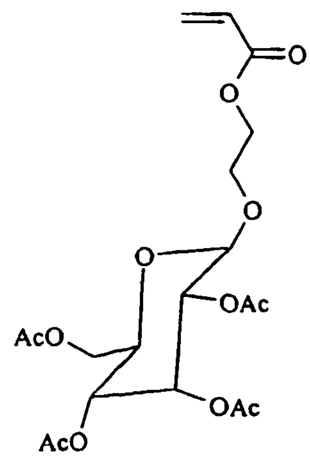

- N-isopropylacrylamide polymérisé par ATRP :

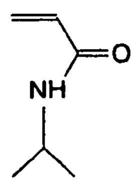

La présente invention concerne également une zone conductrice ou semi-conductrice d'intérêt d'un matériau telle que définie ci-dessus, modifiée selon le procédé de l'invention, caractérisée en ce que le monomère est choisi parmi le styrène ou les dérivés d'acrylate et de méthacrylate mono- ou multifonctionnels.

La présente invention concerne également une zone conductrice ou semi-conductrice d'intérêt d'un matériau telle que définie ci-dessus, modifiée selon le procédé de l'invention, caractérisée en ce que le polymère de la couche polymérique est choisi parmi le polystyrène ou les dérivés de polyacrylate ou de polyméthacrylate.

Une zone conductrice ou semi-conductrice d'intérêt d'un matériau préférée, telle que modifiée selon le procédé de l'invention, est caractérisée en ce que le polymère de la couche polymérique est obtenu par l'un des procédés de polymérisation suivants : photopolymérisation, polymérisation radicalaire par transfert d'atome (ATRP), polymérisation par nitroxyde (NMP) ou polymérisation par ouverture de cycles (ROP).

Selon un mode de réalisation avantageux, la zone conductrice ou semi-conductrice d'intérêt d'un matériau, telle que définie ci-dessus et modifiée selon le procédé de l'invention, est caractérisée en ce que ledit polymère est obtenu par polymérisation, notamment par polymérisation radicalaire par transfert d'atome ou par polymérisation par nitroxyde, et en ce que l'extrémité de la chaîne dudit polymère contient un groupe fonctionnel, notamment un atome d'halogène ou un groupe nitroxyde, éventuellement substituable par des copolymères formant un deuxième bloc ou des molécules actives telles que des aminoalcools, des allyl alcools, de l'anhydride maléique, des sucres, des acides nucléiques, des peptides, des protéines, des molécules perfluorées ou des molécules à activité pharmaceutique.

Plus particulièrement, la zone conductrice ou semi-conductrice d'intérêt d'un matériau telle que définie ci-dessus et modifiée selon le procédé de l'invention est caractérisée en ce que ledit polymère est obtenu par polymérisation, notamment par polymérisation radicalaire par transfert d'atome, et en ce que l'extrémité de la chaîne dudit polymère contient un atome d'halogène, notamment un atome de brome, éventuellement substituable par des copolymères formant un deuxième bloc ou des molécules actives telles que des aminoalcools, des allyl alcools, de l'anhydride maléique, des sucres, des acides nucléiques, des peptides, des protéines, des molécules perfluorées ou des molécules à activité pharmaceutique.

Comme indiqué dans la revue de Edmondson et al. (2004), les chaînes polymères formées par ATRP sont fonctionnalisées sur leur extrémité, par exemple par un atome d'halogène, et peuvent donc être utilisées comme amorceur pour la formation de polymères diblocs ou triblocs. Par exemple des brosses de polystyrène de 10 nm d'épaisseur ont été utilisées pour préparer des copolymères blocPS-b-PMA (PS = polystyrène, PMA = polyméthacrylate).

Les alcools allyliques et l'anhydride maléique permettent de repartir sur des modifications chimiques, c'est-à-dire de refonctionnaliser la surface ; les sucres, les acides nucléiques, les peptides et les protéines visent les bio-capteurs et les surfaces biocompatibles ; les molécules perfluorées visent en particulier la connectique et la protection des surfaces ; les molécules à activité pharmaceutique visent les prothèses où le dépôt de médicaments permet d'améliorer la compatibilité de celle-ci.

La présente invention concerne également une zone conductrice ou semi-conductrice d'intérêt d'un matériau telle que définie ci-dessus et modifiée selon le procédé de l'invention, caractérisée en ce que l'amorceur est un dérivé halogéné, notamment bromé ou un dérivé de type alcoxyamine ou un dérivé d'α-hydroxy alkylphénone, un dérivé d'α-dialcoxy acétophénone, un dérivé d'éther de benzoïne, un dérivé d'α-amino alkylphénone, un dérivé de cétone aromatique tel que la benzophénone ou l'anthraquinone, un dérivé de maléimide N-aliphatique ou N-aromatique, un dérivé de xanthate, un dérivé de dithiocarbamate, un dérivé de thioxanthone, un dérivé d'oxyde de phosphine, ou un dérivé d'alcool, de trithiocarbonate ou de dithioester.

Selon un mode de réalisation avantageux, le polymère de la couche polymérique est obtenu par polymérisation radicalaire par transfert d'atome (ATRP). Dans le cadre d'un tel procédé, le greffon amorceur comprend une fonction amorceur correspondant de préférence à un atome d'halogène ; la zone conductrice ou semi-conductrice d'intérêt ainsi modifiée contient une chaîne polymérique terminée par un atome d'halogène (provenant de l'amorceur) ou un atome de chlore (provenant du catalyseur utilisé dans le cadre du procédé ATRP).

Selon un mode de réalisation avantageux, le polymère de la couche polymérique est obtenu par polymérisation par nitroxyde (NMP). Dans le cadre d'un tel procédé, le greffon amorceur comprend une fonction amorceur de polymérisation correspondant à un groupe nitroxyde ; la zone conductrice ou semi-conductrice d'intérêt ainsi modifiée contient donc une chaîne polymérique terminée par ce groupe nitroxyde.

Selon un mode de réalisation avantageux, le polymère de la couche polymérique est obtenu par polymérisation par ouverture de cycle (ROP). Les matériaux modifiés ainsi obtenus contiennent une chaîne polymérique comprenant un enchaînement de fonctions esters.

Selon un mode de réalisation avantageux, la zone conductrice ou semi-conductrice d'intérêt d'un matériau de l'invention, telle que modifiée selon l'invention, est caractérisée en ce que les liaisons atomes du greffon-atomes de la zone, notamment les liaisons covalentes carbone-atomes de la zone, entre les greffons de la sous-couche et la surface de ladite zone sont telles qu'elles résistent à un lavage par ultrasons.

Selon un autre mode de réalisation avantageux, la zone conductrice ou semi-conductrice d'intérêt d'un matériau de l'invention, telle que modifiée selon l'invention, est caractérisée en ce que le polymère constituant la couche polymérique est lié aux greffons de la sous-couche par l'intermédiaire d'une liaison covalente non hydrolysable, et notamment par l'intermédiaire d'une liaison covalente carbone-carbone.

Une zone conductrice ou semi-conductrice d'intérêt d'un matériau particulièrement avantageuse selon l'invention, telle que modifiée selon le procédé de l'invention, est caractérisée en ce que la liaison covalente entre un greffon de la sous-couche et un polymère de la couche polymérique est telle qu'elle évite le décrochage par hydrolyse du polymère formant ladite couche polymérique.

La présente invention concerne également une zone conductrice ou semi-conductrice d'intérêt d'un matériau telle que définie ci-dessus, telle que modifiée selon l'invention, dans laquelle le matériau est choisi parmi les métaux purs ou les alliages, et notamment le fer, le nickel, le platine, for, le cuivre, le zinc, le cobalt, le titane, le chrome, l'argent, le tantale, les aciers en particulier inoxydables, les alliages de titane, les alliages de chrome cobalt, le molybdène, le manganèse, le vanadium, le nitinol, ou parmi les semi-conducteurs, notamment le silicium dopé ou non, mono- ou polycristallin, le silicium hydrogéné, le nitrure de tantale, le nitrure de titane, le nitrure de tantale, le carbure de silicium, le phosphure d'indium ou l'arséniure de gallium.

Une zone conductrice ou semi-conductrice d'intérêt d'un matériau préférée selon l'invention, telle que modifiée selon l'invention, est caractérisée en ce qu'elle est biostable, biocompatible et résistante à la corrosion, ou en ce que le polymère de la couche polymérique est biodégradable.

La présente invention concerne également un procédé de modification de la surface d'une zone conductrice ou semi-conductrice d'intérêt d'un matériau, pour obtenir une zone conductrice ou semi-conductrice, telle que définie ci-dessus, dont la surface est modifiée, caractérisé en ce qu'il comprend la fixation sur la surface de cette zone d'un greffon amorceur de polymérisation tel que défini ci-dessus, en mettant notamment en contact ladite zone conductrice ou semi-conductrice avec une solution d'un sel de diazonium portant une fonction amorceur de polymérisation et une étape de polymérisation non anionique.

La présente invention concerne également un procédé de modification de la surface d'une zone conductrice ou semi-conductrice d'intérêt d'un matériau tel que défini ci-dessus, caractérisé en ce que la fixation sur la surface de cette zone d'un greffon dérivé d'un amorceur de polymérisation tel que défini ci-dessus, est effectuée par une réaction chimique comprenant la mise en contact de la zone conductrice ou semi-conductrice avec une solution d'un sel de diazonium portant une fonction amorceur de polymérisation dans un solvant, notamment un solvant aprotique, ou un solvant protique acide, pendant un temps suffisant permettant la fixation de la sous-couche de greffons telle que définie ci-dessus sur la surface de ladite zone.

La présente invention concerne également un procédé de modification de la surface d'une zone conductrice ou semi-conductrice d'intérêt d'un matériau tel que défini ci-dessus, caractérisé en ce que la fixation sur la surface de cette zone d'un greffon dérivé d'un amorceur de polymérisation tel que défini ci-dessus, est effectuée par une réaction de transfert d'électron hétérogène comprenant la mise en contact de la zone conductrice ou semi-conductrice avec une

solution d'un sel de diazonium portant une fonction amorceur de polymérisation dans un solvant, notamment un solvant aprotique, ou un solvant protique acide, et une étape de polymérisation non anionique, pendant un temps suffisant permettant la fixation de la sous-couche de greffons telle que définie ci-dessus sur la surface de ladite zone.

L'expression "réaction de transfert d'électron hétérogène" désigne une réaction au cours de laquelle une espèce en solution échange un électron avec une surface en contact avec cette solution, selon le schéma réactionnel suivant : métal + A → $métal^{+}$ + $A^{-}$ (Lund et al., 2001).

L'expression "solvant aprotique" désigne un solvant qui ne cède que difficilement un proton, comme par exemple l'acétonitrile, le diméthyformamide ou le diméthylsulfoxyde.

L'expression "solvant protique acide" désigne un solvant susceptible de fournir facilement un proton auquel on a ajouté une certaine quantité d'un acide par exemple l'eau, les alcools, leurs mélanges en présence d'un acide. En effet, les sels de diazonium ne sont stables que dans des milieu dont le pH est inférieur à environ 2.

Dans le cadre de la présente invention, il est possible de greffer les sels de diazonium en milieu aqueux acide, par exemple dans des mélanges d'eau et d'un autre solvant (en milieu acide).

L'expression "pendant un temps suffisant permettant la fixation de la sous-couche de greffons sur la surface de la zone" désigne le temps nécessaire pour obtenir une sous couche d'épaisseur recherchée, qui est de l'ordre de l'heure.

Ce mode de réalisation est avantageux dans la mesure où il ne nécessite aucun équipement électrochimique et qu'une simple cuve où tremper les échantillons est suffisante.

Un procédé avantageux selon l'invention est caractérisé en ce que le sel de diazonium répond à la formule $ArN_2^+ X^-$, dans laquelle Ar représente un groupe aromatique portant une fonction susceptible d'amorcer la polymérisation tel que défini ci-dessus et $X^-$ représente un anion avantageusement choisi parmi les halogènes, les sulfates, les phosphates, les perchlorates, les tétrafluoroborates, les carboxylates et les hexafluorophosphates.

La présente invention concerne également un procédé de modification de la surface d'une zone conductrice ou semi-conductrice d'intérêt d'un matériau, pour obtenir une zone conductrice ou semi-conductrice dont la surface est modifiée telle que définie ci-dessus, caractérisé en ce qu'il comprend la fixation sur la surface de cette zone d'un greffon amorceur tel que défini ci-dessus, par réduction électrochimique d'un sel de diazonium portant une fonction amorceur de polymérisation, en mettant en contact la zone conductrice ou semi-conductrice avec une solution du sel de diazonium dans un solvant.

Ce mode de réalisation permet d'obtenir des sous-couches très épaisses pouvant atteindre le micron.

Selon un mode de réalisation avantageux, le procédé de l'invention est caractérisé en ce que l'étape de fixation du greffon est une étape de réduction électrochimique du sel de diazonium et consiste à polariser négativement la zone conductrice ou semi-conductrice d'intérêt d'un matériau par rapport à une électrode de référence ou à une anode également en contact avec la solution du sel de diazonium, l'anode et la cathode pouvant être éventuellement séparées l'une de l'autre, par exemple par un diaphragme ou une membrane.

Un procédé préféré de l'invention est un procédé tel que défini ci-dessus, caractérisé en ce que la réduction électrochimique a lieu en présence d'un électrolyte, le compartiment anodique et cathodique étant éventuellement séparés, le compartiment anodique comportant éventuellement le solvant et l'électrolyte, le compartiment cathodique comportant éventuellement le solvant, l'électrolyte et le sel de diazonium.

Selon un mode de réalisation avantageux, le procédé de l'invention est caractérisé en ce que le sel de diazonium répond à la formule $ArN_2^+ X^-$, dans laquelle Ar représente un groupe aromatique portant une fonction amorceur de polymérisation tel que défini ci-dessus et $X^-$ représente un anion, l'anion $X^-$ du sel de diazonium étant avantageusement choisi parmi les halogènes, les sulfates, les phosphates, les perchlorates, les tétrafluoroborates, les carboxylates et les hexafluorophosphates.

La présente invention concerne également un procédé de modification de la surface d'une zone conductrice ou semi-conductrice d'intérêt d'un matériau tel que défini ci-dessus, caractérisé en ce qu'il comprend les étapes suivantes :

- une étape de fixation sur la surface de ladite zone d'un greffon amorceur de polymérisation tel que défini ci-dessus, en mettant en contact la zone conductrice ou semi-conductrice avec une solution d'un sel de diazonium portant une fonction amorceur de polymérisation dans un solvant, ladite étape de fixation étant notamment effectuée par réduction électrochimique du sel de diazonium, permettant l'obtention d'une zone conductrice ou semi-conductrice de surface modifiée par liaison de nature covalente, à sa surface, desdits greffons amorceurs, lesdits greffons formant une sous-couche telle que définie ci-dessus, et
- une étape de polymérisation non anionique, notamment radicalaire ou par ouverture de cycle (ROP), ladite réaction de polymérisation non anionique impliquant un monomère tel que défini ci-dessus et la fonction amorceur portée par le greffon de la sous-couche, ce qui aboutit à la formation du polymère constituant la couche polymérique telle que définie ci-dessus.

De telles polymérisations initiées à partir de la surface (polymérisation "grafting from") permettent un contrôle

facile de la fonctionnalité, de la densité et de l'épaisseur des brosses obtenues.

Un procédé de modification de la surface d'une zone conductrice ou semi-conductrice avantageux selon l'invention est caractérisé en ce qu'il comprend une étape de polymérisation par photopolymérisation,

consistant à mettre en contact ladite zone conductrice ou semi-conductrice, de surface modifiée par liaison, de nature covalente, à sa surface, avec des greffons amorceurs, avec au moins un monomère tel que défini ci-dessus, et à soumettre l'ensemble formé par ledit matériau conducteur ou semi-conducteur et ledit monomère à des radiations électromagnétiques ou actiniques, notamment des radiations UV, pour initier la polymérisation,

ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Ce mode de réalisation s'applique à des surfaces de formes compliquées et se fait à température ordinaire.

Un procédé de modification de la surface d'une zone conductrice ou semi-conductrice avantageux selon l'invention est caractérisé en ce qu'il comprend une étape de polymérisation par polymérisation radicalaire par transfert d'atome (ATRP),

consistant à mettre en contact ladite zone conductrice ou semi-conductrice, de surface modifiée, par liaison, de nature covalente, à sa surface avec des greffons amorceurs, avec au moins un monomère tel que défini ci-dessus, et à activer lesdits amorceurs par un complexe de métal de transition, pour transformer lesdits amorceurs en radicaux susceptibles de réagir avec le monomère,

ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Dans ce mode de réalisation, et la fonction amorceur portée par le greffon de la sous-couche, greffé à la surface, est activé par un complexe de métal de transition pour engendrer un radical susceptible de réagir avec ledit monomère. Le processus est une polymérisation vivante permettant de contrôler la longueur des chaînes et de former des copolymères à blocs.

L'avantage de ce mode de réalisation réside en la possibilité de faire croître des brosses à partir de la surface en utilisant une grande variété de monomères ; le caractère de polymérisation vivante contrôlée permet d'obtenir des chaînes polymères de faible indice de polymolécularité possédant des terminaisons de chaîne fonctionnalisées et pouvant donc être utilisées comme macroamorceur pour fabriquer des copolymères di ou tri blocs. Ce procédé s'applique également à des surfaces de formes complexes où le procédé de "grafting onto" ne serait que difficilement praticable.

Un procédé de modification de la surface d'une zone conductrice ou semi-conductrice avantageux selon l'invention est caractérisé en ce qu'il comprend une étape de polymérisation correspondant à une polymérisation initiée par des nitroxydes (NMP),

consistant à mettre en contact ladite zone conductrice ou semi-conductrice, de surface modifiée par liaison, de nature covalente, à sa surface, avec des greffons amorceurs, avec au moins un monomère tel que défini ci-dessus, et à activer thermiquement lesdits amorceurs, pour les transformer, par l'intermédiaire d'une coupure homolytique, en des radicaux susceptibles de réagir avec le monomère,

ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Dans ce mode de réalisation, la fonction amorceur portée par le greffon est une fonction alcoxyamine qui est activée thermiquement, ce qui provoque une coupure homolytique et engendre un radical susceptible de réagir avec ledit monomère. Le processus est une polymérisation vivante permettant de contrôler la longueur des chaînes, de former des copolymères blocs et d'obtenir des chaînes de faible indice de polymolécularité.

Un procédé de modification de la surface d'une zone conductrice ou semi-conductrice avantageux selon l'invention est caractérisé en ce qu'il comprend une étape de polymérisation par polymérisation par ouverture de cycle (ROP), consistant à mettre en contact ladite zone conductrice ou semi-conductrice, de surface modifiée par liaison, de nature covalente, à sa surface avec des greffons amorceurs, avec au moins un monomère cyclique tel que défini ci-dessus, et avec un catalyseur organométallique permettant d'ouvrir ledit monomère cyclique et de créer le centre actif de la polymérisation,

ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Ce mode de réalisation peut s'effectuer à partir d'un grand nombre de polymères commerciaux et c'est une polymérisation vivante contrôlée permettant d'obtenir des chaînes de faible polydispersité.

La polymérisation par ouverture de cycles (ROP) d'esters cycliques conduit à des polyesters aliphatiques biocompatibles et biodégradables. Le mécanisme d'ouverture de cycle est basé sur une réaction de coordination-insertion d'un alcoolate d'aluminium, d'étain ou de terre rare avec la liaison ester du monomère cyclique. Le catalyseur

approprié peut être obtenu *in situ* par échange de ligand avec un alcool (ici l'amorceur greffé contenant une fonction hydroxyle) et un catalyseur tel que l'octanoate d'étain ou le triéthyl aluminium, le triisopropanoate d'aluminium ou de lanthanide.

La polymérisation par ouverture de cycles est une polymérisation contrôlée vivante qui, à partir d'une surface fonctionnalisée OH, NH ou $SO_2CF_3$, en présence d'un catalyseur tel que $Et_3Al$, $Sn(Oct)_2$, permet de polymériser par ouverture de cycle des monomères cycliques tels que des lactones, des lactides et des oxazolines. Dans le cadre de la présente invention, l'amorceur fixé sur la surface, c'est-à-dire sur la sous-couche, est un groupe aryle notamment substitué par un groupe hydroxyle ou hydroxyalkyle.

La présente invention concerne également un procédé de modification de la surface d'une zone conductrice ou semi-conductrice tel que défini ci-dessus, caractérisé en ce qu'il comprend les étapes suivantes :

- une étape de fixation sur la surface de ladite zone d'un greffon dérivé d'un sel de diazonium et portant une fonction amorceur de polymérisation tel que défini ci-dessus, en mettant en contact la zone conductrice ou semi-conductrice avec une solution dudit sel de diazonium portant ladite fonction amorceur de polymérisation dans un solvant, ladite étape de fixation étant notamment effectuée par réaction de transfert d'électron hétérogène ou par réaction chimique, permettant l'obtention d'une zone conductrice ou semi-conductrice de surface modifiée par liaison de nature covalente à sa surface desdits greffons amorceurs, lesdits greffons formant une sous-couche telle que définie ci-dessus, et
- une étape de polymérisation non anionique par photopolymérisation, polymérisation radicalaire par transfert d'atome (ATRP), polymérisation par nitroxyde (NMP) ou polymérisation par ouverture de cycle (ROP), ladite réaction de polymérisation impliquant un monomère tel que défini ci-dessus et l'amorceur dont dérive le greffon de la sous-couche, ce qui aboutit à la formation du polymère constituant la couche polymérique telle que définie ci-dessus.

Ce mode de réalisation permet de faire croître à partir de la surface des chaînes polymères de longueurs sensiblement égales et ce procédé s'applique également à des surfaces de forme complexes où le "grafting onto" n'est que difficilement praticable.

Un procédé de modification de la surface d'une zone conductrice ou semi-conductrice avantageux selon l'invention est caractérisé en ce qu'il comprend une étape de polymérisation par photopolymérisation,
consistant à mettre en contact ladite zone conductrice ou semi-conductrice, de surface modifiée par liaison, de nature covalente à sa surface avec des greffons amorceurs, avec au moins un monomère tel que défini ci-dessus, et à soumettre l'ensemble formé par ladite zone conductrice ou semi-conductrice et ledit monomère à des radiations électromagnétiques ou actiniques, notamment des radiations UV, pour initier la polymérisation,
ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Un procédé de modification de la surface d'une zone conductrice ou semi-conductrice avantageux selon l'invention est caractérisé en ce qu'il comprend une étape de polymérisation par polymérisation radicalaire par transfert d'atome (ATRP),
consistant à mettre en contact ladite zone conductrice ou semi-conductrice, de surface modifiée, par liaison de nature covalente à sa surface des greffons amorceurs, avec au moins un monomère tel que défini ci-dessus, et à activer lesdits amorceurs par un complexe de métal de transition, pour transformer lesdits amorceurs en des radicaux susceptibles de réagir avec le monomère,
ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Un procédé de modification de la surface d'une zone conductrice ou semi-conductrice avantageux selon l'invention est caractérisé en ce qu'il comprend une étape de polymérisation correspondant à une polymérisation initiée par des nitroxydes (NMP),
consistant à mettre en contact ladite zone conductrice ou semi-conductrice, de surface modifiée, par liaison de nature covalente à sa surface des greffons amorceurs, avec au moins un monomère tel que défini ci-dessus, et à activer thermiquement lesdits amorceurs, pour les transformer, par l'intermédiaire d'une coupure homolytique, en des radicaux susceptibles de réagir avec le monomère,
ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Ce mode de réalisation s'applique à des surfaces de forme compliquée et se fait à température ordinaire.

Un procédé de modification de la surface d'une zone conductrice ou semi-conductrice avantageux selon l'invention est caractérisé en ce qu'il comprend une étape de polymérisation correspondant à une polymérisation par ouverture de cycle (ROP),

consistant à mettre en contact de ladite zone conductrice ou semi-conductrice, de surface modifiée, par liaison de nature covalente à sa surface des greffons amorceurs, avec au moins un monomère cyclique tel que défini ci-dessus, et avec un catalyseur organométallique permettant d'ouvrir ledit monomère cyclique et de créer le centre actif de la polymérisation,
ladite réaction de polymérisation impliquant un monomère tel que défini ci-dessus et la fonction amorceur portée par le greffon de la sous-couche, ce qui aboutit à la formation du polymère constituant la couche polymérique telle que définie ci-dessus.

Selon un mode de réalisation avantageux, le procédé de l'invention peut comprendre une étape d'initiation photochimique avant l'étape de polymérisation ATRP ou NMP.

La présente invention concerne également un procédé tel que défini ci-dessus, caractérisé en ce que l'étape de polymérisation radicalaire est effectuée en présence d'un solvant et d'un catalyseur tel qu'un complexe de métaux de transition.

La présente invention concerne également un procédé tel que défini ci-dessus, caractérisé en ce que l'étape de polymérisation radicalaire est effectuée en présence d'un amorceur externe tel qu'un dérivé halogéné, notamment bromé ou un dérivé de type alcoxyamine ou un dérivé d'α-hydroxy alkylphénone, un dérivé d'α-dialcoxy acétophénone, un dérivé d'éther de benzoïne, un dérivé d'α-amino alkylphénone, un dérivé de cétone aromatique tel que la benzophénone ou l'anthraquinone, un dérivé de maléimide N-aliphatique ou N-aromatique, un dérivé de xanthate, un dérivé de dithiocarbamate, un dérivé de thioxanthone, un dérivé d'oxyde de phosphine, ou un dérivé d'alcool, de trithiocarbonate ou de dithioester.

L'utilisation d'un amorceur en solution permet de faire croître des chaînes polymères en solution et donc de vérifier les critères auxquels doit répondre la polymérisation.

La présente invention concerne également une zone conductrice ou semi-conductrice telle qu'obtenue par mise en oeuvre du procédé tel que défini ci-dessus.

La présente invention concerne également l'utilisation d'une zone conductrice ou semi-conductrice telle que définie ci-dessus, pour la préparation :

- d'un objet de forme quelconque constitué de matériau comportant ladite zone, ou
- de surfaces métalliques présentant une résistance accrue vis-à-vis de la corrosion, ou
- de stents, d'implants, de prothèses ou d'éléments utilisables en microélectronique.

La présente invention concerne également l'utilisation d'une zone conductrice ou semi-conductrice telle que définie ci-dessus, pour la préparation de matériaux comportant des zones conductrices ou semi-conductrices présentant une couche supplémentaire, notamment une couche polymérique supplémentaire constituée de copolymères à blocs, ou une couche fonctionnelle supplémentaire constituée de molécules actives telles que des aminoalcools, des allyl alcools, de l'anhydride maléique, des sucres, des acides nucléiques, des peptides ou des protéines.

La présente invention concerne également un sel de diazonium répondant à l'une des formules chimiques suivantes :

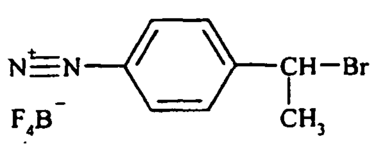

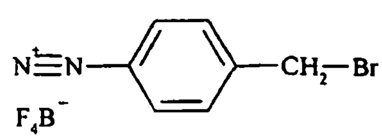

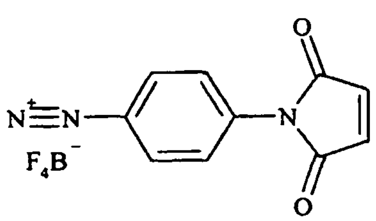

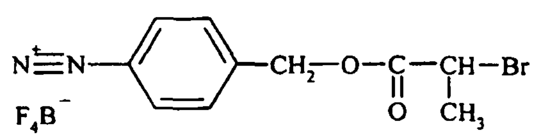

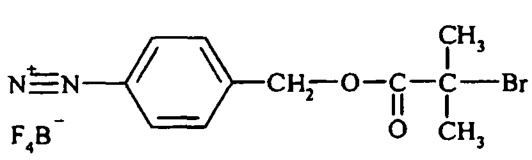

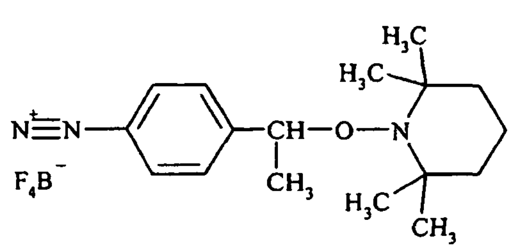

## DESCRIPTION DES FIGURES

La Figure 1 représente le voltamogramme de **1** dans une solution acétonitrile (ACN) + 0,1 M $NBu_4BF_4$ sur une électrode de carbone vitreux (Référence ECS. v = 0.2 $Vs^{-1}$ : (a) premier cycle, (b) second cycle, (c) troisième cycle).

La Figure 2 représente le résultat d'une chronoampérométrie sur une électrode de fer dans une solution ACN + 0,1 M $NBu_4BF_4$ + 2 mM de **1**. (E = -0,85 V/SCE. Référence ECS).

La Figure 3 représente le résultat de la voltamétrie cyclique a) d'une électrode de carbone vitreux greffée par **2** : CV+2 dans une solution ACN + 0,1 M $NBu_4BF_4$ et b) d'une solution $NEt_4Br$ (1mM) sur une électrode de carbone vitreux propre (Référence ECS. v = 0,2 $Vs^{-1}$).

La Figure 4 représente le résultat de la voltamétrie cyclique a) d'une électrode de carbone vitreux greffée par **1** : **CV+1** dans une solution ACN + 0,1 M $NBu_4BF_4$ et b) d'une solution $NEt_4Br$ (1mM) sur une électrode de carbone vitreux propre (Référence ECS. v = 0,2 $Vs^{-1}$).

La Figure 5 représente le spectre IRRAS de : (a) Fe + 1 et (b) 1 avant le greffage.

La Figure 6 représente le spectre XPS d'une surface de fer greffée par 1 : Fe + 1.

La Figure 7 représente le spectre XPS du Cls d'un échantillon Fe + 1.

Les Figures 8A, 8B, 8C, 8D et 8E représentent respectivement des images AFM pour Fe, Fe+1, Fe+1 + PMMA saris amorceur en solution, Fe+1+PAnBu sans amorceur en solution et Fe+1 + PMMA avec un amorceur en solution.

La Figure 9 représente l'épaisseur et la rugosité de la couche de polymère PMAnBu en fonction du temps de polymérisation. La courbe avec les losanges correspond à la mesure de la rugosité de la couche de polymère, celle avec les carrés à l'épaisseur de la couche de polymère et celle avec les triangles à la hauteur des agrégats. L'axe des ordonnées correspond à la rugosité de la couche de polymère, l'épaisseur de la couche de polymère ou à la hauteur des agrégats en mm. L'axe des abscisses représente le temps de polymérisation par ATRP en heures.

La Figure 10 représente le spectre XPS d'un échantillon Fe + 1 + PMMA.

La Figure 11 représente le spectre XPS du Cls de Fe + 1 + PMMA (préparé avec un amorceur en solution).

La Figure 12 représente le spectre XPS du Cls de Fer + 1 + PAnBu (préparé sans amorceur en solution).

La Figure 13 représente le spectre IRRAS de (a) : Fe + 1, (b) : Fe + 1 + PMMA avec amorceur dans la solution, (c) : Fe + 1 + PMMA sans amorceur dans la solution.

La Figure 14 représente le spectre IRRAS de (a) : Fe + 1, (b) : Fe + 1 + PAnBu avec amorceur dans la solution.

La Figure 15A représente les raies Cls à haute résolution de GC+1+PS (plaques de carbone vitreux traitées par le sel de diazonium 1 et sur lesquelles a été greffé un film de polystyrène) et de GC+1+PS+HSA (plaques de carbone vitreux traitées par le sel de diazonium 1 et sur lesquelles a été greffé un film de polystyrène et sur lesquelles a été immobilisée de la HSA).

La Figure 15B représente les raies Cls à haute résolution de GC+1+PMMA (plaques de carbone vitreux traitées par le sel de diazonium 1 et sur lesquelles a été greffé un film de polyméthacrylate de méthyle) et de GC+1+ PMMA+HSA (plaques de carbone vitreux traitées par le sel de diazonium 1 et sur lesquelles a été greffé un film de polyméthacrylate de méthyle et sur lesquelles a été immobilisée de la HSA).

## I - GREFFAGE ET POLYMÉRISATION ATRP

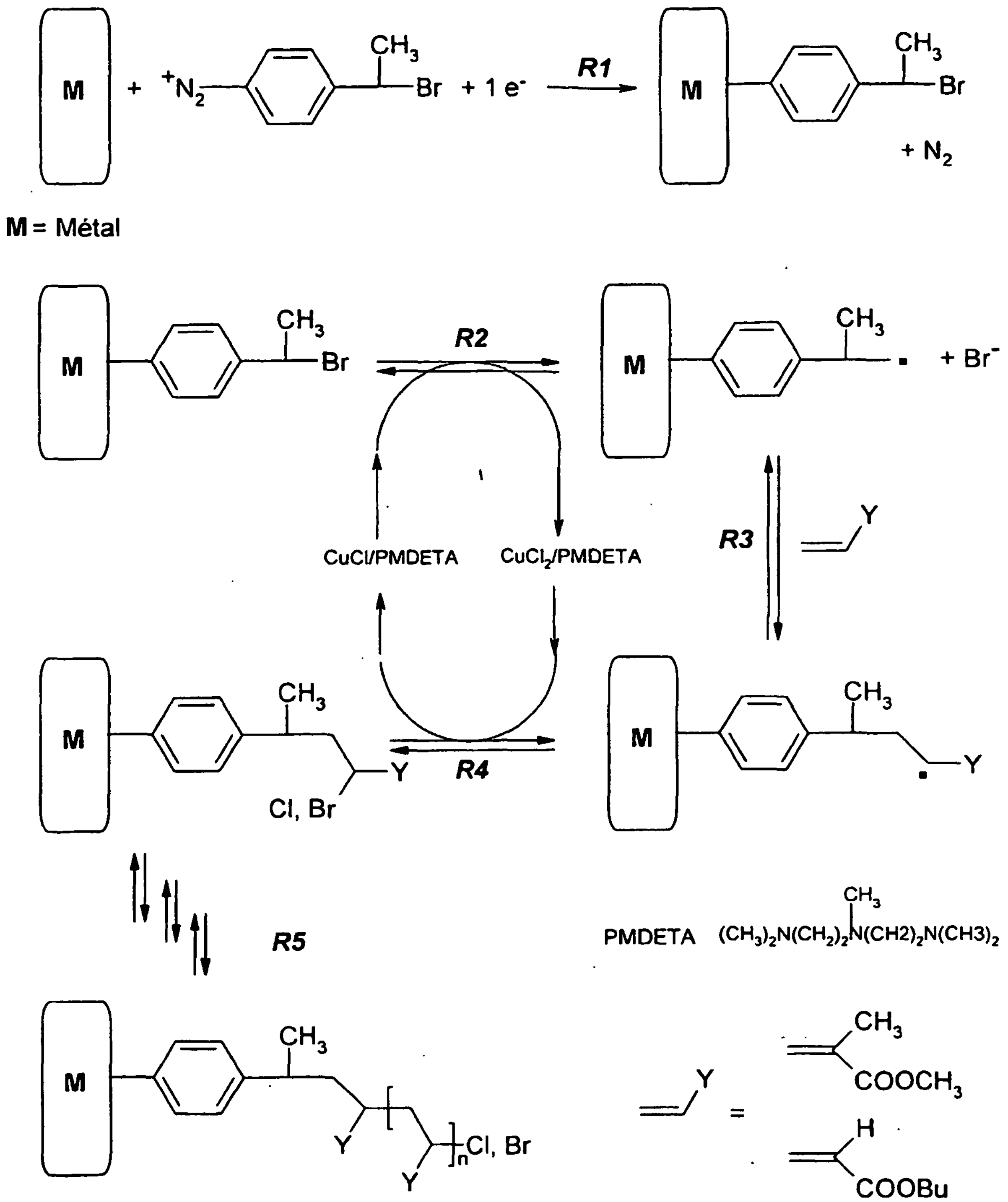


**Schéma 1**

**1 - Fixation du greffon sur le métal**

1-1. Synthèse des sels de diazonium

Les amines de départ ont été synthétisées « one pot » à partir du 1-(4-aminophényl)éthanol et du (4-aminophényl)méthanol. Deux sels de diazonium originaux $BF_4^{-}\,{}^{+}N_2C_6H_4CH(CH_3)Br$ **1** et $BF_4^{-}\,{}^{+}N_2C_6H_4CH_2Br$ **2** ont été syn-

thétisés par les méthodes standard de diazotation.

Synthèse de 1

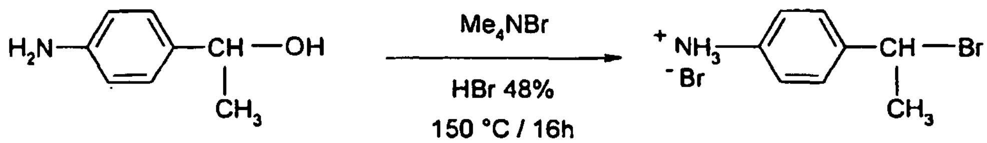


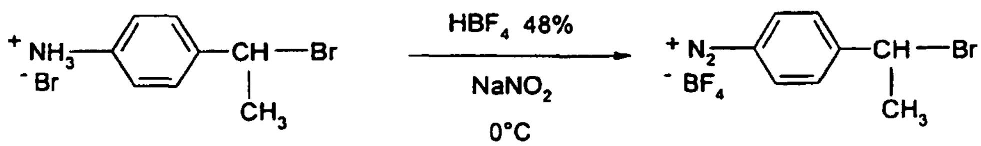


Dans un ballon de 50 ml, 1 g de 2-amino-5-méthylbenzylalcool (7,28 $10^{-3}$ mol ; 1 éq.) et 1,23 g de bromure de tétraméthylammonium ($8.10^{-3}$ mol ; 1,1 éq) sont placés dans 5 ml d'une solution aqueuse d'acide bromhydrique 48% ($1,82.10^{-2}$ mol ; 2 ,5 éq.). La solution obtenue est laissée agitée à 150°C, sous atmosphère d'argon pendant 15 heures. Un précipité jaune s'est formé. Le mélange réactionnel est refroidi a 0°C, 5mL d'une solution aqueuse d'acide tétrafluoroborique 48% ($1,68.10^{-2}$ mol ; 5,6 éq.) préalablement refroidie à 0°C sont additionnés. L'agitation est maintenue pendant 15 minutes. 0,55 g de nitrite de sodium ($8.10^{-3}$ mol ; 1,1 éq.) sont dissous dans un minimum d'eau déminéralisée. La solution obtenue est refroidie à 0°C puis elle est ajoutée progressivement au milieu réactionnel. Un précipité marron apparaît. L'agitation est maintenue pendant 30 minutes à 0°C, puis la solution est placée au réfrigérateur pendant une nuit afin que le sel de diazonium précipite. Après filtration sur verre fritté, le précipité est lavé avec une solution aqueuse de tétrafluoroborate de sodium 5%, du méthanol, et de l'éther diéthylique, puis il est séché sous vide. Une poudre marron est obtenue.

Synthèse de 2

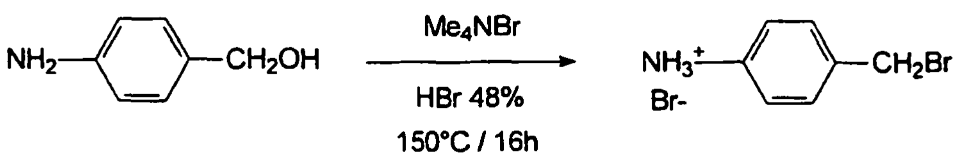


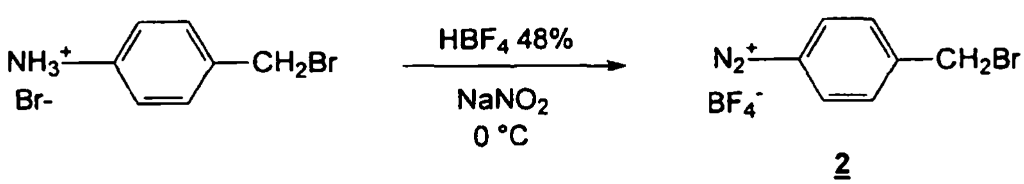


**2**

Dans un ballon de 50 ml, 0,5g de 2-aminobenzylalcool ($4,6.10^{-3}$ mol, 1 éq.) et 0,78 g de bromure de tétraméthylammonium ($5,06.10^{-3}$ mol ; 1,1 éq) sont placés dans 5 ml d'une solution aqueuse d'acide bromhydrique 48% ($1,82.10^{-2}$ mol ; 3,96 éq.). La solution obtenue est laissée agitée à 150°C, sous atmosphère d'argon pendant 15 heures. Un précipité jaune s'est formé. Le mélange réactionnel est refroidi a 0°C, 4,5 mL d'une solution aqueuse d'acide tétrafluoroborique 48% ($1,64.10^{-2}$ mol ; 3,56 éq.) préalablement refroidie à 0°C sont additionnés. L'agitation est maintenue pendant 15 minutes. 0,34 g de nitrite de sodium ($5,06.10^{-3}$ mol ; 1,1 éq.) sont dissous dans un minimum d'eau déminéralisée. La solution obtenue est refroidie à 0°C puis elle est ajoutée progressivement au milieu réactionnel. Un précipité marron apparaît. L'agitation est maintenue pendant 30 minutes à 0°C, puis la solution est placée au réfrigérateur pendant

une nuit afin que le sel de diazonium précipite. Après filtration sur verre fritté, le précipité est lavé avec une solution aqueuse de tétrafluoroborate de sodium 5%, du méthanol, et de l'éther diéthylique, puis il est séché sous vide. Une poudre marron est obtenue.

1-2. Greffage des groupes aryles

Les réactions ont été effectuées sur des électrodes de carbone puis transposées sur fer (Figure 1). On observe une vague irréversible, large, monoélectronique à $Ep_c$= -0,31 V/SCE qui correspond à la réduction concertée du sels de diazonium en radical aryle qui réagit avec la surface du fer selon la réaction ***RI*** (voir schéma 1). Lors des balayages successifs, la hauteur de cette vague devient très faible comme il est habituel avec les sels de diazonium, la surface étant progressivement bloquée par le greffage de groupes aryles. Sur fer, on ne peut observer cette vague, le fer étant trop facilement oxydable.

Les électrodes de fer sont soigneusement polies à la pâte à diamant (1 μm) puis rincées sous ultrasons dans l'acétone désoxygéné pendant 5 minutes afin d'éviter au maximum l'oxydation de la surface. Pour effectuer le greffage nous avons procédé par chronoampérométrie en nous plaçant à des potentiels plus négatifs ($\Delta E$ = -0,54 V) que le pic mesuré sur carbone (et plus cathodique que le potentiel d'oxydation du fer). La Figure 2 montre une chute brutale du courant qui correspond au blocage de l'électrode.

Après greffage, les électrodes sont soigneusement rincées dans l'ACN sous ultrasons afin d'éliminer les molécules qui ne seraient que physiquement adsorbées sur la surface.

Il est aussi possible d'effectuer le greffage par simple immersion de la plaque de fer traitée comme précédemment dans une solution désoxygénée par un courant d'argon 20 mM de **1** ou **2** pendant une heure.

1-3. Caractérisation de la surface greffée par voltamétrie cyclique

Après rinçage soigneux de l'électrode dans l'acétone, dans une cuve à ultrasons, celle-ci est transférée dans une solution ne contenant que le solvant et l'électrolyte (ACN + 0,1 M $NBu_4BF_4$). Sur la Figure 3, on observe le voltamogramme d'une électrode de carbone vitreux greffé par réduction de **2** : **CV+ 2** ; on observe une vague irréversible à $Ep_c$ = - 1,98 V/SCE correspondant à la réduction de la liaison C-Br. Sur le balayage retour, on observe un pic à $Ep_a$ = + 0,83 V/SCE qui correspond à l'oxydation du bromure formé au niveau du pic cathodique. Par comparaison, la réduction du bromure de benzyle dans les mêmes conditions donne un pic à $Ep_c$ = -1,95 V/SCE et l'oxydation du bromure de tétraéthylammonium conduit à un pic à $Ep_a$ = 0,86 V/SCE. Un voltamogramme similaire est obtenu dans le cas de **1** : **CV + 1** (Figure 4). Les pics cathodiques et anodiques correspondent donc respectivement aux réactions ***R6*** et ***R7*** du Schéma 2 ci-dessous.

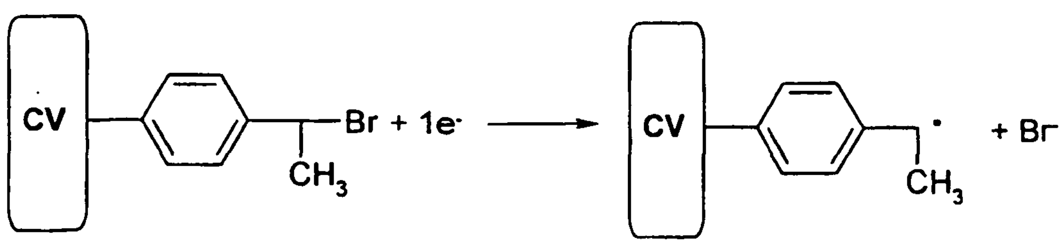
***R6***

$Br^- - 1e^- \longrightarrow 1/2\ Br_2$ ***R7***

**Schéma 2**

Les deux voltamogrammes des Figures 3 et 4 témoignent donc du greffage de la surface de carbone vitreux par les groupes aryles provenant de **1** et **2**.

1-4. Caractérisation de la surface greffée par spectroscopie IR

La Figure 5 représente le spectre IR par réflexion (IRRAS) d'une surface de fer greffée par 1 : **Fe+1**.

La différence la plus frappante entre le spectre du diazonium et le spectre de la couche organique greffée est l'absence de la bande à 2258 $cm^{-1}$ indiquant que le diazonium a bien été réduit et n'est pas seulement adsorbé sur la surface. On observe clairement sur le spectre de **Fe + 1** la signature du groupe aromatique avec la vibration du cycle

à 1579 et 1508 $cm^{-1}$ ; les vibrations dans le plan des liaisons C-H à 1083 $cm^{-1}$ et enfin les vibrations C-H hors du plan à 834, 793 et 700 $cm^{-1}$. On observe une différence intéressante dans la zone des CH, alors que les vibrations du cycle aromatique sont bien visibles dans le spectre de **1** à 3086 $cm^{-1}$, elles disparaissent au profit des vibrations CH aliphatiques à 2964 $cm^{-1}$ dans le spectre de **Fe + 1**. Ceci est dû aux règles de sélection qui favorisent les vibrations dont le moment dipolaire est perpendiculaire à la surface, comme peuvent l'être en partie les vibrations des CH aliphatiques de **1**. C'est probablement le même effet qui est responsable de l'affaiblissement des bandes à 1083 $cm^{-1}$ dans le spectre de **Fe + 1.**

1-5. Caractérisation de la surface greffée par XPS

La Figure 6 représente le spectre à large balayage d'une surface **Fe + 1**. On observe la présence du pic du fer indiquant ainsi la présence d'une couche organique relativement mince (inférieure à la profondeur d'analyse de l'XPS qui est d'environ 5 nm). Le pic du brome à 69 eV et celui du carbone à 285 eV témoignent de la présence de la couche organique (mais aussi d'une contamination externe pour ce qui concerne le carbone). L'oxygène à 530 eV correspond à la présence résiduelle d'oxyde sur la surface alors que l'azote (400 eV) provient aussi d'une contamination par l'atmosphère alors que le fluor (685 eV) correspond très probablement à des traces d'électrolyte resté sur la surface malgré le rinçage des échantillons. La Figure 7 présente le spectre du pic C1s du carbone d'un échantillon de **Fe + 1,** on observe un épaulement correspondant après déconvolution à un pic situé à 283,2 eV et qui est indicatif de carbone lié au métal , par comparaison le carbure de fer apparaît à 283 eV.

Les caractérisations spectroscopiques décrites ci-dessus montrent bien que les greffons bromés ont bien été fixés sur la surface du fer. Nous allons maintenant montrer qu'il est possible à partir de ces greffons utilisés comme amorceurs de faire croître des polymères sur la surface. Les surfaces greffées par simple immersion de la plaque présentent des caractéristiques semblables à celles décrites ci-dessus.

**2 - Croissance du polymère à partir du greffon**

2-1. Polymérisation

Les conditions expérimentales du greffage ont été ajustées en utilisant un amorceur en solution et nous avons vérifié que la polymérisation présentait bien les critères d'une polymérisation radicalaire par transfert d'atome (ATRP).

Deux monomères ont été utilisés : d'une part le méthacrylate de méthyle (MMA) et d'autre part l'acrylate de n-butyle (AnBu), qui doivent conduire respectivement au polyméthacrylate de méthyle (température de transition vitreuse Tg = 100°C) et au polyacrylate de n-butyle (Tg = -55°C). Des conditions expérimentales typiques sont rassemblées dans le Tableau 1 ci-dessous ; les pastilles préalablement greffées comme décrit ci-dessus sont immergées dans les solutions de polymérisation (voir conditions expérimentales dans le Tableau 1).

Après cette étape, les plaques de fer sont soigneusement rincées aux ultrasons dans du dichlorométhane. Un test a été effectué afin de vérifier que le cycle de rinçage était suffisant pour éliminer les résidus de polymère adsorbé à la surface de fer. Une plaque de fer mise en contact avec une solution de PMMA-toluène est chauffée 4 h à 90°C en l'absence d'amorceur et de chlorure de cuivre. Ensuite, après 4 lavages de 5 minutes dans du dichlorométhane aux ultrasons, l'analyse de la plaque par IRRAS ne révèle aucun signal de polymère. A ce moment, il reste du PMMA dans le solvant de rinçage (analyse IR) mais le polymère a complètement disparu du chloroforme après un cinquième lavage. Comme ce cycle de rinçage a été appliqué aux plaques de fer immergées dans les solutions de polymérisation contenant Cu/Cl et l'amorceur, les signaux caractéristiques du PMMA et PAnBu en IRRAS et XPS peuvent être attribués à du polymère greffé et non adsorbé (Figures 10, 11, 12, 13, 14).

**Tableau 1**. Conditions expérimentales de la polymérisation par ATRP[a)].

| Solvant | Monomère | [Mono] | [1-PEBr] | [PMDETA] | [Cu(I)Cl] | [Cu(II)Cl] | Cu(II)/Cu(I) |
|---|---|---|---|---|---|---|---|
| Toluène | MMA | 4,78 | $2,4.10^{-2}$ | $1,3.10^{-2}$ | $8,0.10^{-3}$ | $4,0.10^{-3}$ | 0,5 |
| Toluène | MMA | 4,78 | 0 | $1,3.10^{-2}$ | $8,0.10^{-3}$ | $4,0.10^{-3}$ | 0,5 |
| Toluène | AnBu | 5,80 | $4,7.10^{-2}$ | $2,3.10^{-2}$ | $2,1.10^{-2}$ | $2,0.10^{-3}$ | 0,09 |
| Toluène | AnBu | 5,80 | 0 | $2,4.10^{-2}$ | $2,1.10^{-2}$ | $2,3.10^{-3}$ | 0,11 |

a) Concentrations en mol $L^{-1}$ ; T = 90°C ; [Amorceur]/[PMDETA]/[Cu] = 2/1/1 ; [MMA]/[Amorceur]=200 ; [AnBu]/[Amorceur]=120 ; (b) les solutions préalablement dégazées contenant le ligand PMDETA : pentaméthylediéthylènetriamine (voir Schéma 1), le monomère et l'amorceur 1-PEBr sont ajoutés sous atmosphère d'azote sur la pastille de fer et le chlorure de cuivre. Temps de réaction : MMA 250 minutes pour des taux de conversion du monomère de 40% environ,

AnBu 400 minutes pour des taux de conversion de 80%.

2-2. Caractérisation des surfaces recouvertes de polymère

Les surfaces obtenues à partir du sel de diazonimum **1** doivent présenter les formules suivantes :

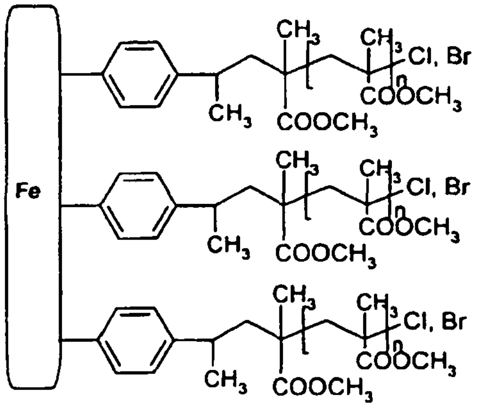

**Fe + 1 + PMMA**

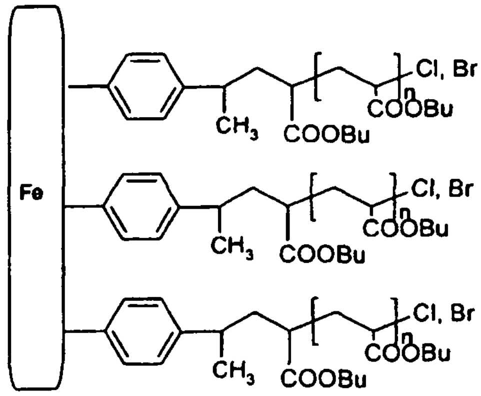

**Fe + 1 + PAnBu**

**2-2-1**. Caractérisation par AFM.

Les Figures 8A, 8B, 8C et 8D montrent les images obtenues par AFM sur des plaques de Fe, Fe+1, Fer+1+PMMA et Fer+1+PAnBu. Dans ces deux derniers cas, il s'agit des revêtements polymères greffés sans utiliser d'amorceur en solution mais uniquement l'amorceur lié au substrat de fer, mais aussi d'une surface Fer+1+PMMA obtenue en présence d'un amorceur ajouté dans la solution.

L'image montre que la morphologie de la surface du fer est nettement modifiée par le greffage de l'amorceur et le revêtement polymère conséquent. La rugosité maximale croît dans le sens Fe < Fer+1 < Fer+1+PAnBu < Fer+1+PMMA. Les dénivellations entre les hauteurs maximales obtenues sur Fer + 1 et Fer + 1 + polymère peut atteindre une centaine de nanomètres. Ainsi, sur la figure 8E, représentant Fer+1+PMMA avec un amorceur, l'épaisseur atteint environ 200 nm, ce qui montre qu'il est possible d'obtenir des couches relativement épaisses.

La Figure 9 représente la variation de l'épaisseur de la couche greffée, de la hauteur des agrégats observables sur la surface et de la rugosité de celle-ci en fonction du temps de polymérisation de AnBu sur une surface Fe+1. On observe ainsi que, lorsque la couche croît, la rugosité reste constante ce qui conforte le fait que l'on obtienne des brosses denses : les chaînes de polymère s'allongent mais leurs différences de longueur ne changent pas avec leur taille.

2-2-2. Caractérisation par XPS

La Figure 6 présente le spectre d'une surface de fer greffée par le sel de diazonium 1. La Figure 10 présente la même surface après greffage de MMA, c'est à dire, recouverte de PMMA (Fe + 1 + PMMA). Elle montre une augmentation nette des intensités relatives des raies C1s s et O1s par rapport à celle du fer. Le Tableau 2 indique les compositions de surface pour les surfaces greffées par **1** puis recouvertes de polymères.

**Tableau 2.** Analyse XPS de la surface

| | C | N | O | Fe | Cu | Br | Cl | F |
|---|---|---|---|---|---|---|---|---|
| **Fe+1** | 57,9 | 1,6 | 22,9 | 3,5 | 0,0 | 1,1 | 0,0 | 13 |
| Fe + **1** + PMMA | 62,3 | 1,7 | 27,8 | 0,9 | 0,6 | 1,5 | 4,2 | 1,1 |
| Fe + **1** + PAnBu | 63,1 | 2,8 | 23,8 | 3,0 | 0,1 | 0,4 | 0,3 | 1,15 |

On observe l'augmentation de la proportion relative de carbone après greffage des polymères. Le pourcentage surfacique d'oxygène augmente plus particulièrement dans le cas du PMMA, plus riche en oxygène que le PAnBu. Le pourcentage de fer diminue sensiblement surtout dans le cas du PMMA, indiquant clairement la croissance d'une couche

organique sur la surface. La faible décroissance lors de la polymérisation de l'AnBu indique soit une couche plus fine, soit une couche irrégulière présentant de nombreux défauts.

Il est intéressant de noter que pour Fer + 1 la raie Br3d est centrée à 70,8 eV, une indication claire de la présence de brome dans un environnement organique et plus particulièrement dans une liaison C-Br. Toutefois, après croissance de chaînes de polymères, la présence de brome est persistante à la surface des plaques greffées. Ceci suggère que tous les sels de diazonium, analogues d'amorceurs ATRP greffés ne réagissent pas. En outre, à la surface de Fer+1+polymère, un épaulement à basse énergie de liaison indique la possibilité de l'existence d'ions bromures, probablement piégés par le polymère, qui n'ont pas pu être éliminés lors du cycle de lavage aux ultrasons.

Dans le cas de Fer+1+PAnBu, le chlore est détecté par sa raie principale Cl2p centrée à 199,2 eV. Cette valeur est proche de la limite basse de l'intervalle d'énergie de liaison pour le Cl2p dans le PVC (196,5-198ev). Ceci montre, de manière indiscutable, que les chlorures provenant du catalyseur réagissent avec les chaînes greffées de polymères en croissance pour enfin constituer les terminaisons de celles-ci (voir schéma 2) sous forme de $-CH_2-CH_2-Cl$.

Afin de vérifier si l'ATRP est effectivement initiée en surface, nous avons comparé la composition chimique de surface de plaques de fer traitées en présence ou en absence d'amorceur ajouté en solution (Tableau 3). Il apparaît que l'absence d'amorceur en solution n'empêche pas la polymérisation d'avoir lieu en surface et cela grâce au greffage préalable de sel de diazonium bromé par réduction électrochimique à la surface de fer. La valeur plus élevée du pourcentage atomique de carbone en l'absence d'amorceur en solution semble indiquer la présence de chaînes macromoléculaires plus longues.

**Tableau 3**. Analyse XPS de la surface en présence et en absence d'amorceur dans la solution.

| | C | N | O | Fe | Cu | Br | Cl | F |
|---|---|---|---|---|---|---|---|---|
| **Fe + 1 + PAnBu** sans amorceur | 68,9 | 2,1 | 20,0 | 2,0 | 1,5 | 2,3 | 0,5 | 0,4 |
| **Fe + 1 + PAnBu** avec amorceur | 63,1 | 2,8 | 23,8 | 2,3 | 0,1 | 0,4 | 0,3 | 1,1 |

Le spectre à haute résolution du C1s de Fer + 1 + PMMA (Figure 11) présente une composante centrée à 289 eV, caractéristique du carbone O-C=O du PMMA, il en en est de même pour le Fer + 1 + PAnBu représenté sur la Figure 12.

Les résultats de l'analyse XPS démontrent donc la présence des deux polymères sur la surface du fer.

**2-2-3.** Caractérisation par IRRAS

La Figure 13 présente les spectres de Fe + 1 et de Fe +1 + PMMA avec et sans amorceur en solution. La différence la plus remarquable entre le spectre de Fe + 1 et les deux autres est l'apparition, après l'étape de polymérisation, d'une bande très intense à 1735 $cm^{-1}$ qui signe la présence du polymère par son groupe pendant carbonyle. Cette preuve de l'existence du PMMA greffé en surface est renforcée par l'apparition de bandes larges et symétriques à 1271 et 1148 $cm^{-1}$ qui sont caractéristiques de la liaison C-O. Il en est de même pour le Fe+ 1 +PAnBu (voir Figure 14).

Les spectres IRRAS confirment donc de manière irréfutable la présence du polymère sur la surface.

## II - GREFFAGE ET POLYMÉRISATION PAR L'INTERMÉDIAIRE DE NITROXYDES (NMP)

La polymérisation par l'intermédiaire de nitroxydes est une méthode de polymérisation contrôlée basée sur le blocage réversible du radical porteur de la chaîne active par un radical nitroxyde. Elle a été utilisée pour faire croître, sur du silicium, des brosses de polystyrène de plus de 100 nm (Huang et al., 2001). Comme indiqué dans le Schéma 5 (voir ci-après), un amorceur comportant une fonction alcoxyamine est greffé sur la surface. Lors du chauffage, le groupe alcoxyamine attaché à la surface est coupé pour donner le radical alkyle et le radical nitroxyde stable : TEMPO. La recombinaison du radical styrénique avec le radical stable nitroxyde (TEMPO) conduit à une nouvelle alcoxyamine susceptible de se décomposer thermiquement. L'établissement d'un équilibre entre espèces dormantes et espèces actives grâce au blocage réversible de la chaîne en croissance par le radical TEMPO permet de limiter les réactions de terminaisons et ainsi de contrôler l'étape de propagation.

### 1 - Synthèse et greffage du sel de diazonium

Nous avons synthétisé le sel de diazonium du Schéma 5 à partir de l'amine correspondante dans $HBF_4$ en présence de $NaNO_2$. Ce sel de diazonium est greffé électrochimiquement en maintenant le potentiel d'une pastille de fer traitée comme précédemment pendant 300s à -0.8 V/SCE dans ACN + 0,1 M $NBu_4BF_4$. Le greffage de l'initiateur a été vérifié par XPS qui montre un rapport C/N = 19 et O/N = 1,3 proche de ce qui est attendu pour la surface greffée (C/N = 17 et O/N = 1)(schéma 4).

**2. Polymérisation à partir de l'alcoxyamine greffée**

La pastille de fer greffée comme ci-dessus est immergée dans du styrène distillé (10 mL) et la température est portée à 130°C pendant 24 heures. La pastille est ensuite lavée avec du dichlorométhane (cycles de 5 minutes aux ultrasons) pour enlever le polystyrène qui n'est que déposé sur la surface. La présence de polystyrène sur la surface est confirmée par IRRAS par comparaison avec un film de polystyrène étalon.

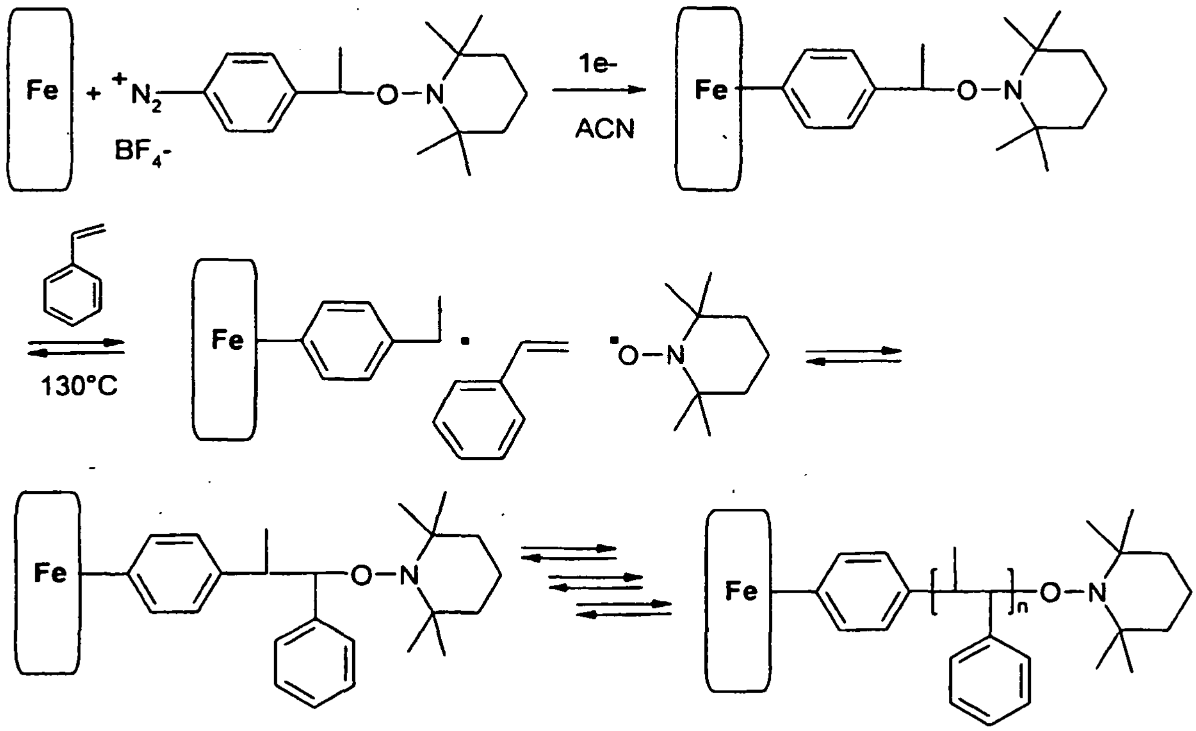


Schéma 4

**III - GREFFAGE ET POLYMÉRISATION PAR OUVERTURE DE CYCLE (ROP)**

La polymérisation par ouverture de cycles d'esters cycliques produit des polyesters aliphatiques biocompatibles, biodégradables et biorésorbables. Les polymères synthétisés par cette méthode sont les poly(ε-caprolactone), poly (lactide), poly(y-valérolactone), poly(acide glycolique), poly(β-propiolactone). Le poly(ε-caprolactone) est un polymère qui présente l'intérêt d'être miscible à beaucoup d'autres polymères.

La polymérisation s'effectue par un mécanisme de coordination-insertion à partir d'un amorceur de type octoate d'étain ($Sn(oct)_2$) ou triisopropanolate d'aluminium ($Al(OiPr)_3$) ou triéthylaluminium ($AlEt_3$)(cf. schéma 5). Les alcoolates d'aluminium ou d'étain peuvent être formés *in situ* par échange avec des fonctions hydroxyles disponibles. Dans notre cas, la fonction hydroxyle peut être fournie par le sel de diazonium greffé sur la surface de fer (cf. schéma 6).

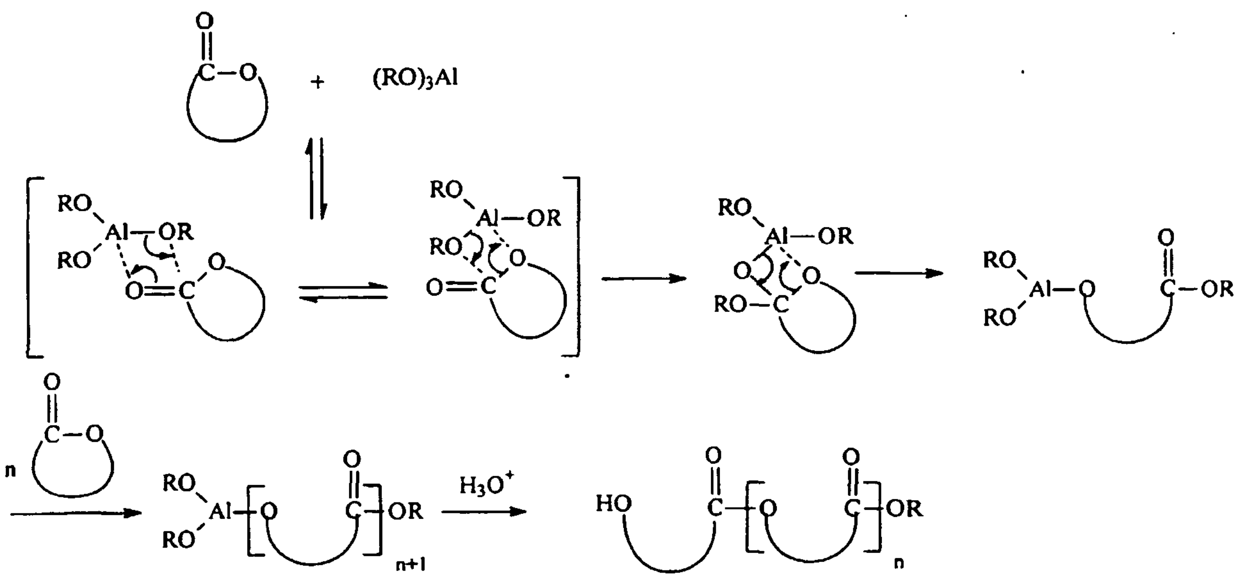


**Schéma 5: Mécanisme de polymérisation par coordination-insertion**

**1. Synthèse et greffage du sel de diazonium**

Nous avons synthétisé le sel de diazonium du 4-aminophénol $^{+}N_2C_6H_4OH$, de l'alcool 4-aminobenzylique $^{+}N_2C_6H_4CH_2OH$ et du 2-(4-aminophenyl)éthanol selon les méthodes classiques de diazotation par $NaNO_2$ en milieu acide $HBF_4$. Ces trois composés présentent en voltammétrie cyclique une vague irréversible et large située respectivement à Ep = -0.28, -0.39, -0.12 V/SCE. Le greffage est effectué en maintenant le potentiel 300 mV plus négatif que le pic pendant 300 s dans ACN + 0,1 M $NBu_4BF_4$. La surface greffée présente par IRRAS le signal caractéristique des groupes alcools à 3380 $cm^{-1}$.

2. Polymérisation par ouverture de cycle à partir des greffons hydroxylés

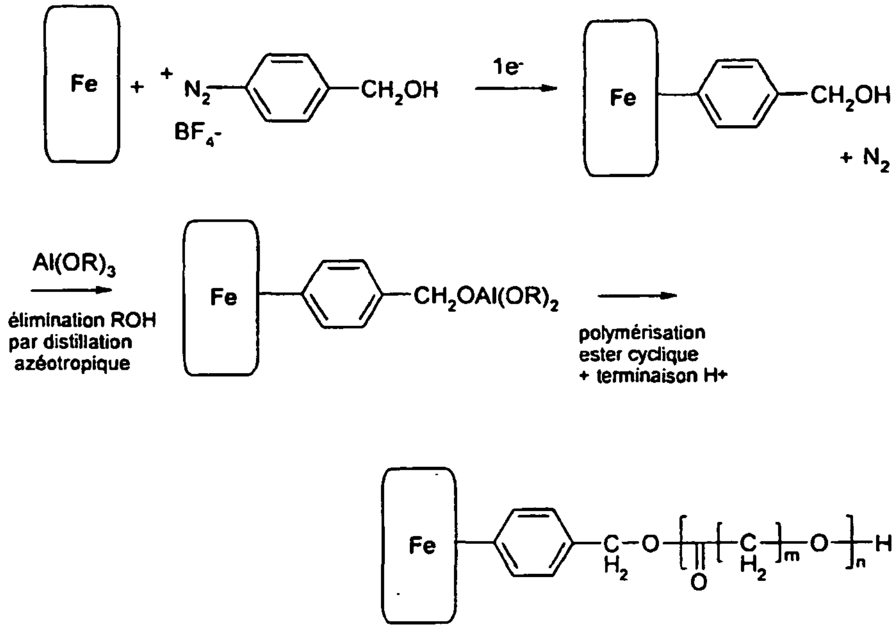


**Schéma 6.**

Les monomères (ε-caprolactone) et le solvant (toluène) sont purifiés par distillation sur $CaH_2$. La plaque de fer contenant les fonctions hydroxyles est purifiée par des distillations azéotropiques du toluène sur paroi froide (élimination des traces d'eau). Les solutions de monomère (ε-caprolactone c = $10^{-2}$ mol $L^{-1}$) et d'amorceur (tri-isopropylate d'aluminium c = $10^{-3}$ mol $L^{-1}$) sont alors ajoutées dans le toluène (20 mL) par un transfert à la canule sous atmosphère inerte d'azote et la polymérisation est réalisée à 100°C pendant 20 heures. La pastille est alors rincée soigneusement pendant 20 minutes sous ultrasons dans le toluène puis l'éther. Un spectre IRRAS de la surface présente un pic caractéristique de la fonction ester à 1730 $cm^{-1}$.

**IV - PROTOCOLE GÉNÉRAL DE PHOTOPOLYMÉRISATION**

Une petite quantité de formulation à polymériser est déposée à l'aide d'une pipette sur une lame inox recouverte d'une sous-couche préalablement électrogreffée. Le film est ensuite formé en étalant la formulation à l'aide d'un « wire-coater » (permettant l'obtention d'une épaisseur donnée). La lame inox est déposée sur une plaque de verre avant d'être exposée à la lumière UV. L'exposition est effectuée à l'aide d'une lampe UV Fusion F300S montée sur un convoyeur modèle LC6E.

Après irradiation, les lames inox sont nettoyés à l'acétone afin d'éliminer tout monomère non polymérisé.

Paramètres pouvant être variés :

Epaisseur du dépôt : 10 ou 26 μm suivant le « wire-coater » utilisé.
Dose de radiation reçue : contrôlée par la vitesse de déroulement du convoyeur ainsi que par le nombre de passes sous la lampe.
Plage d'irradiation : contrôlée par le type de lampe utilisé (H ou D)(Fusion UV Systems, Inc., Maryland, USA).

Les ampoules utilisées sont des ampoules de quartz comportant un mélange de gaz inertes constitué d'argon, de néon et de mercure sous pression moyenne. A l'application d'un courant, la température du mélange augmente et vaporise la faible quantité de mercure présente : un arc de vapeur de mercure est donc généré ; cela correspond à une ampoule de type H avec de maxima d'émissions entre 240-270 nm et 350-380 nm. Les ampoules de type D sont préparées en ajouter un dopant pour modifier les maxima d'émission.

La quantité de radiation reçue par les échantillons ainsi que le choix de la lampe sont dictés par la formulation à polymériser ainsi que par la nature du photoamorceur (PI) électrogreffé.

Exemples :

1) Formule : 79,9% SR610 (polyéthylène glycol 600 diacrylate (monomère pour polymérisation radicalaire) ; Cray-Valley) + 20% SR454 (triméthylolpropane triacrylate éthoxylé (monomère pour polymérisation radicalaire) ; Cray-Valley) + 0,1% triéthanolamine (TEA)

| | |
|---|---|
| photoamorceur (PI) : | benzophénone |
| Epaisseur : | 26 μm |
| Dose : | 20 passes à une vitesse de déroulement du tapis de 2 cm/s |
| Ampoule: | D |

2) Formule : 79,5% SR610 + 20% SR454 + 0,5% TEA

| | |
|---|---|
| PI: | benzophénone |
| Epaisseur : | 26 μm |
| Dose : | 5 passes à une vitesse de déroulement du tapis de 2 cm/s |
| Ampoule: | D |

3) Formule : 79,5% SR610 + 20% SR454 + 0,5% TEA

| | |
|---|---|
| PI: | benzophénone |
| Epaisseur : | 26 μm |
| Dose : | 3 passes à une vitesse de déroulement du tapis de 2 cm/s |
| Ampoule : | D |

4) Formule : 79% SR610 + 20% SR454 + 1 % TEA

| | |
|---|---|
| PI: | benzophénone |
| Epaisseur : | 26 μm |
| Dose : | 2 passes à une vitesse de déroulement du tapis de 2 cm/s |
| Ampoule : | D |

5) Formule : 79% SR610 + 20% SR454 + 1 % TEA

| | |
|---|---|
| PI: | benzophénone |
| Epaisseur : | 26 μm |
| Dose : | 1 passe à une vitesse de déroulement du tapis de 1,5 cm/s |
| Ampoule: | D |

6) Formule : 79,5% SR610 + 20% SR454 + 0,5% TEA

| | |
|---|---|
| PI : | maléimide |
| Epaisseur : | 26 μm |
| Dose : | 5 passes à une vitesse de déroulement du tapis de 2 cm/s |
| Ampoule : | D |

**Synthèse de lames d'inox à partir du sel de diazonium dérivé de la benzophénone**

Les essais sont faits en milieu acide sulfurique 0,1 N et le sel de diazonium dérivé de la benzophénone est utilisé à une concentration de $2.10^{-3}$ M.

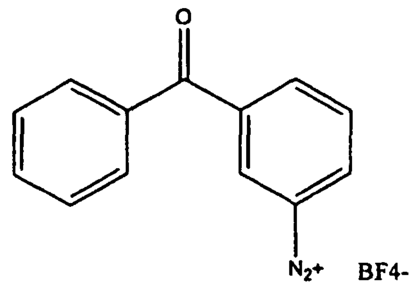

L'électrode de travail est une électrode en inox 316L qui est nettoyée avec un détergent et rincée à l'eau distillée aux ultrasons.

La contre électrode est une feuille de platine. Le rapport de surface entre la contre électrode et l'électrode de travail est d'au moins 3.

L'électrode de référence est une électrode d'argent ($Ag/AgClO_4$).

Un flux continu d'argon dans la solution permet de chasser l'oxygène.

La technique électrochimique de synthèse utilisée est la voltammétrie cyclique. Plusieurs tentatives sont faites en modifiant le potentiel final de balayage, et en gardant les autres paramètres fixes, à savoir une vitesse de balayage de 200 mV/s et un nombre de cycles effectués de 10, le potentiel initial étant le potentiel d'équilibre. Les essais ont été faits avec trois potentiels finaux : -1, -1.3 et -1.5 V/($Ag/Ag^+$).

Et dans les trois cas l'analyse infrarouge nous permet de montrer que la surface d'inox est bien modifiée, par la présence de la bande du carbonyle caractéristique du greffon à 1665 $cm^{-1}$ (C=O), 1600 $cm^{-1}$ (élongation C=C).

**<u>Synthèse de lames d'inox à partir du 4-diazonium N-phénylmaléimide de tétrafluoroborate</u>**

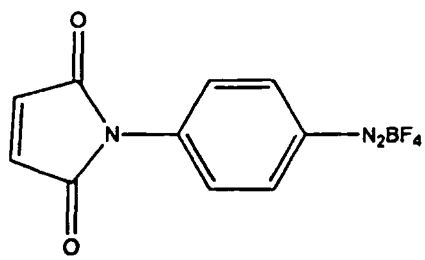

Les essais sont faits en milieu acide sulfurique 0,1 N et le sel de 4-diazonium N-phénylmaléimide de tétrafluoroborate est utilisé à une concentration de $2.10^{-3}$ M.

Les électrodes utilisées sont les mêmes que dans le cas précédent. Un bullage à l'argon est fait dans la solution tout le long des expériences.

La technique électrochimique de synthèse utilisée est la voltammétrie cyclique. Plusieurs tentatives sont faites en modifiant la vitesse de balayage, et en gardant les autres paramètres fixes, à savoir un potentiel final de -1.7 V/($Ag/Ag^+$) et un nombre de cycles effectués de 10, le potentiel initial étant le potentiel d'équilibre. Les essais ont été faits avec trois vitesses de balayage : 20, 50 et 200 mV/s.

Et dans les trois cas l'analyse infrarouge nous permet de montrer que la surface d'inox est bien modifiée, par la présence de la bande du carbonyle caractéristique du greffon à 1730 $cm^{-1}$ (C=O), 1600 et 1535 $cm^{-1}$ (élongation C=C).

**<u>Synthèse de lames d'inox à partir de l'irgacure</u>**

Les essais sont faits en milieu organique, en utilisant le diméthylformamide (DMF) comme solvant, le perchlorate de tétraéthylammonium à une concentration de $5.10^{-2}$ M comme sel de fond, le sel de 4-nitro benzène diazonium à une concentration de $2.10^{-3}$ M comme amorceur de polymérisation et le monomère irgacure (1-[4-(2-hydioxyéthoxy)-phényl]-2-hydroxy-2-méthyl-1-propane-1-one, CIBA) à une concentration de 2 M.

Les électrodes utilisées sont les mêmes que dans les cas précédents.

Un bullage à l'argon est fait dans la solution tout le long des expériences.

La technique électrochimique de synthèse utilisée est la voltammétrie cyclique. Plusieurs tentatives sont faites

en modifiant la vitesse de balayage (20 et 50 mV/s), et le nombre de cycles (10 et 20). Le potentiel final est de -3 V/(Ag/$Ag^+$), et le potentiel initial est le potentiel d'équilibre.

L'analyse infrarouge nous permet de montrer que la surface est bien modifiée par le polymère, car les bandes caractéristiques sont présentes, bien que leur intensité soit assez faible (moins de 1 % de transmittance): 3350 $cm^{-1}$ (OH), 1672 $cm^{-1}$ (C=O), - 1600 $cm^{-1}$ (élongation C=C).

## V - IMMOBILISATION DE L'ALBUMINE DU SÉRUM HUMAIN (HSA) SUR DES SURFACES DE CARBONE VITREUX MODIFIÉES PAR PS ET PMMA

L'immobilisation de la HSA sur des films de PMMA (Polyméthacrylate de Méthyle) et PS (polystyrène) greffés par ATRP (Atom Transfer Radical polymerization) sur des plaques de carbone vitreux traité par 1 (voir exemple I) a été effectuée à température ambiante dans une solution aqueuse (0,1 M $CH_3COONa$-$CH_3COOH$) de pH 5 et avec une concentration de 6 mg/ml en protéine. Les plaques de carbone vitreux recouvertes de brosses de polymères (selon le mode opératoire décrit ci-dessus) ont été incubées dans la solution protéinique, sous agitation, pendant 24 heures. Après incubation, les substrats (plaques sur lesquelles des protéines HSA ont été immobilisées) ont été lavés 3 fois pendant 30 minutes dans une solution aqueuse 5% (v/v) de Tween 20 (surfactant) et ensuite 3 fois avec de l'eau distillée pendant 30 minutes, et cela afin d'éliminer les molécules de protéine physisorbées. Après séchage, les plaques de carbone vitreux modifiées par les brosses de polymères et immobilisant les protéines ont été séchées sous vide pendant une heure et stockées sous ultra vide dans la chambre de préparation de l'installation XPS.

La protéine HSA ainsi immobilisée sur lesdites plaques est adsorbée par des interactions électrostatiques ou des interactions de Van der Waals ou des liaisons hydrogènes.

Les matériaux modifiés selon la présente invention permettent donc de contrôler l'adsorption de protéines avec des brosses de polymères plus ou moins hydrophiles et plus ou moins denses.

Les Figures 15A et 15B présentent les spectres Cls à haute résolution de GC+1+PS, GC+1+PS+HSA, GC+1+PMMA et GC+1+PMMA+HSA. Après immobilisation de HSA, les substrats GC+1+PS et GC+1+PMMA présentent des raies Cls dont les structures fines sont significativement modifiées grâce notamment aux composantes centrées à 286,2 et 288,6 eV, caractéristiques du carbone dans, respectivement, les environnements chimiques C-N/C-O et N-C=O caractéristiques de la protéine physisorbée.

## RÉFÉRENCES

- Adenier, A.; Cabet-Deliry, E.; Lalot, T.; Pinson, J. Podvorica, F. (2002) Chem Mat 14, 4576
- Allongue, P.; Delamar, M.; Desbat, B.; Fagebaume, O.; Hitmi, R.; Pinson, J.; Savéant, J.-M. (1997) J. Am. Chem. Soc., 119, 201
- Anariba, F.A.; DuVall, S.N.; McCreery, R.L. (2003) Anal. Chem., 75, 3837-3844
- Baum, M.; Brittain, J.W. (2002) Macromolecules, 35, 610
- Baute, N.; Martinot, L.; Jérôme, R. (1999) J. Electroanal. Chem., 472, 83
- Beck, F.; Michaelis, R.; Scholten, F.; Zinger, B. (1994) Electrochim. Acta, 39, 229
- Bernard, M.C.; Chaussé, A.; Cabet-Deliry, E.; Chehimi, M.; Pinson, J.; Podvorica, F.; Vautrin-Ul, C. (2003) Chem. Mat., 15, 3450
- Biethan, U. et al. (1991) Paints and Coatings in Ullmann's Encyclopedia of Industrial Chemistry, Vol A18, 5˚ edition, VCH, Weinheim, p.359
- Boenig, H.V. (1984) Plasma Chemical Vapor of Organic Thin Films in Advances in Low-Temperature Plasma Chemistry, Technology, Applications, Boenig, H.V., ed., Technomic Publishing Company, Lancaster (USA), p.183
- Bureau, C.; Defranscheschi, M.; Delhalle, J.; Deniau, G.; Tanguy, J.; Lécayon, G. (1994) Surface Science, 311, 349
- Bureau, C.; Deniau, G.; Viel, P.; Lécayon, G. (1997) Macromolecules, 30, 333
- Calberg, C.; Kroonen, D.; Mertyens, M.; Jérôme, R.; Martinot, L. (1998) Polymer, 39, 23
- Calberg, C.; Mertens, M.; Jérôme R.; Arys, X.; Jonas, A.M.; Legras, R. (1997) Thin Film Solids, 310, 148.
- Charlier, J.; Bureau, C.; Lécayon, G. (1999) J. Electroanal. Chem., 465, 200
- Cheung, K.M.; Bloor, D.; Stevens, G.C. (1988) Polymer, 29, 1709
- Claes, M.; Voccia, S.; Detrembleur, C.; Jérôme, C.; Gilbert, B.; Leclère, Ph.; Geskin, V. M.; Gouttebaron, R.; Hecq, M.; Lazzaroni, R. ; Jérôme, R. (2003) Macromolecules, 36, 5926
- d'Agostino, R. (1997) Plasma Processing of Polymers, Academic Press, New York
- Deniau, G.; Lécayon, G.; Viel, P.; Hennico, G.; Delhalle, J. (1992) Langmuir, 8, 267
- Deniau, G.; Lecayon, G.; Bureau, C.; Tanguy J. (1997) in Protective Coatings and Thin Films Pauleau, Y.; Barna, P.B. Eds, Kluwer Academic, Amsterdam, pp.265-278

- Deniau, G.; Thome, T.; Gaudin, D.; Bureau, C.; Lécayon, G. (1998) J. Electroanal.Chem., 451, 145
- Detrembleur, C.; Jérôme, C.; Claes, M.; Louette P.; Jérôme, R. (2001) Angew. Chem. Int. Ed., 40 (7), 1268
- Doneux, C.; Caudano, R.; Delhalle, J.; Leonard-Stibbe, E.; Charlier, J.; Bureau, C.; Tanguy, G.; Lécayon, G. (1997) Langmuir, 13, 4898
- Edmondson, S.; Osborne, V.L.; Huck, W.T.S. (2004) Chem. Soc. Rev., 33, 14
- Fahys, B.; Herlem, G.; Lakard, B.; Reyber, K.; Trokourey, A.; Diaco, T.; Zairi, S.; Jaffrzic-Renault, N. (2002) Electrochimica Acta, 47,2597
- Ferreira, C.A.; Aeiyach, S.; Aaron, J.J.; Lacaze, P.C. (1996) Electrochim. Acta, 41, 1801
- Ferreira, C.A.; Aeiyach, S.; Delamar, M.; Lacaze, P.C. (1990) J. Electroanal. Chem., 284, 351
- Fraoua, K.; Aeiyach, S.; Aubard, J.; Delamar, M.; Lacaze, P.C.; Ferreira, C.A. (1999) J. Adh. Sci. Tech., 13, 517
- Herlem, G.; Goux, C.; Fahys, B.; Dominati, F.; Gonçalves, A.-M.; Mathieu, C.; Sutter, E.; Trokourey, A.; Penneau, J.F. (1997) J. Electroanal. Chem., 435, 259
- Herlem, G.; Lakard, B.; Fahys, B. (2003) Theochem, 638, 177
- Herlem, G.; Reybier, K.; Trokourey, A.; Fahys, B. (2000) J. Electrochem. Soc., 147,597
- Hochberg, S. (1979) Industrial Coatings in Kirk-Otmer Encyclopedia of Chemical Technology, J. Wiley, New York, p.427
- Husseman, M.; Meccerreyes, D.; Hawker, C.J.; Hedrick, J.L.; Shah, R.; Abbot, N.L. (1999) Angew. Chem. Int Ed., 38, 647
- Jérome, C.; Geskin, V.; Lazzaroni, R.; Bredas, J.L.; Thibault, A.; Calberg, C.; Bodart, I.; Mertens, M.; Martinot, L.; Rodrigue, D.; Riga, J.; Jérôme, R. (2001) Chem. Mat., 13, 1656
- Krstajiċ, B.N.; Grgur, B.N.; Jovanovié, S.M.; Vojnovié, M.V. (1997) Electrochim. Acta, 42, 1685
- Lakard, B.; Herlem, G.; Fahys, B. (2002) Theochem, 593, 133
- Lécayon, G.; Bouizem, Y.; Le Gressus, C.; Reynaud, C.; Boiziau, C.; Juret, C. (1982) Chem Phys. Letters, 91, 506-510
- Lou, X.; Jérôme, C.; Detrembleur, C.; Jérôme, R. (2002) Langmuir, 18, 2785
- Lu, W.K.; Basak, S.; Elsenbaumer, R.L. (1988) Corrosion Inhibition of Metals by Conductive Polymers in Handbook of Conductive Polymers, Chapter 31, Skotherm, T.A.; Elsenbaumer, R.L.; Reynolds, J.R., eds. ; Marcel Dekker, New York, p. 881
- Lund, H.; Hammerich, O. (2001) Organic Electrochemistry, Chapitre 1C, Marcel Dekker, New York;
- McCarley, R.L. (1990) J. Electrochem.Soc., 137, 218C
- Mertens, M.; Calberg, C.; Baute, N.; Jérôme, R.; Martinot, L. (1998) J. Electroanal. Chem., 441, 237
- Otero, T.F.; Angulo, R. (1992) J. Appl. Electrochem., 22, 369
- Plankaert, R. (1994) Surface Coating in Ullmann's Encyclopedia of Industrial Chemistry, Vol A25, 5e edition, VCH, Weinheim, p. 170
- Schirmeisen, M.; Beck, F. (1989) J. Appl. Electrochem., 19, 401
- Su, W.; Iroh, J.O. (1997) Electrochim. Acta, 42, 2685
- Tanguy, J. ; Deniau, G. ; Auge, C. ; Zalczer, G. ; Lécayon, G. (1994) J. Electroanal. Chem., 377, 115
- Tanguy, J.; Deniau, G.; Zalczer, G.; Lécayon, G. (1996) J. Electroanal. Chem., 417, 175
- Tanguy, J.; Viel, P.; Deniau, G.; Lécayon, G. (1993) Electrochim. Acta, 38, 175
- Troch-Nagels, Winand, R.; Weymeersch, A.; Renard, L. (1992) J. Appl. Electrochem., 22, 756
- Vautrin-Ul, C.; Boisse-Laporte, C.; Benissad, N.; Chaussé, A.; Leprince, P.; Messina, R. (2000) Prog. Org. Coating, 38, 9
- Viel, P. ; Bureau, C.; Deniau, G.; Zalczer, G.; Lécayon, G. (1999) J. Electroanal. Chem., 470, 14
- Viel, P.; de Cayeux, S.; Lécayon, G. (1993) Surf. Interface Anal., 20, 468
- Voccia, S.; Jérôme, C.; Detrembleur, C.; Leclère, P.; Gouttebaron, R.; Hecq, M.; Gilbert, B.; Lazzaroni, R.; Jérôme, R. (2003) Chem. Mater., 15, 923-927


## Revendications

**1.** Utilisation d'au moins un sel de diazonium portant une fonction amorceur de polymérisation, d'une part pour la formation d'une sous-couche obtenue par greffage d'un greffon dérivé dudit sel de diazonium et portant une fonction amorceur de polymérisation à la surface d'un matériau conducteur ou semi-conducteur et d'autre part pour la formation sur ladite sous-couche d'une couche polymérique obtenue par polymérisation non anionique *in situ* d'au moins un monomère, initiée à partir de ladite fonction amorceur de polymérisation.

**2.** Utilisation selon la revendication 1, **caractérisée en ce que** la couche polymérique est obtenue par polymérisation radicalaire ou par polymérisation par ouverture de cycle.

3. Utilisation selon la revendication 1 ou 2, **caractérisée en ce que** la couche polymérique est obtenue par l'un des procédés de polymérisation suivants : photopolymérisation, polymérisation radicalaire par transfert d'atome (ATRP), polymérisation par nitroxyde (NMP) ou polymérisation par ouverture de cycles (ROP).

4. Zone conductrice ou semi-conductrice d'intérêt d'un matériau, la surface de ladite zone étant modifiée, et comprenant les couches suivantes :

    - une sous-couche constituée de greffons amorceurs dérivés d'un sel de diazonium et liés à ladite surface, la totalité des liaisons intervenant entre ladite sous-couche et la surface de ladite zone conductrice ou semi-conductrice d'intérêt étant des liaisons covalentes,
    ladite sous-couche étant **caractérisée en ce que** :

        ■ elle présente une épaisseur d'environ 1 nm à environ 1 μm, et de préférence d'environ 3 nm à environ 100 nm,
        ■ les greffons directement liés à la surface de ladite zone conductrice ou semi-conductrice d'intérêt le sont notamment par une liaison atome du greffon-atome de la zone, notamment par une liaison covalente carbone du greffon-atomes de ladite zone,

    - une couche polymérique située sur la susdite sous-couche, constituée d'un polymère résultant de la polymérisation non anionique *in situ* d'au moins un monomère en présence de l'amorceur tel que défini ci-dessus,

    ladite couche polymérique présentant une épaisseur d'environ 0,1 μm à environ 100 μm,
    la couche polymérique couvrant d'environ 80% à environ 100% de la surface de ladite zone conductrice ou semi-conductrice d'intérêt, notamment d'environ 95% à environ 100% de ladite zone.

5. Zone conductrice ou semi-conductrice d'intérêt d'un matériau selon la revendication 4, **caractérisée en ce que** le polymère de la couche polymérique est obtenu par polymérisation radicalaire ou par polymérisation par ouverture de cycle.

6. Zone conductrice ou semi-conductrice d'intérêt d'un matériau selon la revendication 4 ou 5, **caractérisée en ce que** le polymère de la couche polymérique est obtenu par l'un des procédés de polymérisation suivants : photopolymérisation, polymérisation radicalaire par transfert d'atome (ATRP), polymérisation par nitroxyde (NMP) ou polymérisation par ouverture de cycles (ROP).

7. Zone conductrice ou semi-conductrice d'intérêt d'un matériau selon l'une quelconque des revendications 4 à 6, **caractérisée en ce que** la sous-couche présente un taux de pureté d'environ au moins 80%, et notamment d'environ 90% à environ 100%, et est notamment exempte de solvant, de sel de diazonium et de ses dérivés.

8. Zone conductrice ou semi-conductrice d'intérêt d'un matériau selon l'une quelconque des revendications 4 à 7, **caractérisée en ce que** les liaisons intervenant dans les greffons de la sous-couche sont des liaisons non hydrolysables.

9. Zone conductrice ou semi-conductrice d'intérêt d'un matériau selon l'une quelconque des revendications 4 à 8, **caractérisé en ce qu'**il comprend une chaîne de polymère de la couche polymérique par liaison atome du greffon-atome de la zone conductrice ou semi-conductrice d'intérêt, notamment par liaison covalente carbone du greffon-atomes de la zone.

10. Zone conductrice ou semi-conductrice d'intérêt d'un matériau selon l'une quelconque des revendications 4 à 9, **caractérisé en ce que** les chaînes de polymères présentent une masse moléculaire sensiblement identique les unes par rapport aux autres et **en ce que** lesdites chaînes sont liées de façon sensiblement perpendiculaire à la surface dudit matériau, formant ainsi des brosses denses.

11. Zone conductrice ou semi-conductrice d'intérêt d'un matériau selon l'une quelconque des revendications 4 à 10, **caractérisée en ce que** les greffons sont des composés aromatiques, notamment des groupes aryles, dans lesquels le groupe aromatique est un reste aromatique en $C_6$-$C_{20}$, substitué par un ou plusieurs substituants fonctionnels, notamment un atome d'halogène, tel qu'un atome de brome, ou un reste hétéroaromatique de 4 à 20 atomes, substitué par un ou plusieurs substituants fonctionnels, comportant un ou plusieurs hétéaroatomes choisis parmi l'oxygène, l'azote, le soufre ou le phosphore.

**12.** Zone conductrice ou semi-conductrice d'intérêt d'un matériau selon l'une quelconque des revendications 4 à 11, **caractérisée en ce que** la sous-couche se présente sous la forme de greffons composés chacun d'un seul groupe aryle, ce qui correspond à une monocouche.

**13.** Zone conductrice ou semi-conductrice d'intérêt d'un matériau selon l'une quelconque des revendications 4 à 12, **caractérisée en ce que** le monomère est choisi parmi les composés comprenant au moins une double liaison terminale, et notamment le styrène ou les dérivés d'acrylate et de méthacrylate mono- ou multifonctionnels.

**14.** Zone conductrice ou semi-conductrice d'intérêt d'un matériau selon la revendication 13, **caractérisée en ce que** ledit polymère est obtenu par polymérisation radicalaire, notamment radicalaire par transfert d'atome ou par nitroxyde, et **en ce que** l'extrémité de la chaîne dudit polymère contient un groupe fonctionnel, notamment un atome d'halogène ou un groupe nitroxyde, éventuellement substituable par des copolymères à blocs ou des molécules actives telles que des aminoalcools, des allyl alcools, de l'anhydride maléique, des sucres, des acides nucléiques, des peptides, des protéines, des molécules perfluorées ou des molécules à activité pharmaceutique.

**15.** Zone conductrice ou semi-conductrice d'intérêt d'un matériau selon la revendication 13 ou 14, **caractérisée en ce que** ledit polymère est obtenu par polymérisation radicalaire, notamment radicalaire par transfert d'atome, et **en ce que** l'extrémité de la chaîne dudit polymère contient un atome d'halogène, notamment un atome de brome, éventuellement substituable par des copolymères à blocs ou des molécules actives telles que des aminoalcools, des allyl alcools, de l'anhydride maléique, des sucres, des acides nucléiques, des peptides, des protéines, des molécules perfluorées ou des molécules à activité pharmaceutique.

**16.** Zone conductrice ou semi-conductrice d'intérêt d'un matériau selon l'une quelconque des revendications 4 à 15, **caractérisée en ce que** l'amorceur est un dérivé halogéné, notamment bromé ou un dérivé de type alcoxyamine ou un dérivé d'$\alpha$-hydroxy alkylphénone, un dérivé d'$\alpha$-dialcoxy acétophénone, un dérivé d'éther de benzoïne, un dérivé d'$\alpha$-amino alkylphénone, un dérivé de cétone aromatique tel que la benzophénone ou l'anthraquinone, un dérivé de maléimide N-aliphatique ou N-aromatique, un dérivé de xanthate, un dérivé de dithiocarbamate, un dérivé de thioxanthone, un dérivé d'oxyde de phosphine, ou un dérivé d'alcool, de trithiocarbonate ou de dithioester.

**17.** Zone conductrice ou semi-conductrice d'intérêt d'un matériau selon l'une quelconque des revendications 4 à 16, **caractérisée en ce que** les liaisons atomes du greffon-atomes de la zone, notamment les liaisons covalentes carbone-atomes de la zone, entre les greffons de la sous-couche et la surface de ladite zone sont telles qu'elles résistent à un lavage par ultrasons.

**18.** Zone conductrice ou semi-conductrice d'intérêt d'un matériau selon l'une quelconque des revendications 4 à 17, dans laquelle le matériau est choisi parmi les métaux purs ou les alliages, et notamment le fer, le nickel, le platine, l'or, le cuivre, le zinc, le cobalt, le titane, le chrome, l'argent, le tantale, les aciers en particulier inoxydables, les alliages de titane, les alliages de chrome cobalt, le molybdène, le manganèse, le vanadium, le nitinol, ou parmi les semi-conducteurs, notamment le silicium dopé ou non, mono- ou polycristallin, le silicium hydrogéné, le nitrure de tantale, le nitrure de titane, le nitrure de tantale, le carbure de silicium, le phosphure d'indium ou l'arséniure de gallium.

**19.** Procédé de modification de la surface d'une zone conductrice ou semi-conductrice d'intérêt d'un matériau, pour obtenir une zone conductrice ou semi-conductrice dont la surface est modifiée selon l'une des revendications 4 à 18, **caractérisé en ce qu'**il comprend la fixation sur la surface de cette zone d'un greffon amorceur de polymérisation tel que défini dans la revendication 4, en mettant notamment en contact ladite zone conductrice ou semi-conductrice avec une solution d'un sel de diazonium portant une fonction amorceur de polymérisation, et une étape de polymérisation non anionique.

**20.** Procédé de modification de la surface d'une zone conductrice ou semi-conductrice d'intérêt d'un matériau selon la revendication 19, **caractérisé en ce que** la fixation sur la surface de cette zone d'un greffon dérivé d'un amorceur de polymérisation tel que défini dans la revendication 4; est effectuée par une réaction de transfert d'électron hétérogène comprenant la mise en contact de la zone conductrice ou semi-conductrice avec une solution d'un sel'de diazonium portant une fonction amorceur de polymérisation dans un solvant, notamment un solvant aprotique, ou un solvant protique acide pendant un temps suffisant permettant la fixation de la sous-couche de greffons telle que définie dans la revendication 2 sur la surface de ladite zone.

**21.** Procédé de modification de la surface d'une zone conductrice ou semi-conductrice d'intérêt d'un matériau, pour obtenir une zone conductrice ou semi-conductrice dont la surface est modifiée selon l'une des revendications 4 à

18, **caractérisé en ce qu'**il comprend la fixation sur la surface de cette zone d'un greffon amorceur tel que défini dans la revendication 4, par réduction électrochimique d'un sel de diazonium portant une fonction amorceur de polymérisation, en mettant en contact la zone conductrice ou semi-conductrice avec une solution du sel de diazonium dans un solvant, et une étape de polymérisation non anionique.

**22.** Procédé selon l'une des revendications 20 ou 21, **caractérisé en ce que** le sel de diazonium répond à la formule $ArN_2^+ X^-$, dans laquelle Ar représente un groupe aromatique portant une fonction amorceur de polymérisation tel que défini dans la revendication 4 et $X^-$ représente un anion, l'anion $X^-$ du sel de diazonium étant avantageusement choisi parmi les halogènes, les sulfates, les phosphates, les perchlorates, les tétrafluoroborates, les carboxylates et les hexafluorophosphates.

**23.** Procédé de modification de la surface d'une zone conductrice ou semi-conductrice d'intérêt d'un matériau selon la revendication 21, **caractérisé en ce qu'**il comprend les étapes suivantes :

- une étape de fixation sur la surface de ladite zone d'un greffon amorceur de polymérisation tel que défini dans la revendication 4, en mettant en contact la zone conductrice ou semi-conductrice avec une solution d'un sel de diazonium portant une fonction amorceur de polymérisation dans un solvant, ladite étape de fixation étant notamment effectuée par réduction électrochimique du sel de diazonium, permettant l'obtention d'une zone conductrice ou semi-conductrice de surface modifiée par liaison de nature covalente, à sa surface, desdits greffons amorceurs, lesdits greffons formant une sous-couche telle que définie dans la revendication 4, et
- une étape de polymérisation non anionique, notamment par polymérisation radicalaire ou par polymérisation par ouverture de cycle (ROP), ladite réaction de polymérisation non anionique impliquant un monomère tel que défini dans la revendication 13 et la fonction amorceur portée par le greffon de la sous-couche, ce qui aboutit à la formation du polymère constituant la couche polymérique telle que définie dans la revendication 4.

**24.** Procédé de modification de la surface d'une zone conductrice ou semi-conductrice selon la revendication 20, **caractérisé en ce qu'**il comprend les étapes suivantes :

- une étape de fixation sur la surface de ladite zone d'un greffon dérivé d'un sel de diazonium et portant une fonction amorceur de polymérisation tel que défini dans la revendication 4, en mettant en contact la zone conductrice ou semi-conductrice avec une solution dudit sel de diazonium portant ladite fonction amorceur de polymérisation dans un solvant, ladite étape de fixation étant notamment effectuée par réaction de transfert d'électron hétérogène, permettant l'obtention d'une zone conductrice ou semi-conductrice de surface modifiée par liaison de nature covalente à sa surface desdits greffons amorceurs, lesdits greffons formant une sous-couche telle que définie dans la revendication 4, et
- une étape de polymérisations non anionique, notamment par polymérisation radicalaire ou par polymérisation par ouverture de cycle (ROP), ladite réaction de polymérisation non anionique impliquant un monomère tel que défini dans la revendication 13 et l'amorceur dont dérive le greffon de la sous-couche, ce qui aboutit à la formation du polymère constituant la couche polymérique telle que définie dans la revendication 4.

**25.** Utilisation d'une zone conductrice ou semi-conductrice selon l'une quelconque des revendications 4 à 18, pour la préparation :

- d'un objet de forme quelconque constitué de matériau comportant ladite zone, ou
- de surfaces métalliques présentant une résistance accrue vis-à-vis de la corrosion, ou
- de stents, d'implants, de prothèses ou d'éléments utilisables en microélectronique, ou
- de matériaux comportant des zones conductrices ou semi-conductrices présentant une couche supplémentaire, notamment une couche polymérique supplémentaire constituée de copolymères à blocs, ou une couche fonctionnelle supplémentaire constituée de molécules actives telles que des aminoalcools, des allyl alcools, de l'anhydride maléique, des sucres, des acides nucléiques, des peptides ou des protéines.

**26.** Sel de diazonium répondant à l'une des formules chimiques suivantes :

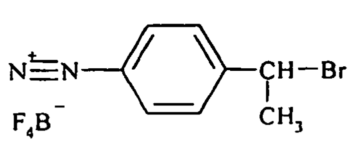

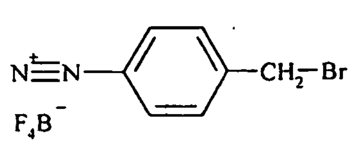

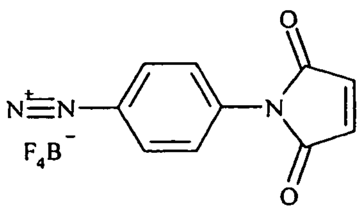

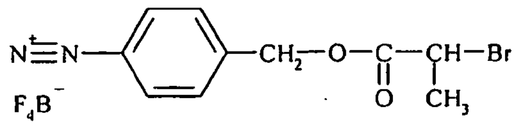

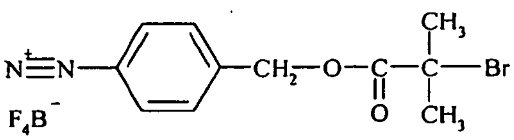

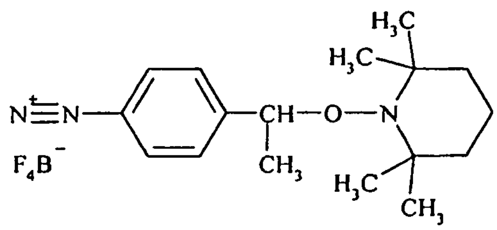

## Claims

1. Use of at least one diazonium salt carrying a polymerization-initiation function, on the one hand for the formation of an under-layer obtained by grafting of a graft derived from said diazonium salt and carrying a polymerization-initiation function on the surface of a conductive or semi-conductive material and on the other hand for the formation on said under-layer of a polymeric layer obtained by non-anionic *in situ* polymerization of at least one monomer, initiated from said polymerization initiator function.

2. Use according to claim 1, **characterized in that** the polymeric layer is obtained by radical polymerization or by ring opening polymerization.

3. Use according to claim 1 or 2, **characterized in that** the polymeric layer is obtained by one of the following methods polymerization: photopolymerization, atom transfer radical polymerization (ATRP), nitroxide mediated polymerization (NMP) or ring opening polymerization (ROP).

4. Conductive or semi-conductive zone of interest of a material, the surface of said zone being modified, and comprising the following layers:

   - an under-layer constituted by initiator grafts derived from a diazonium salt and bonded to said surface, all of the bonds intervening between said under-layer and the surface of said conductive or semi-conductive zone of interest being covalent bonds,
   said under-layer being **characterized in that**:

     ■ it has a thickness of approximately 1 nm to approximately 1 μm, and preferably of approximately 3 nm to approximately 100 nm,
     ■ the grafts directly bonded to the surface of said conductive or semi-conductive zone of interest are bonded in particular by an atom bond of the graft-atom of the zone, in particular by a covalent carbon bond of the graft-atoms of said zone,

   - a polymeric layer situated on the abovementioned under-layer, constituted by a polymer resulting from the *in situ* non-anionic polymerization of at least one monomer in the presence of the initiator as defined above,

   said polymeric layer having a thickness of approximately 0.1 μm to approximately 100 μm,
   the polymeric layer covering from approximately 80% to approximately 100% of the surface of said conductive or semi-conductive zone of interest, in particular from approximately 95% to approximately 100% of said zone.

5. Conductive or semi-conductive zone of interest of a material according to claim 4, **characterized in that** the polymer of the polymeric layer is obtained by radical polymerization or by ring opening polymerization.

6. Conductive or semi-conductive zone of interest of a material according to claim 4 or 5, **characterized in that** the polymer of the polymeric layer is obtained by one of the following polymerization methods: photopolymerization, atom transfer radical polymerization (ATRP), nitroxide mediated polymerization (NMP) or ring opening polymerization (ROP).

7. Conductive or semi-conductive zone of interest of a material according to any one of claims 4 to 6, **characterized in that** the under-layer has a purity level of approximately at least 80%, and in particular of approximately 90% to approximately 100%, and is in particular free of solvent, diazonium salt and its derivatives.

8. Conductive or semi-conductive zone of interest of a material according to any one of claims 4 to 7, **characterized in that** the bonds involved in the grafts of the under-layer are non-hydrolyzable bonds.

9. Conductive or semi-conductive zone of interest of a material according to any one of claims 4 to 8, **characterized in that** it comprises a polymer chain of the polymeric layer by atom bond of the graft-atom of the conductive or semi-conductive zone of interest, in particular by covalent carbon bond of the graft-atoms of the zone.

10. Conductive or semi-conductive zone of interest of a material according to any one of claims 4 to 9, **characterized in that** the polymer chains have a molecular mass substantially identical to one other and **in that** said chains are linked substantially perpendicularly to the surface of said material, thus forming dense brushes.

11. Conductive or semi-conductive zone of interest of a material according to any one of claims 4 to 10, **characterized in that** the grafts are aromatic compounds, in particular aryl groups, in which the aromatic group is a $C_6$-$C_{20}$ aromatic radical, substituted by one or more functional substituents, in particular a halogen atom, such as a bromine atom, or a heteroaromatic radical with 4 to 20 atoms, substituted by one or more functional substituents, comprising one or more hetearoatoms chosen from oxygen, nitrogen, sulphur or phosphorus.

12. Conductive or semi-conductive zone of interest of a material according to any one of claims 4 to 11, **characterized in that** the under-layer is presented in the form of grafts, each composed of a single aryl group, which corresponds to a monolayer.

13. Conductive or semi-conductive zone of interest of a material according to any one of claims 4 to 12, **characterized in that** the monomer is chosen from compounds comprising at least one terminal double bond and in particular styrene or the mono- or multifunctional derivatives of acrylate and methacrylate.

14. Conductive or semi-conductive zone of interest of a material according to claim 13, **characterized in that** said polymer is obtained by radical polymerization, in particular by atom transfer radical or nitroxide polymerization and **in that** the end of the chain of said polymer contains a functional group, in particular a halogen atom or a nitroxide group, which can optionally be substituted by block copolymers or active molecules such as aminoalcohols, allyl alcohols, maleic anhydride, sugars, nucleic acids, peptides, proteins, perfluorinated molecules or molecules with pharmaceutical activity.

15. Conductive or semi-conductive zone of interest of a material according to claim 13 or 14, **characterized in that** said polymer is obtained by radical polymerization, in particular by atom transfer radical polymerization, and **in that** the end of the chain of said polymer contains a halogen atom, in particular a bromine atom, which can optionally be substituted by block copolymers or active molecules such as aminoalcohols, allyl alcohols, maleic anhydride, sugars, nucleic acids, peptides, proteins, perfluorinated molecules or molecules with pharmaceutical activity.

16. Conductive or semi-conductive zone of interest of a material according to any one of claims 4 to 15, **characterized in that** the initiator is a halogenated derivative, in particular brominated or an alkoxyamine-type derivative or an $\alpha$-hydroxy alkylphenone derivative, an $\alpha$-dialkoxy acetophenone derivative, a benzoin ether derivative, an $\alpha$-amino alkylphenone derivative, an aromatic ketone derivative such as benzophenone or anthraquinone, an N-aliphatic or N-aromatic maleimide derivative, a xanthate derivative, a dithiocarbamate derivative, a thioxanthone derivative, a phosphine oxide derivative, or an alcohol, trithiocarbonate or dithioester derivative.

17. Conductive or semi-conductive zone of interest of a material according to any one of claims 4 to 16, **characterized in that** the atom bonds of the graft-atoms of the zone, in particular the covalent carbon-atom bonds of the zone, between the grafts of the under-layer and the surface of said zone are such that they resist ultrasonic washing.

**18.** Conductive or semi-conductive zone of interest of a material according to any one of claims 4 to 17, in which the material is chosen from pure metals or alloys, and in particular iron, nickel, platinum, gold, copper, zinc, cobalt, titanium, chromium, silver, tantalum, steel, in particular stainless steels, titanium alloys, cobalt-chromium alloys, molybdenum, manganese, vanadium, nitinol, or from the semi-conductors, in particular mono- or polycrystalline, doped or undoped silicon, hydrogenated silicon, tantalum nitride, titanium nitride, tantalum nitride, silicon carbide, indium phosphide or gallium arsenide.

**19.** Method for the modification of the surface of a conductive or semi-conductive zone of interest of a material, in order to obtain a conductive or semi-conductive zone the surface of which is modified according to one of claims 4 to 18, **characterized in that** it comprises the binding onto the surface of this zone of a polymerization initiator graft as defined in claim 4, in particular by bringing said conductive or semi-conductive zone into contact with a diazonium salt solution carrying a polymerization initiator function and a stage of non-anionic polymerization.

**20.** Method for the modification of the surface of a conductive or semi-conductive zone of interest of a material according to claim 19, **characterized in that** the binding onto the surface of this zone of a graft derived from a polymerization initiator as defined in claim 4, is carried out by a heterogeneous electron transfer reaction comprising bringing the conductive or semi-conductive zone into contact with a diazonium salt solution carrying a polymerization initiator function in a solvent, in particular an aprotic solvent, or a protic acid solvent for a sufficient time allowing the binding of the under-layer of grafts as defined in claim 2 onto the surface of said zone.

**21.** Method for the modification of the surface of a conductive or semi-conductive zone of interest of a material, in order to obtain a conductive or semi-conductive zone the surface of which is modified according to one of claims 4 to 18, **characterized in that** it comprises the binding onto the surface of this zone of an initiator graft as defined in claim 4, by electrochemical reduction of a diazonium salt carrying a polymerization initiator function, by bringing the conductive or semi-conductive zone into contact with a solution of the diazonium salt in a solvent and a stage of non-anionic polymerization.

**22.** Process according to one of claims 20 or 21, **characterized in that** the diazonium salt corresponds to the formula $ArN_2^+ X^-$, in which Ar represents an aromatic group carrying a polymerization initiator function as defined in claim 4 and $X^-$ represents an anion, the anion $X^-$ of the diazonium salt being advantageously chosen from the halogens, sulphates, phosphates, perchlorates, tetrafluoroborates, carboxylates and hexafluorophosphates.

**23.** Method for the modification of the surface of a conductive or semi-conductive zone of interest of a material according to claim 21, **characterized in that** it comprises the following stages:

- a stage of binding onto the surface of said zone a polymerization initiator graft as defined in claim 4 by bringing the conductive or semi-conductive zone into contact with a diazonium salt solution carrying a polymerization initiator function in a solvent, said binding stage being in particular carried out by electrochemical reduction of the diazonium salt, making it possible to obtain a conductive or semi-conductive zone with a surface modified by covalent binding of said initiator grafts onto its surface, said grafts forming an under-layer as defined in claim 4, and
- a stage of non-anionic polymerization, in particular radical or ring opening (ROP), said non-anionic polymerization reaction involving a monomer as defined in claim 13 and the initiator function carried by the graft of the under-layer, which leads to the formation of the polymer constituting the polymeric layer as defined in claim 4.

**24.** Method for the modification of the surface of a conductive or semi-conductive zone according to claim 20, **characterized in that** it comprises the following stages:

- a stage of binding onto the surface of said zone a graft derived from a diazonium salt and carrying a polymerization initiator function as defined in claim 4 by bringing the conductive or semi-conductive zone into contact with a solution of said diazonium salt carrying a polymerization initiator function in a solvent, said binding stage being in particular carried out by heterogeneous electron transfer reaction, making it possible to obtain a conductive or semi-conductive zone with a surface modified by covalent binding of said initiator grafts onto its surface, said grafts forming an under-layer as defined in claim 4, and
- a stage of non-anionic polymerization, in particular by radical or by ring opening polymerization (ROP), said non-anionic polymerization reaction involving a monomer as defined in claim 13 and the initiator from which the graft of the under-layer derives, which leads to the formation of the polymer constituting the polymeric layer as defined in claim 4.

**25.** Use of a conductive or semi-conductive zone according to any one of claims 4 to 18, for the preparation of:

- an object of any form whatever constituted by material comprising said zone, or
- metallic surfaces having enhanced resistance to corrosion, or
- stents, implants, prostheses or elements which can be used in microelectronics, or
- materials comprising conductive or semi-conductive zones having an additional layer, in particular an additional polymeric layer constituted by block copolymers, or an additional functional layer constituted by active molecules such as aminoalcohols, allyl alcohols, maleic anhydride, sugars, nucleic acids, peptides or proteins.

**26.** Diazonium salt corresponding to one of the following chemical formulae:

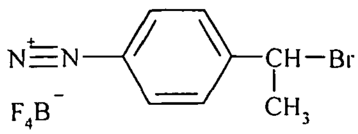

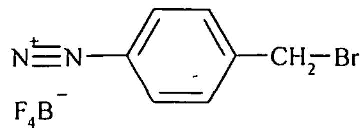

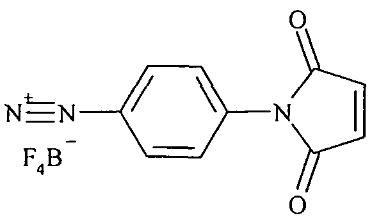

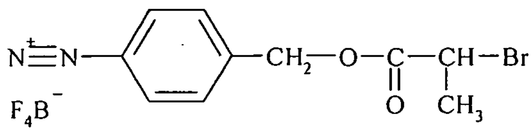

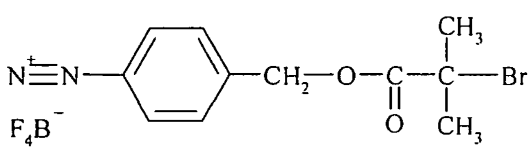

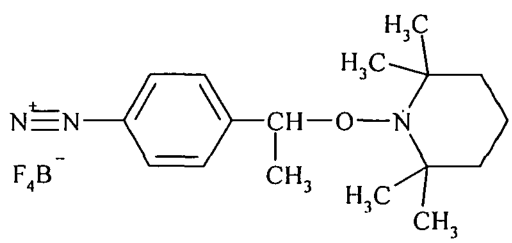

**Patentansprüche**

**1.** Verwendung mindestens eines Diazoniumsalzes, das eine Polymerisationsinitiatorfunktion trägt, einerseits zur Bildung einer Unterschicht, die durch Pfropfen eines Pfropfens, der von dem Diazoniumsalz abgeleitet ist, erhalten wird und der eine Polymerisationsinitiatorfunktion trägt, auf der Oberfläche eines leitenden oder halbleitenden Materials und andererseits zur Bildung einer Polymerschicht auf der Unterschicht, die *in* situ durch nicht anionische Polymerisation mindestens eines Monomers erhalten wird, die von der Polymerisationsinitiationsfunktion initiiert wird.

**2.** Verwendung nach Anspruch 1, **dadurch gekennzeichnet, dass** die Polymerschicht durch radikalische Polymerisation oder durch ringöffnende Polymerisation erhalten wird.

**3.** Verwendung nach Anspruch 1 oder 2, **dadurch gekennzeichnet, dass** die Polymerschicht durch eines der folgenden Polymerisierungsverfahren erhalten wird: Photopolymerisation, radikalische Polymerisation mit Atomtransfer (ATRP), Nitroxid-vermittelte Polymerisation (NMP) oder ringöffnende Polymerisation (ROP).

**4.** Interessierender leitender oder halbleitender Bereich eines Materials, wobei die Oberfläche des Bereichs modifiziert ist und die folgenden Schichten umfasst:

- eine Unterschicht, die aus Initiatorpfropfen besteht, die von einem Diazoniumsalz abgeleitet und an die Oberfläche gebunden sind, wobei die Gesamtheit der Bindungen, die zwischen der Unterschicht und der Oberfläche des interessierenden leitenden oder halbleitenden Bereichs zustande kommen, kovalente Bindungen sind, wobei die Unterschicht **dadurch gekennzeichnet ist, dass**:

- sie eine Dicke von etwa 1 nm bis etwa 1 μm und bevorzugt von etwa 3 nm bis etwa 100 nm aufweist,
- die Pfropfen, die direkt an die Oberfläche des interessierenden halbleitenden oder leitenden Bereichs gebunden sind, insbesondere.durch eine Atombindung zwischen dem Pfropfen und dem Atom des Bereichs, insbesondere durch eine kovalente Bindung zwischen dem Kohlenstoff des Pfropfens und den Atomen des Bereichs gebunden sind,

- eine Polymerschicht, die auf der Unterschicht angeordnet ist, aus einem Polymer besteht, das aus der nicht anionischen Polymerisation mindestens eines Monomers in Gegenwart des Initiators *in situ* resultiert, wie oben definiert,

die Polymerschicht eine Dicke von etwa 0,1 μm bis etwa 100 μm aufweist,
wobei die Polymerschicht etwa 80 % bis etwa 100 % der Oberfläche des interessierenden halbleitenden oder leitenden Bereichs, insbesondere etwa 95 % bis etwa 100 % des Bereichs bedeckt.

**5.** Interessierender halbleitender oder leitender Bereich eines Materials nach Anspruch 4, **dadurch gekennzeichnet, dass** das Polymer der Polymerschicht durch radikalische Polymerisation oder durch ringöffnende Polymerisation erhalten wird.

**6.** Interessierender halbleitender oder leitender Bereich eines Materials nach Anspruch 4 oder 5, **dadurch gekennzeichnet, dass** das Polymer der Polymerschicht durch eines der folgenden Polymerisationsverfahren erhalten wird: Photopolymerisation, radikalische Polymerisation mit Atomtransfer (ATRP), Nitroxid-vermittelte Polymerisation (NMP) oder ringöffnende Polymerisation (ROP).

**7.** Interessierender halbleitender oder leitender Bereich eines Materials nach irgendeinem der Ansprüche 4 bis 6, **dadurch gekennzeichnet, dass** die Unterschicht einen Reinheitsgrad von etwa mindestens 80 % und insbesondere etwa 90 % bis etwa 100 % aufweist und insbesondere frei von Lösemittel, Diazoniumsalz und dessen Derivaten ist.

**8.** Interessierender halbleitender oder leitender Bereich eines Materials nach einem der Ansprüche 4 bis 7, **dadurch gekennzeichnet, dass** die Bindungen, die in den Pfropfen der Unterschicht zustande kommen, nicht hydrolysierbare Bindungen sind.

**9.** Interessierender halbleitender oder leitender Bereich eines Materials nach irgendeinem der Ansprüche 4 bis 8, **dadurch gekennzeichnet, dass** er eine Polymerkette der Polymerschicht durch Bindung zwischen dem Atom des Pfropfens und dem Atom des interessierenden halbleitenden oder leitenden Bereichs, insbesondere durch kovalente Bindung zwischen dem Kohlenstoff des Pfropfens und dem Atom des Bereichs umfasst.

**10.** Interessierender halbleitender oder leitender Bereich eines Materials nach irgendeinem der Ansprüche 4 bis 9, **dadurch gekennzeichnet, dass** die Polymerketten untereinander eine im Wesentlichen identische Molekülmasse aufweisen und dass die Ketten im Wesentlichen senkrecht an die Oberfläche des Materials gebunden sind, wodurch sie dichte Bürsten bilden.

**11.** Interessierender halbleitender oder leitender Bereich eines Materials nach irgendeinem der Ansprüche 4 bis 10, **dadurch gekennzeichnet, dass** die Pfropfen aromatische Verbindungen, insbesondere Arylgruppen, sind, wobei die aromatische Gruppe ein aromatischer $C_6$-$C_{20}$-Rest, der mit einem oder mehreren funktionellen Substituenten substituiert ist, insbesondere einem Halogenatom, wie etwa einem Bromatom, oder ein heteroaromätischer Rest mit 4 bis 20 Atomen ist, der mit einem oder mehreren funktionellen Substituenten substituiert ist, der einen oder mehrere Heteroatome, ausgewählt aus Sauerstoff, Stickstoff, Schwefel oder Phosphor, umfasst.

**12.** Interessierender halbleitender oder leitender Bereich eines Materials nach einem der Ansprüche 4 bis 11, **dadurch gekennzeichnet, dass** die Unterschicht die Form von Pfropfen ausweist, die jeweils aus einer einzigen Arylgruppe bestehen, was einer einlagigen Schicht entspricht.

**13.** Interessierender halbleitender oder leitender Bereich eines Materials nach irgendeinem der Ansprüche 4 bis 12, **dadurch gekennzeichnet, dass** das Monomer aus den Verbindungen ausgewählt ist, die mindestens eine terminale

Doppelbindung und insbesondere Styren, oder mono- oder multifunktionelle Acrylat- und Methacrylatderivate umfassen.

**14.** Interessierender halbleitender oder leitender Bereich eines Materials nach Anspruch 13, **dadurch gekennzeichnet, dass** das Polymer durch radikalische Polymerisation, insbesondere radikalische Polymerisation mit Atomtransfer oder Nitroxid-vermittelte Polymerisation erhalten wird, und dadurch, dass das Kettenende des Polymers eine funktionelle Gruppe enthält, insbesondere ein Halogenatom oder eine Nitroxidgruppe, das/die gegebenenfalls mit Blockcopolymeren oder aktiven Molekülen substituierbar ist/sind, wie etwa Aminoalkoholen, Allylalkoholen, Maleinsäureanhydrid, Zuckern, Nukleinsäuren, Peptiden, Proteinen, perfluorierten Molekülen oder Molekülen mit pharmazeutischer Aktivität.

**15.** Interessierender halbleitender oder leitender Bereich eines Materials nach Anspruch 13 oder 14, **dadurch gekennzeichnet, dass** das Polymer durch radikalische Polymerisation, insbesondere radikalische Polymerisation mit Atomtransfer oder Nitroxid-vermittelte Polymerisation erhalten wird, und dadurch, dass das Kettenende des Polymers ein Halogenatom, insbesondere ein Bromatom enthält, das gegebenenfalls mit Blockcopolymeren oder aktiven Molekülen substituierbar ist, wie etwa Aminoalkoholen, Allylalkoholen, Maleinsäureanhydrid, Zuckern, Nukleinsäuren, Peptiden, Proteinen, perfluorierten Molekülen oder Molekülen mit pharmazeutischer Aktivität.

**16.** Interessierender halbleitender oder leitender Bereich eines Materials nach einem der Ansprüche 4 bis 15, **dadurch gekennzeichnet, dass** der Initiator ein halogeniertes, insbesondere bromiertes Derivat ist, oder ein Derivat vom Typ Alcoxyamin oder ein $\alpha$-Hydroxyalkylphenonderivat, ein $\alpha$-Dialcoxyacetophenonderivat, ein Benzoinetherderivat, ein $\alpha$-Aminoalkylphenonderivat, ein aromatisches Ketonderivat, wie etwa Benzophenon oder Anthrachnon, ein N-aliphatisches oder N-aromatisches Maleinimidderivat, Xanthatderivat, ein Dithiocarbamatderivat, ein Thioxanthonderivat, ein Phosphinoxidderivat oder ein Alkohol-, Trithiocarbonat- oder Dithioesterderivat.

**17.** Interessierender halbleitender oder leitender Bereich eines Materials nach irgendeinem der Ansprüche 4 bis 16, **dadurch gekennzeichnet, dass** die Bindungen zwischen den Atomen des Pfropfens und den Atomen des Bereichs, insbesondere die kovalenten Bindungen zwischen dem Kohlenstoff und den Atomen des Bereichs zwischen der Unterschicht und der Oberfläche des Bereichs so sind, dass sie gegen eine Ultraschallwäsche beständig sind.

**18.** Interessierender halbleitender oder leitender Bereich eines Materials nach irgendeinem der Ansprüche 4 bis 17, wobei das Material ausgewählt ist aus reinen Metallen oder Legierungen, und insbesondere aus Eisen, Nickel, Platin, Gold, Kupfer, Zink, Cobalt, Titan, Chrom, Silber, Tantal, insbesondere nicht rostenden Stählen, Titanlegierungen, Chrom-Cobalt-Legierungen, Molybdän, Mangan, Vanadium, Nitinol, oder aus Halbleitern, insbesondere mono- oder polykristallinem dotiertem oder nicht dotiertem Silicium, hydrogeniertem Silicium, Tantalnitrid, Titannitrid, Tantalnitrid, Siliciumcarbid, Indiumphosphid oder Galliumarsenid.

**19.** Verfahren zur Modifikation der Oberfläche eines interessierenden halbleitenden oder leitenden Bereichs eines Materials, um einen halbleitender oder leitender Bereich zu erhalten, dessen Oberfläche nach einem der Ansprüche 4 bis 18 modifiziert ist, **dadurch gekennzeichnet, dass** es die Fixierung eines Polymerisationsinitiatorpropfens, wie in Anspruch 4 definiert, auf der Oberfläche dieses Bereichs umfasst, indem der halbleitende oder leitende Bereich insbesondere mit einer Lösung eines Diazoniumsalzes, das eine Polymerisationsinitiatorfunktion trägt, in Kontakt gebracht wird und einen Schritt zur nicht anionischen Polymerisation.

**20.** Verfahren zur Modifikation der Oberfläche eines interessierenden halbleitenden oder leitenden Bereichs eines Materials nach Anspruch 19, **dadurch gekennzeichnet, dass** die Fixierung auf der Oberfläche dieses Bereichs mit einem Pfropfen, der von einem Polymerisationsinitiator abgeleitet ist, wie in Anspruch 4 definiert, mittels einer heterogenen Elektronenübertragungsreaktion durchgeführt wird, die das In-Kontakt-Bringen des halbleitenden oder leitenden Bereichs mit einer Lösung aus eines Diazoniumsalz, das eine Polymerisationsinitiatorfunktion trägt, in einem Lösemittel, insbesondere einem aprotischen Lösemittel oder einem protischen sauren Lösemittel für einen Zeitraum umfasst, der ausreichend ist, um die Fixierung der Unterschicht der Pfropfen, wie in Anspruch 2 definiert, auf der Oberfläche des Bereichs zu ermöglichen.

**21.** Verfahren zur Modifikation der Oberfläche eines interessierenden halbleitenden oder leitenden Bereichs eines Materials, um einen halbleitender oder leitender Bereich zu erhalten, dessen Oberfläche nach einem der Ansprüche 4 bis 18 modifiziert ist, **dadurch gekennzeichnet, dass** es die Fixierung eines Polymerisationsinitiatorpropfens, wie in Anspruch 4 definiert, auf der Oberfläche dieses Bereichs durch elektrochemische Reduktion eines Diazoniumsalzes, das eine Polymerisationsinitiatorfunktion trägt, umfasst, indem der halbleitende oder leitende Bereich

mit einer Lösung des Diazoniumsalzes in einem Lösemittel in Kontakt gebracht wird und einen Schritt zur nicht anionischen Polymerisation.

**22.** Verfahren nach einem der Ansprüche 20 oder 21, **dadurch gekennzeichnet, dass** das Diazoniumsalz die Formel $ArN_2^+X^-$ aufweist, wobei Ar für eine aromatische Gruppe steht, die eine Polymerisationsinitiatorfunktion trägt, wie in Anspruch 4 definiert, und $X^-$ für ein Anion steht, wobei das Anion $X^-$ des Diazoniumsalzes vorteilhafterweise aus Halogenen, Sulfaten, Phosphaten, Perchloraten, Tetrafluorboraten, Carboxylaten und Hexafluorphosphaten ausgewählt ist.

**23.** Verfahren zur Modifikation der Oberfläche eines interessierenden halbleitenden oder leitenden Bereichs eines Materials nach Anspruch 21, **dadurch gekennzeichnet, dass** es die folgenden Schritte umfasst:

- einen Schritt zur Fixierung eines Polymerisationsinitiatorpfropfens, wie in Anspruch 4 definiert, auf der Oberfläche des Bereichs, indem der halbleitende oder leitende Bereich mit einer Lösung eines Diazoniumsalzes, das eine Polymerisationsinitiatorfunktion trägt, in einem Lösemittel, in Kontakt gebracht wird, wobei der Schritt zur Fixierung insbesondere durch elektrochemische Reduktion des Diazoniumsalzes durchgeführt wird, das den Erhalt eines halbleitenden oder leitenden Bereichs der modifizierten Oberfläche durch eine Bindung kovalenter Art der Initiatorpfropfen auf seiner Oberfläche ermöglicht, wobei die Pfropfen eine Unterschicht bilden, wie in Anspruch 4 definiert, und
- einen Schritt zur nicht anionischen Polymerisation, insbesondere durch radikalische Polymerisation oder durch ringöffnende Polymerisation (ROP), wobei an der nicht anionischen Polymerisationsreaktion ein Monomer, wie in Anspruch 13 definiert, und die Initiatorfunktion, die von dem Pfropfen der Unterschicht getragen wird, beteiligt sind zur Bildung des Polymers führt, das die Polymerschicht bildet, wie in Anspruch 4 definiert.

**24.** Verfahren zur Modifikation der Oberfläche eines halbleitenden oder leitenden Bereichs nach Anspruch 20, **dadurch gekennzeichnet, dass** es die folgenden Schritte umfasst:

- einen Schritt zur Fixierung eines Pfropfens, der von einem Diazoniumsalz abgeleitet ist und der eine Polymerisationsinitiatorfunktion trägt, wie in Anspruch 4 definiert, auf der Oberfläche des Bereichs, indem der halbleitende oder leitende Bereich mit einer Lösung eines Diazoniumsalzes, das eine Polymerisationsinitiatorfunktion trägt, in einem Lösemittel, in Kontakt gebracht wird, wobei der Schritt zur Fixierung insbesondere durch heterogene Elektronenübertragungsreaktion durchgeführt wird, die den Erhalt eines halbleitenden oder leitenden Bereichs der Oberfläche, die durch eine Bindung kovalenter Art der Initiatorpfropfen auf ihrer Oberfläche modifiziert ist, ermöglicht, wobei die Pfropfen eine Unterschicht bilden, wie in Anspruch 4 definiert, und
- einen Schritt zur nicht anionischen Polymerisation, insbesondere durch radikalische Polymerisation oder durch ringöffnende Polymerisation (ROP), wobei an der nicht anionischen Polymerisationsreaktion ein Monomer, wie in Anspruch 13 definiert, und der Initiator von dem sich der Pfropfen der Unterschicht ableitet, beteiligt sind, was zur Bildung des Polymers führt, das die Polymerschicht bildet, wie in Anspruch 4 definiert.

**25.** Verwendung eines halbleitenden oder leitenden Bereichs nach irgendeinem der Ansprüche 4 bis 18 zur Herstellung:

- eines Objekts beliebiger Form, das aus einem Material besteht, das den Bereich umfasst, oder
- von metallischen Oberflächen, die eine erhöhte Beständigkeit gegen Korrosion aufweisen, oder
- von Stents, Implantaten, Prothesen oder Elementen, die in der Mikroelektronik verwendbar sind, oder
- von Materialien, die halbleitende oder leitende Bereiche umfassen, die eine zusätzliche Schicht aufweisen, insbesondere eine zusätzliche Polymerschicht, die aus Blockcopolymeren besteht, oder eine zusätzlich funktionelle Schicht, die aus aktiven Molekülen, wie etwa Aminoalkoholen, Allylalkoholen, Maleinsäureanhydrid, Zuckern, Nukleinsäuren, Peptiden oder Proteinen, besteht.

**26.** Diazoniumsalz mit einer der folgenden chemischen Formeln:

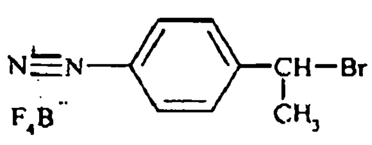

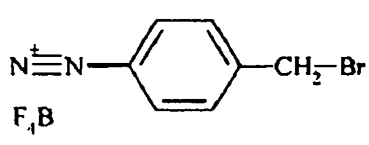

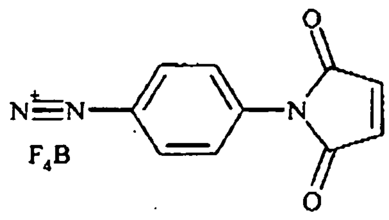

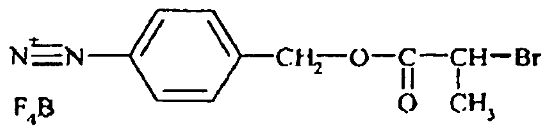

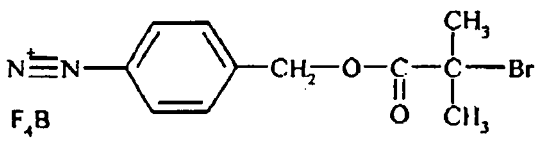

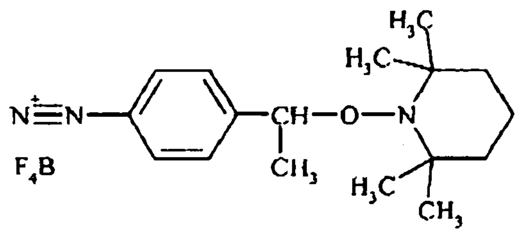

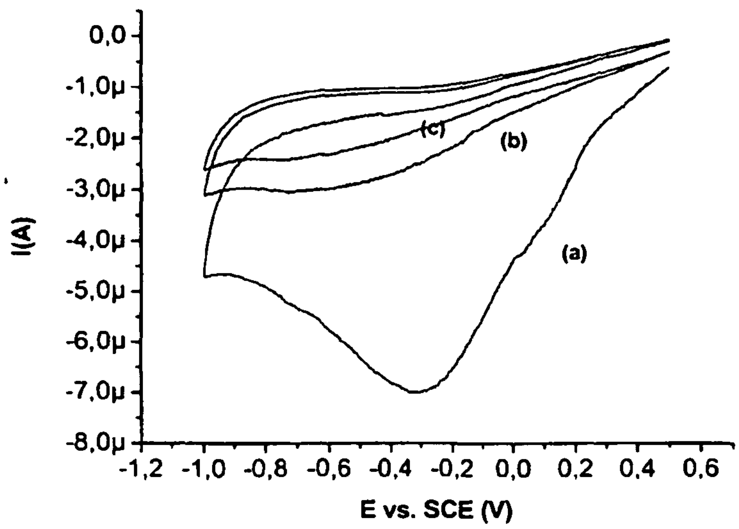


**FIGURE 1**

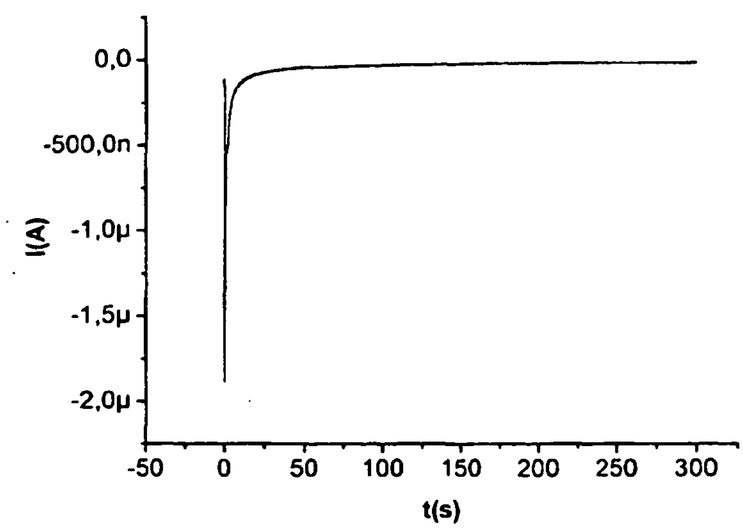


**FIGURE 2**

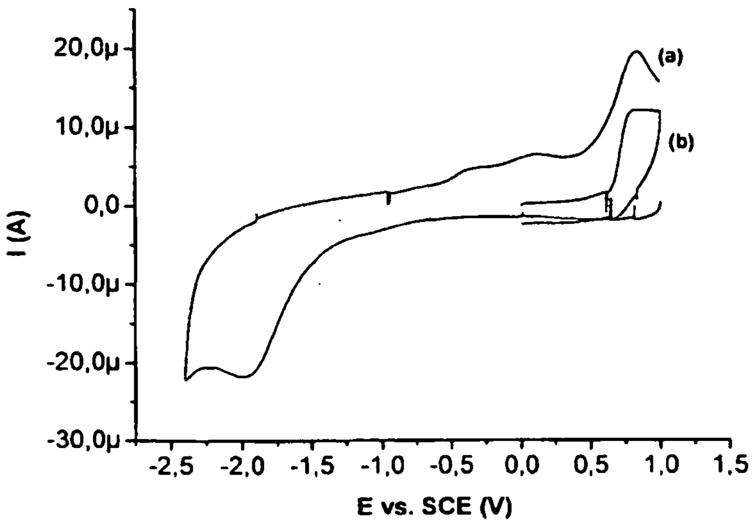


FIGURE 3

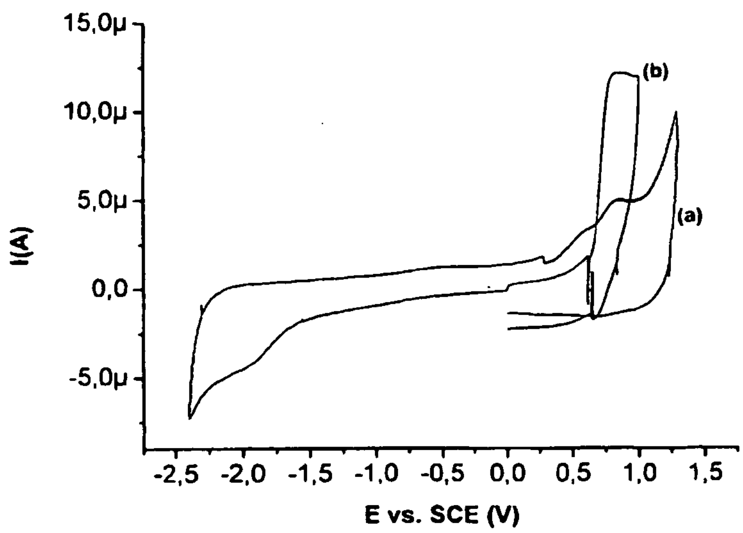


FIGURE 4

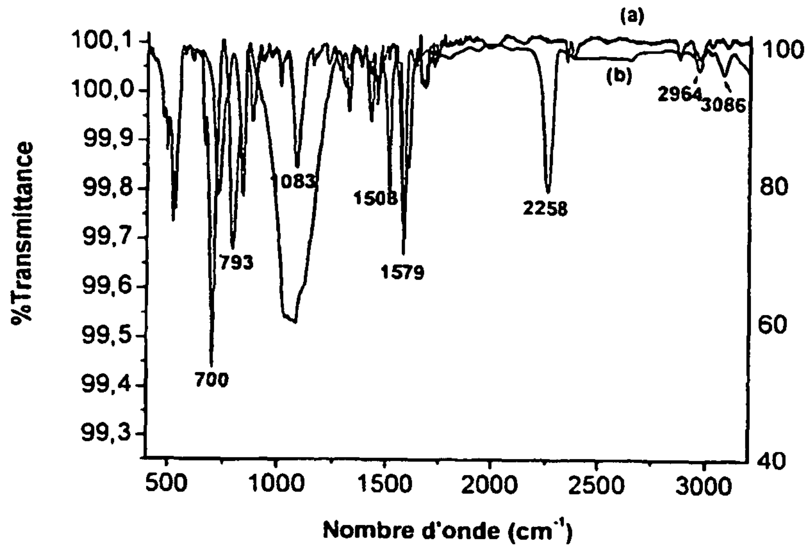


FIGURE 5

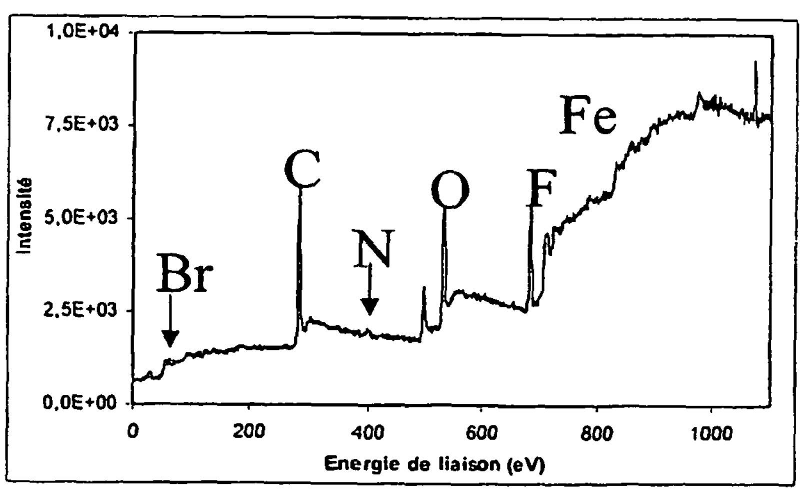


FIGURE 6

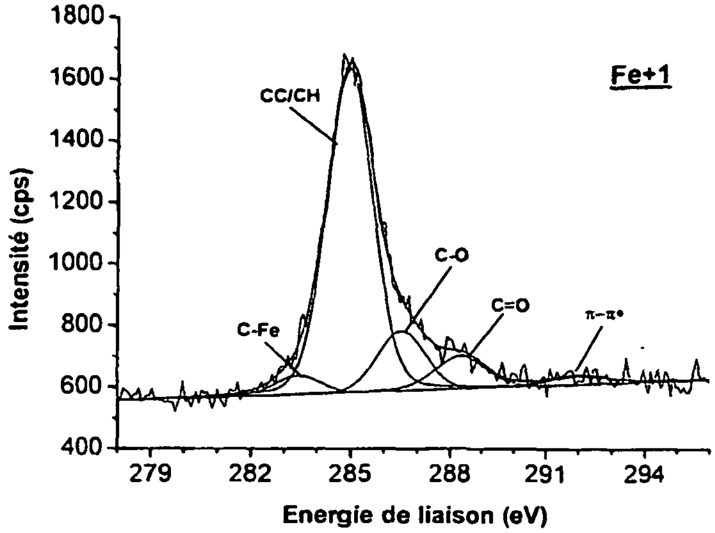

1800
1600
1400
1200
1000
800
600
400
Intensité (cps)
CC/CH
Fe+1
C-O
C=O
π-π*
C-Fe
279
282
285
288
291
294
Energie de liaison (eV)


FIGURE 7

FIGURE 8A

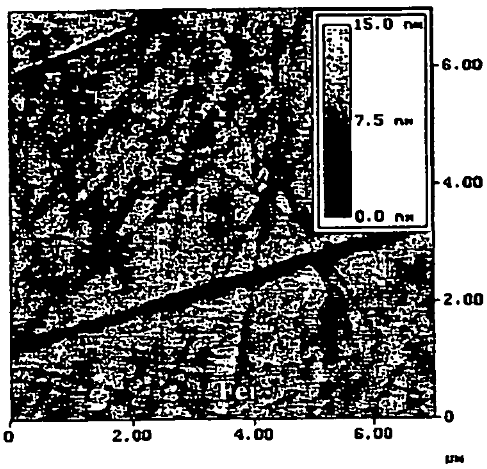


FIGURE 8B

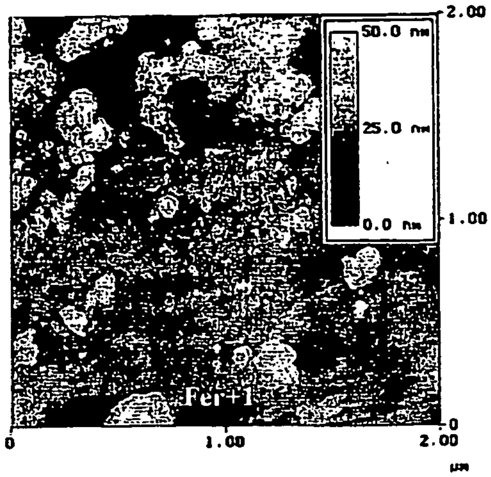


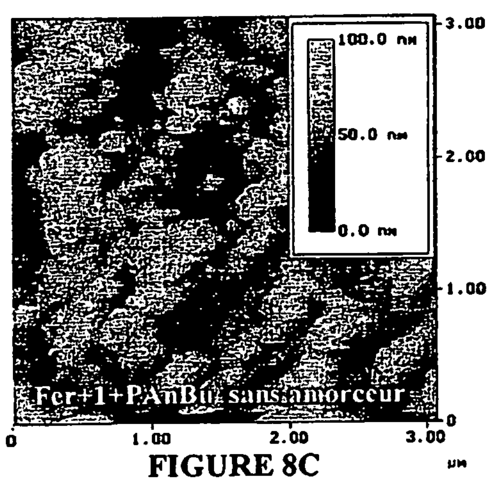


FIGURE 8C

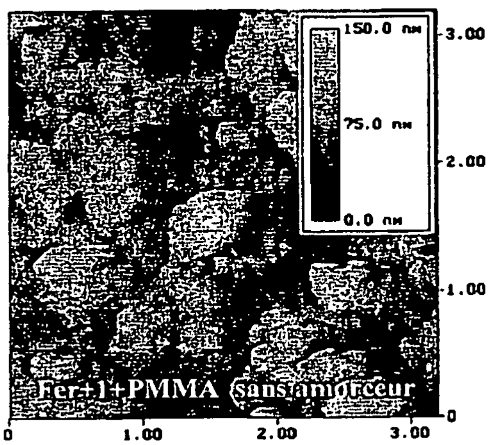


FIGURE 8D

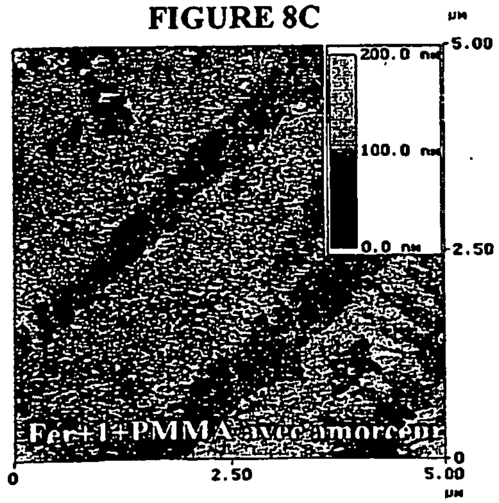


FIGURE 8E

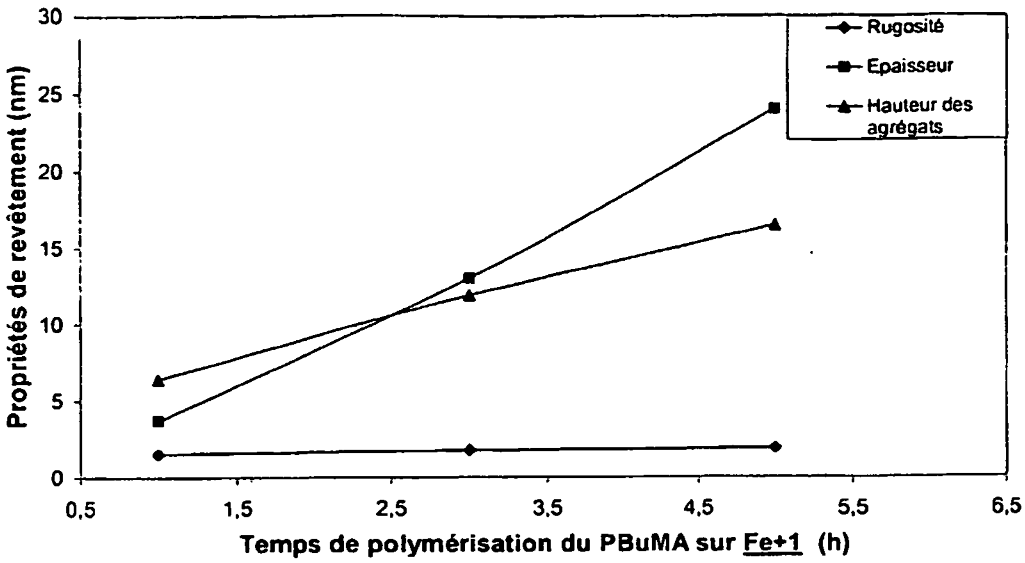


FIGURE 9

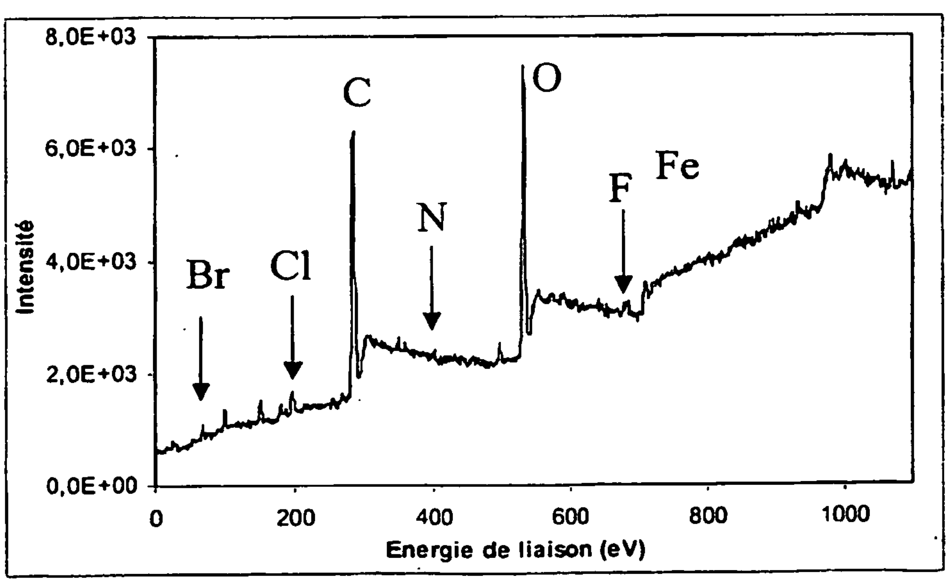


FIGURE 10

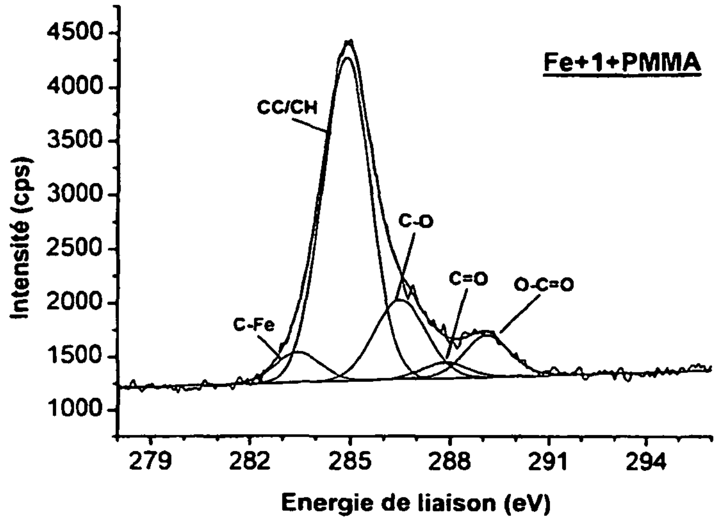


FIGURE 11

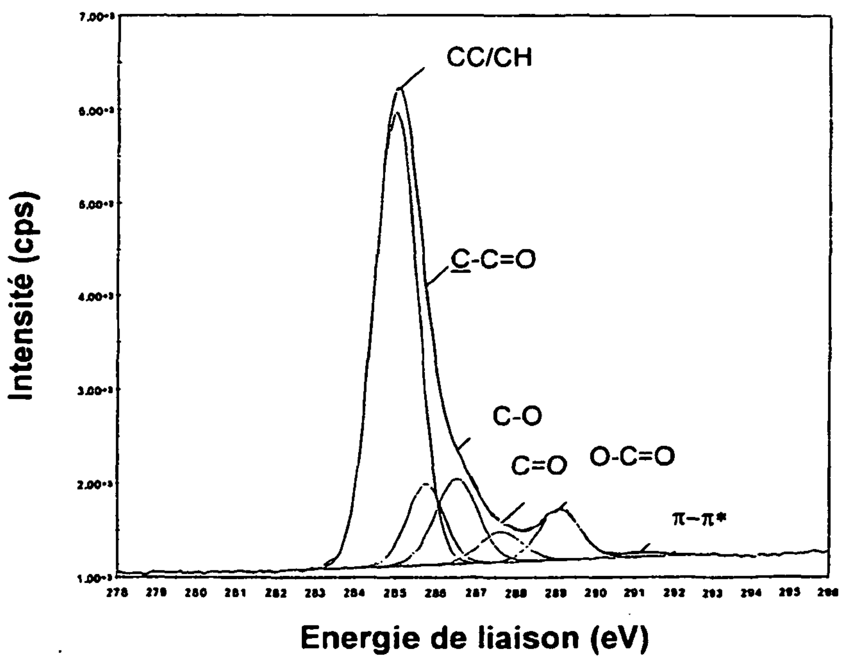


FIGURE 12

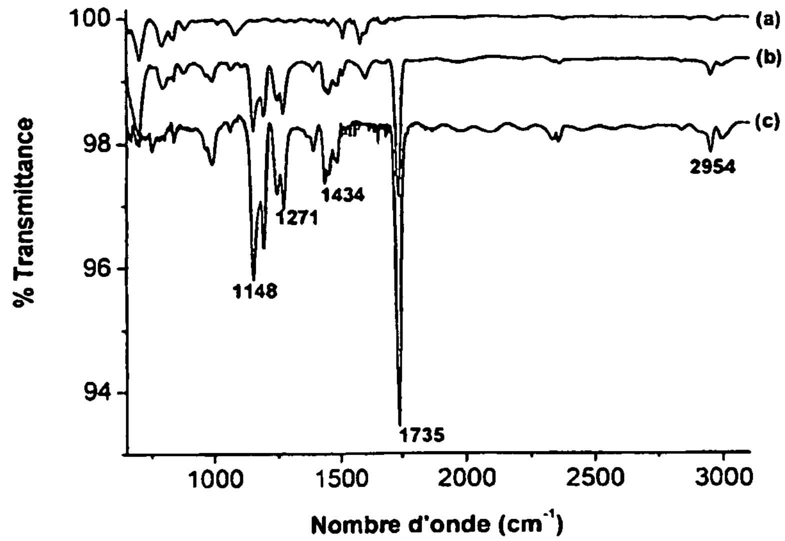


FIGURE 13

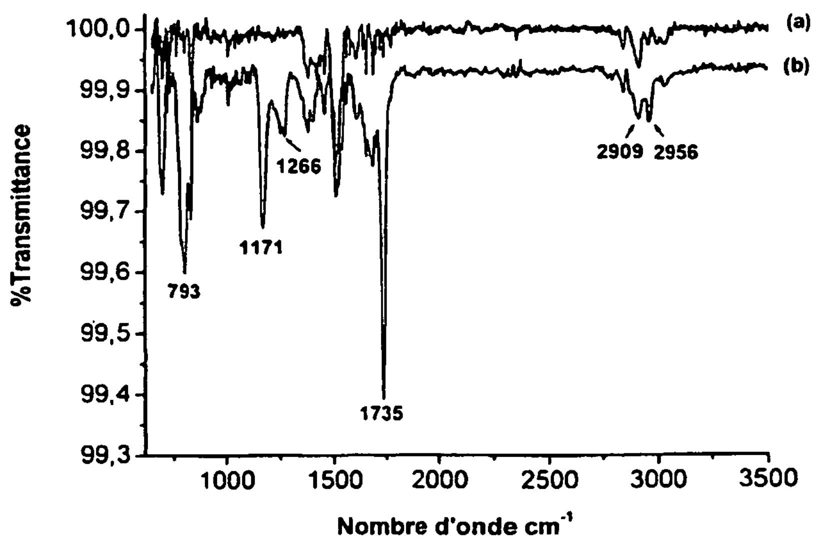


FIGURE 14

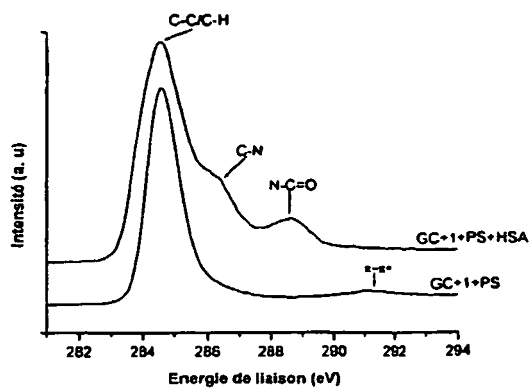


FIGURE 15A

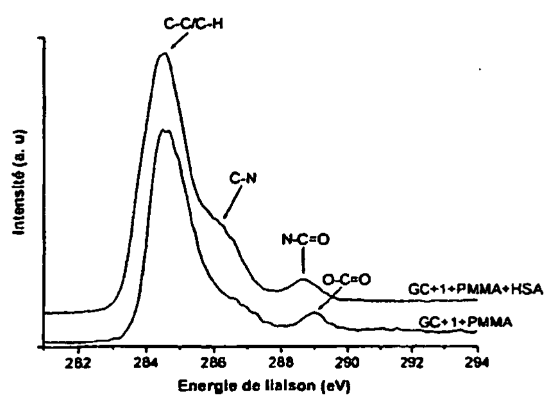


FIGURE 15B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **ADENIER, A. ; CABET-DELIRY, E. ; LALOT, T. ; PINSON, J. ; PODVORICA, F.** *Chem Mat,* 2002, vol. 14, 4576
- **ALLONGUE, P. ; DELAMAR, M. ; DESBAT, B. ; FAGEBAUME, O. ; HITMI, R. ; PINSON, J. ; SAVÉANT, J.-M.** *J. Am. Chem. Soc.,* 1997, vol. 119, 201
- **ANARIBA, F.A. ; DUVALL, S.N. ; MCCREERY, R.L.** *Anal. Chem.,* 2003, vol. 75, 3837-3844
- **BAUM, M. ; BRITTAIN, J.W.** *Macromolecules,* 2002, vol. 35, 610
- **BAUTE, N. ; MARTINOT, L. ; JÉRÔME, R.** *J. Electroanal. Chem.,* 1999, vol. 472, 83
- **BECK, F. ; MICHAELIS, R. ; SCHOLTEN, F. ; ZINGER, B.** *Electrochim. Acta,* 1994, vol. 39, 229
- **BERNARD, M.C. ; CHAUSSÉ, A. ; CABET-DELIRY, E. ; CHEHIMI, M. ; PINSON, J. ; PODVORICA, F. ; VAUTRIN-UI, C.** *Chem. Mat.,* 2003, vol. 15, 3450
- **BIETHAN, U. et al.** Paints and Coatings in Ullmann's Encyclopedia of Industrial Chemistry. VCH, 1991, vol. A18, 359
- **BOENIG, H.V.** Plasma Chemical Vapor of Organic Thin Films in Advances in Low-Temperature Plasma Chemistry, Technology, Applications. Technomic Publishing Company, 1984, 183
- **BUREAU, C. ; DEFRANSCHESCHI, M. ; DELHALLE, J. ; DENIAU, G. ; TANGUY, J. ; LÉCAYON, G.** *Surface Science,* 1994, vol. 311, 349
- **BUREAU, C. ; DENIAU, G. ; VIEL, P. ; LÉCAYON, G.** *Macromolecules,* 1997, vol. 30, 333
- **CALBERG, C. ; KROONEN, D. ; MERTYENS, M. ; JÉRÔME, R. ; MARTINOT, L.** *Polymer,* 1998, vol. 39, 23
- **CALBERG, C. ; MERTENS, M. ; JÉRÔME R. ; ARYS, X. ; JONAS, A.M. ; LEGRAS, R.** *Thin Film Solids,* 1997, vol. 310, 148
- **CHARLIER, J. ; BUREAU, C. ; LÉCAYON, G.** *J. Electroanal. Chem.,* 1999, vol. 465, 200
- **CHEUNG, K.M. ; BLOOR, D. ; STEVENS, G.C.** *Polymer,* 1988, vol. 29, 1709
- **CLAES, M. ; VOCCIA, S. ; DETREMBLEUR, C. ; JÉRÔME, C. ; GILBERT, B. ; LECLÈRE, PH. ; GESKIN, V. M. ; GOUTTEBARON, R. ; HECQ, M. ; LAZZARONI, R.** *Macromolecules,* 2003, vol. 36, 5926
- **AGOSTINO, R.** Plasma Processing of Polymers. Academic Press, 1997
- **DENIAU, G. ; LÉCAYON, G. ; VIEL, P. ; HENNICO, G. ; DELHALLE, J.** *Langmuir,* 1992, vol. 8, 267
- **DENIAU, G. ; LECAYON, G. ; BUREAU, C. ; TANGUY J.** Protective Coatings and Thin Films. Kluwer Academic, 1997, 265-278
- **DENIAU, G. ; THOME, T. ; GAUDIN, D. ; BUREAU, C. ; LÉCAYON, G.** *J. Electroanal.Chem.,* 1998, vol. 451, 145
- **DETREMBLEUR, C. ; JÉRÔME, C. ; CLAES, M. ; LOUETTE P. ; JÉRÔME, R.** *Angew. Chem. Int. Ed.,* 2001, vol. 40 (7), 1268
- **DONEUX, C. ; CAUDANO, R. ; DELHALLE, J. ; LEONARD-STIBBE, E. ; CHARLIER, J. ; BUREAU, C. ; TANGUY, G. ; LÉCAYON, G.** *Langmuir,* 1997, vol. 13, 4898
- **EDMONDSON, S. ; OSBORNE, V.L. ; HUCK, W.T.S.** *Chem. Soc. Rev.,* 2004, vol. 33, 14
- **FAHYS, B. ; HERLEM, G. ; LAKARD, B. ; REYBER, K. ; TROKOUREY, A. ; DIACO, T. ; ZAIRI, S. ; JAFFRZIC-RENAULT, N.** *Electrochimica Acta,* 2002, vol. 47, 2597
- **FERREIRA, C.A. ; AEIYACH, S. ; AARON, J.J. ; LACAZE, P.C.** *Electrochim. Acta,* 1996, vol. 41, 1801
- **FERREIRA, C.A. ; AEIYACH, S. ; DELAMAR, M. ; LACAZE, P.C.** *J. Electroanal. Chem.,* 1990, vol. 284, 351
- **FRAOUA, K. ; AEIYACH, S. ; AUBARD, J. ; DELAMAR, M. ; LACAZE, P.C. ; FERREIRA, C.A.** *J. Adh. Sci. Tech.,* 1999, vol. 13, 517
- **HERLEM, G. ; GOUX, C. ; FAHYS, B. ; DOMINATI, F. ; GONÇALVES, A.-M. ; MATHIEU, C. ; SUTTER, E. ; TROKOUREY, A. ; PENNEAU, J.F.** *J. Electroanal. Chem.,* 1997, vol. 435, 259
- **HERLEM, G. ; LAKARD, B. ; FAHYS, B.** *Theochem,* 2003, vol. 638, 177
- **HERLEM, G. ; REYBIER, K. ; TROKOUREY, A. ; FAHYS, B.** *J. Electrochem. Soc.,* 2000, vol. 147, 597
- **HOCHBERG, S.** Industrial Coatings in Kirk-Otmer Encyclopedia of Chemical Technology. J. Wiley, 1979, 427
- **HUSSEMAN, M. ; MECCERREYES, D. ; HAWKER, C.J. ; HEDRICK, J.L. ; SHAH, R. ; ABBOT, N.L.** *Angew. Chem. Int Ed.,* 1999, vol. 38, 647

- **JÉROME, C. ; GESKIN, V. ; LAZZARONI, R. ; BREDAS, J.L. ; THIBAULT, A. ; CALBERG, C. ; BODART, I. ; MERTENS, M. ; MARTINOT, L. ; RODRIGUE, D.** *Chem. Mat.,* 2001, vol. 13, 1656
- **GRGUR, B.N. ; JOVANOVIÉ, S.M. ; VOJNOVIÉ, M.V.** *Electrochim. Acta,* 1997, vol. 42, 1685
- **LAKARD, B. ; HERLEM, G. ; FAHYS, B.** *Theochem,* 2002, vol. 593, 133
- **LÉCAYON, G. ; BOUIZEM, Y. ; LE GRESSUS, C. ; REYNAUD, C. ; BOIZIAU, C. ; JURET, C.** *Chem Phys. Letters,* 1982, vol. 91, 506-510
- **LOU, X. ; JÉRÔME, C. ; DETREMBLEUR, C. ; JÉRÔME, R.** *Langmuir,* 2002, vol. 18, 2785
- Corrosion Inhibition of Metals by Conductive Polymers. **LU, W.K. ; BASAK, S. ; ELSENBAUMER, R.L.** Handbook of Conductive Polymers. Marcel Dekker, 1988, 881
- **LUND, H. ; HAMMERICH, O.** Organic Electrochemistry. Marcel Dekker, 2001
- **MCCARLEY, R.L.** *J. Electrochem.Soc.,* 1990, vol. 137, 218C
- **MERTENS, M. ; CALBERG, C. ; BAUTE, N. ; JÉRÔME, R. ; MARTINOT, L.** *J. Electroanal. Chem.,* 1998, vol. 441, 237
- **OTERO, T.F. ; ANGULO, R.** *J. Appl. Electrochem.,* 1992, vol. 22, 369
- **PLANKAERT, R.** Surface Coating in Ullmann's Encyclopedia of Industrial Chemistry. VCH, 1994, vol. A25, 170
- **SCHIRMEISEN, M. ; BECK, F.** *J. Appl. Electrochem.,* 1989, vol. 19, 401
- **SU, W. ; IROH, J.O.** *Electrochim. Acta,* 1997, vol. 42, 2685
- **TANGUY, J. ; DENIAU, G. ; AUGE, C. ; ZALCZER, G. ; LÉCAYON, G.** *J. Electroanal. Chem.,* 1994, vol. 377, 115
- **TANGUY, J. ; DENIAU, G. ; ZALCZER, G. ; LÉCAYON, G.** *J. Electroanal. Chem.,* 1996, vol. 417, 175
- **TANGUY, J. ; VIEL, P. ; DENIAU, G. ; LÉCAYON, G.** *Electrochim. Acta,* 1993, vol. 38, 175
- **TROCH-NAGELS, WINAND, R. ; WEYMEERSCH, A. ; RENARD, L.** *J. Appl. Electrochem.,* 1992, vol. 22, 756
- **VAUTRIN-UL, C. ; BOISSE-LAPORTE, C. ; BENISSAD, N. ; CHAUSSÉ, A. ; LEPRINCE, P. ; MESSINA, R.** *Prog. Org. Coating,* 2000, vol. 38, 9
- **VIEL, P. ; BUREAU, C. ; DENIAU, G. ; ZALCZER, G. ; LÉCAYON, G.** *J. Electroanal. Chem.,* 1999, vol. 470, 14
- **VIEL, P. ; DE CAYEUX, S. ; LÉCAYON, G.** *Surf. Interface Anal.,* 1993, vol. 20, 468
- **VOCCIA, S. ; JÉRÔME, C. ; DETREMBLEUR, C. ; LECLÈRE, P. ; GOUTTEBARON, R. ; HECQ, M. ; GILBERT, B. ; LAZZARONI, R. ; JÉRÔME, R.** *Chem. Mater.,* 2003, vol. 15, 923-927